# EUROPEAN PATENT APPLICATION

(11) **EP 3 861 906 A1**
(43) Date of publication of application: **11.08.2021**
(21) Application number: 19868646.1
(22) Date of filing: 20.09.2019
(51) Int. Cl.: A47J 44/00, A47B 9/00, A47B 37/00, A47B 77/08, A47J 43/04, A47L 15/00, A47L 15/48, B25J 13/00, B08B 3/02

(54) **FOOD PREPARATION SYSTEM**

(30) Priority: 05.10.2018 JP 2018189918
(71) Applicant: Sony Group Corporation, Tokyo 108-0075 (JP)
(72) Inventor: ISHIZU Yuto, Tokyo 108-0075 (JP); OHNO Shigeki, Tokyo 108-0075 (JP); NASHIDA Tatsushi, Tokyo 108-0075 (JP); OKUMURA Mitsuo, Tokyo 108-0075 (JP); TAKAHASHI Tomoko, Tokyo 108-0075 (JP); SATOH Ayaka, Tokyo 108-0075 (JP); YOSHIKAWA Fumihito, Tokyo 108-0075 (JP)
(74) Representative: D Young & Co LLP
(86) International application number: PCT/JP2019/036946
(87) International publication number: WO 2020/071150

(57) **Abstract**

The present technology relates to a cooking system capable of providing novel cooking experiences. A cooking system according to an aspect of the present technology includes: a top plate unit including a first top plate and a second top plate; a top plate drive unit that moves at least either top plate of the first top plate and the second top plate; a cooking assistance unit provided in a cooking assistance space that appears by movement of the at least either top plate; an arm movement unit that moves a cooking arm including an attaching/detaching portion capable of attaching/detaching an attachment having a cooking function along a movement mechanism provided in the cooking assistance space; and an arm control unit that controls driving of the cooking arm in accordance with a cooking process. The present technology can be applied to a system kitchen having a robotic function.

## Description

### Technical Field

The present technology relates to a cooking system and in particular to a cooking system capable of providing novel cooking experiences.

### Background Art

With the development of artificial intelligence (AI), sensing technologies, and the like, a so-called smart kitchen, in which technologies are applied to cooking in a kitchen, is attracting attention. As the technologies related to the smart kitchen, many technologies have been proposed for achieving simple, convenient, and speedy cooking.

For example, a device that mixes right amounts of seasoning in accordance with a recipe has been proposed.

Moreover, there is a technology for automating cooking by learning chef's hand movements at the time of cooking and imitating the chef's movements with robot arms (Patent Literature 1).

### Citation List

### Patent Literature

Patent Literature 1: Japanese Unexamined Patent Application Publication No. 2017-506169

### Disclosure of Invention

### Technical Problem

It is desirable to provide novel user experiences at the time of cooking in addition to the simplicity, convenience, and speed.

The present technology has been made in view of the above-mentioned circumferences for enabling novel cooking experiences to be provided.

### Solution to Problem

A cooking system according to an aspect of the present technology includes: a top plate unit including a first top plate and a second top plate; a top plate drive unit that moves at least either top plate of the first top plate and the second top plate; a cooking assistance unit provided in a cooking assistance space that appears by movement of the at least either top plate; an arm movement unit that moves a cooking arm including an attaching/detaching portion capable of attaching/detaching an attachment having a cooking function along a movement mechanism provided in the cooking assistance space; and an arm control unit that controls driving of the cooking arm in accordance with a cooking process.

In the aspect of the present technology, the cooking assistance space appears by the movement of the at least either top plate of the first top plate and the second top plate.

### Brief Description of Drawings

[Fig. 1] A perspective view showing a configuration example of the outer appearance of a robotic kitchen according to an embodiment of the present technology.
[Fig. 2] A diagram showing a state of cooking arms performing a task.
[Fig. 3] A diagram showing a first example of a collaborative task.
[Fig. 4] A diagram showing a second example of the collaborative task.
[Fig. 5] A diagram showing a third example of the collaborative task.
[Fig. 6] A diagram showing a state of a room at meal-time.
[Fig. 7] A diagram showing an example of deformation of a transportation robot.
[Fig. 8] A diagram showing the outer appearance of the robotic kitchen on a sleep mode.
[Fig. 9] A diagram showing the outer appearance of the robotic kitchen on the sleep mode.
[Fig. 10] A diagram showing the outer appearance of the robotic kitchen on an active mode.
[Fig. 11] A front view of a cooking assistance system.
[Fig. 12] A diagram showing a state in which the cooking arms appear.
[Fig. 13] A diagram schematically showing the position of a groove portion.
[Fig. 14] A diagram showing an application example of the groove portion.
[Fig. 15] A diagram showing a cross-section of the groove portion.
[Fig. 16] A diagram showing another application example of the groove portion.
[Fig. 17] A diagram showing still another application example of the groove portion.
[Fig. 18] A diagram showing a state in which the cooking arms are activated.
[Fig. 19] A diagram showing a routing example of pipes connected to the cooking arms.
[Fig. 20] A front view showing the routing example of the pipes connected to the cooking arms.
[Fig. 21] A diagram showing a cooking assistance space.
[Fig. 22] A front view showing an example of a space provided in a housing.
[Fig. 23] A diagram showing a state in which the transportation robot moves out.
[Fig. 24] A diagram showing the state in which the transportation robot moves out.
[Fig. 25] A diagram showing the outer appearance of the cooking arm.
[Fig. 26] A diagram showing an example of a range of motion of each portion of the cooking arm.
[Fig. 27] A cross-sectional view showing the vicinity of a rail in an enlarged state.
[Fig. 28] A diagram showing a movement direction of an arm movement unit.
[Fig. 29] A diagram showing a state in which the cooking arm is attached/detached.
[Fig. 30] A diagram showing a function example of the cooking arm.
[Fig. 31] A diagram showing an example of an attaching/detaching mechanism of an attachment.
[Fig. 32] A cross-sectional view of an attaching/detaching portion of the cooking arm and the attachment.
[Fig. 33] A diagram showing a flow of attaching the attachment.
[Fig. 34] A diagram showing a flow of attaching the attachment.
[Fig. 35] A diagram showing examples of attachments.
[Fig. 36] A diagram showing examples of attachments.
[Fig. 37] A diagram showing examples of attachments.
[Fig. 38] A diagram showing examples of attachments.
[Fig. 39] A diagram showing a configuration example of a manipulator attachment.
[Fig. 40] A diagram showing an example of movement of a gripping portion.
[Fig. 41] A diagram showing a state in which a food ingredient is gripped.
[Fig. 42] A diagram showing the state in which the food ingredient is gripped.
[Fig. 43] A diagram showing a cleaner attachment in an enlarged state.
[Fig. 44] A diagram showing another application example of the cleaner attachment.
[Fig. 45] A diagram showing an application example of a cover attachment.
[Fig. 46] A block diagram showing a configuration example of hardware of the robotic kitchen.
[Fig. 47] A block diagram showing a configuration example of hardware of the cooking arm.
[Fig. 48] A block diagram showing a functional configuration example of a controller.
[Fig. 49] A diagram showing an example of recipe data.
[Fig. 50] A diagram showing an acquisition example of the recipe data.
[Fig. 51] A diagram showing an example of the description of the recipe data.
[Fig. 52] A diagram showing a specific example of the description of the recipe data.
[Fig. 53] A diagram showing examples of conditions under which the description contents of the recipe data are determined.
[Fig. 54] A diagram showing an example of processing the recipe data.
[Fig. 55] A diagram showing another example of processing the recipe data.
[Fig. 56] A flowchart describing recipe data acquisition processing of the robotic kitchen.
[Fig. 57] A flowchart describing cooking processing of the robotic kitchen.
[Fig. 58] A flowchart describing transportation processing performed in Step S18 of Fig. 57.
[Fig. 59] A diagram showing the outer appearance of the transportation robot in an enlarged state.
[Fig. 60] A perspective view showing a configuration of a coupling portion of a base portion and a support arm.
[Fig. 61] A perspective view showing a configuration of a coupling portion of a top plate and the support arm.
[Fig. 62] A diagram showing an example of the attitude of the transportation robot.
[Fig. 63] A diagram showing another example of the attitude of the transportation robot.
[Fig. 64] A diagram showing an example of movement of the transportation robot.
[Fig. 65] A block diagram showing a configuration example of hardware of the transportation robot.
[Fig. 66] A diagram showing an example of temperature adjustment of the top plate.
[Fig. 67] A block diagram showing a functional configuration example of the controller.
[Fig. 68] A flowchart describing processing of the transportation robot.
[Fig. 69] A front view showing another example of the outer appearance of the robotic kitchen.
[Fig. 70] A side view showing the other example of the outer appearance of the robotic kitchen.
[Fig. 71] A top view of the robotic kitchen.
[Fig. 72] A diagram showing an example of movement of the top plate.
[Fig. 73] A diagram showing a state of the cooking arms during operation.
[Fig. 74] A diagram showing the position of the cooking space.
[Fig. 75] A diagram showing an arrangement example of cooking assistance units.
[Fig. 76] A perspective view showing an example of the inner circumferential side surface of the housing.
[Fig. 77] A diagram showing an arrangement example of the groove portion.
[Fig. 78] A diagram showing a cross-section of the housing.
[Fig. 79] A diagram showing a state in which waste is treated.
[Fig. 80] A top view showing an example of the movement of the top plate.
[Fig. 81] A top view showing another example of the movement of the top plate.
[Fig. 82] A diagram showing an example of a movement direction of the top plate.
[Fig. 83] A diagram showing another configuration example of the robotic kitchen.
[Fig. 84] A diagram showing the other configuration example of the robotic kitchen.
[Fig. 85] A diagram schematically showing an arrangement example of the cooking assistance units.
[Fig. 86] A diagram showing an example of movement of the cooking assistance unit.
[Fig. 87] A diagram showing a state at the time of washing the robotic kitchen.
[Fig. 88] A diagram showing another configuration example of the robotic kitchen.
[Fig. 89] A diagram showing the other configuration example of the robotic kitchen.
[Fig. 90] A diagram showing a state at the time of washing the robotic kitchen.
[Fig. 91] A diagram showing a configuration example of a control system.
[Fig. 92] A diagram showing other examples of the attachments.
[Fig. 93] A diagram showing other examples of the attachments.
[Fig. 94] A diagram showing other examples of the attachments.
[Fig. 95] A diagram showing other examples of the attachments.
[Fig. 96] A diagram showing other examples of the attachments.
[Fig. 97] A block diagram showing a configuration example of hardware of a computer.

### Mode(s) for Carrying Out the Invention

Hereinafter, an embodiment for carrying out the present technology will be described. The descriptions will be given in the following order.
1. General Configuration and Functions of Robotic Kitchen
2. Details of Configuration of Robotic Kitchen
3. Operation of Robotic Kitchen
4. Other Functions
5. Details of Transportation Robot
6. Another Configuration Example of Robotic Kitchen
7. Other Examples
8. Conclusion

### <<1. General Configuration and Functions of Robotic Kitchen>>

### <Outer Appearance Configuration>

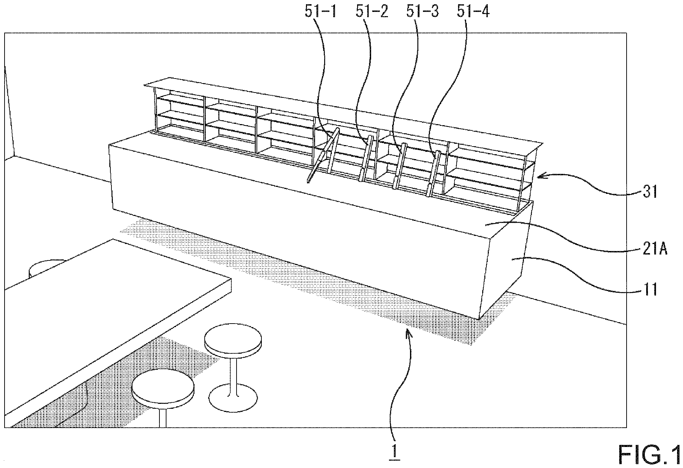

Fig. 1 is a perspective view showing a configuration example of the outer appearance of a robotic kitchen 1 according to an embodiment of the present technology.

The robotic kitchen 1 is a cooking system including a computer that controls general operations using artificial intelligence (AI) and the like, a device of a drive system such as a cooking arm, and various sensors and having robotic functions to autonomously perform cooking. The robotic kitchen 1 is installed in a house, for example.

As shown in Fig. 1, the robotic kitchen 1 includes a housing 11 in a horizontally long rectangular parallelepiped shape. Various devices such as a computer are provided inside the housing 11 as the main body of the robotic kitchen 1.

On the rear side of the housing 11, a cooking assistance system 31 is provided, erected from the upper surface of the housing 11. The cooking assistance system 31 is configured such that various cooking assistance units such as a refrigerator, a microwave oven, and storage are arranged. The details of respective units such as the cooking assistance unit will be described later.

A groove is formed in a longitudinal direction in substantially the center of the housing 11. A rail is provided along the groove and cooking arms 51-1 to 51-4 are provided in the rail. The cooking arms 51-1 to 51-4 can be repositioned along the rail serving as a movement mechanism.

The cooking arms 51-1 to 51-4 are robotic arms configured by connecting cylindrical members at joint portions. Various tasks such as cooking and cleaning are performed by the cooking arms 51-1 to 51-4.

A space above a top plate 21A on the front side of the housing 11 is a cooking space in which the cooking arms 51-1 to 51-4 perform cooking. The cooking space is a generic term for a space in which the cooking arms 51-1 to 51-4 or a user performs cooking. The cooking space includes not only a space completely identical to the space in which the cooking arms 51-1 to 51-4 or the user performs cooking, but also a partial space included in such a space.

Although the four cooking arms are shown in Fig. 1, the number of cooking arms is not limited to four. Hereinafter, when it is unnecessary to distinguish each of the cooking arms 51-1 to 51-4, they will be collectively referred to as the cooking arms 51 as necessary.

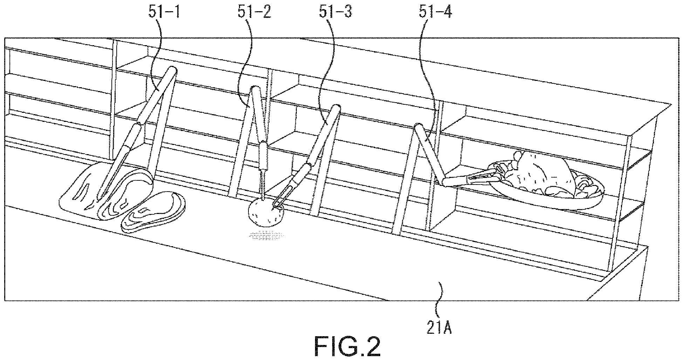

Fig. 2 is a diagram showing a state of the cooking arms 51 performing a task.

As shown in Fig. 2, attachments having various cooking functions are attached to distal ends of the cooking arms 51. As the attachments, an attachment having a manipulator function (hand function) of gripping food ingredients and tableware, an attachment having a knife function of cutting food ingredients, an attachment having a mixer function of mixing liquid such as seasoning, and the like are prepared.

In the example of Fig. 2, a knife attachment which is an attachment having a knife function is attached to the cooking arm 51-1. A mass of meat placed on the top plate 21A is cut by using the knife attachment.

A spindle attachment which is an attachment to be used for fixing or rotating a food ingredient is attached to the cooking arm 51-2.

A peeler attachment which is an attachment having a peeler function of peeling a food ingredient is attached to the cooking arm 51-3.

A potato lifted by the cooking arm 51-2 using the spindle attachment is peeled off by the cooking arm 51-3 using the peeler attachment. In this manner, it is also possible for the plurality of cooking arms 51 to perform one task in cooperation with each other.

The manipulator attachment which is the attachment having the manipulator function is attached to the cooking arm 51-4. A frying pan in which chicken is put is transported to the cooking assistance unit having an oven function by using the manipulator attachment.

The cooking with such cooking arms 51 is performed by replacing the attachments as appropriate in accordance with the contents of tasks. The attachments are also automatically replaced by the robotic kitchen 1.

### <Collaboration Task with Person>

In the cooking in the robotic kitchen 1 performed by using the cooking arms 51, some tasks are performed in collaboration with the user. In a case where the robotic kitchen 1 is installed in a house, the cooking is performed in collaboration with a family member or the like.

Which task is performed by the user is defined in recipe data prepared for each dish, for example. As will be described later, the recipe data also describes information indicating the operation of each cooking arm 51 in each task. The robotic kitchen 1 controls the operation of the respective units such as the cooking arm 51 and performs cooking in accordance with the description of the recipe data.

It is possible for the user to select a degree of involvement in cooking by himself or herself such that all the tasks are performed by the robotic kitchen 1 or more tasks are performed by the user himself or herself. The description of the recipe data is processed in accordance with the degree of involvement selected by the user.

For example, in a case of making a dish with a high degree of difficulty, the user can leave cooking that the user cannot do up to the robotic kitchen 1 by setting the degree of involvement to be lower.

Moreover, a user who likes cooking can enjoy many tasks by setting the degree of involvement to be higher.

It should be noted that the dish means a thing made up after cooking. The cooking means a process of making a dish or an act of making a dish.

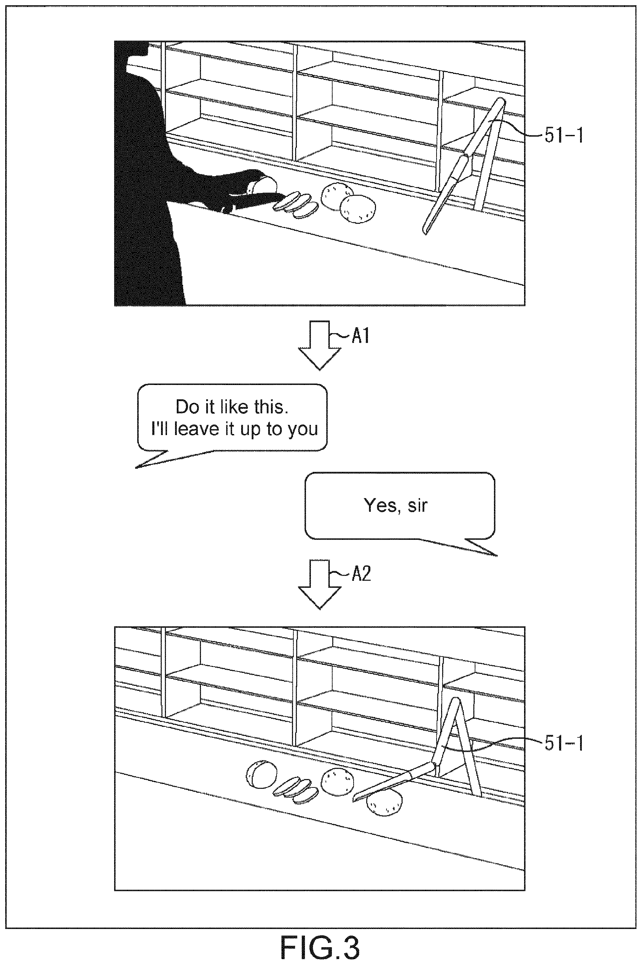

Fig. 3 is a diagram showing a first example of the collaborative task.

In the upper part of Fig. 3, a state in which the user is cutting a potato with a knife is shown. Uncut potatoes are prepared near the potato that the user is cutting. The cooking arm 51-1 to which the knife attachment is attached stands by near the user.

The knife used by the user and the food ingredients such as the potatoes are prepared by the cooking arms 51.

For example, when the user says "Do it like this. I will leave it up to you" as indicated by the arrow A1 after the user finishes cutting the potato, the robotic kitchen 1 determines to perform the continuation of the cutting using the uncut potatoes as targets. The robotic kitchen 1 outputs a synthesized voice saying "Yes, sir".

That is, the robotic kitchen 1 also has a function of learning the user's action, a function of recognizing what the user said and replying it, and the like. A camera for taking an image of the user's action, a microphone for detecting the voice, and a speaker for outputting the synthesized voice are provided at predetermined positions in the robotic kitchen 1.

In a case where it is determined to perform the continuation of the cutting, the cooking arm 51-1 takes over the cutting using the remaining potatoes as the targets as indicated by the arrow A2. The direction of the cutting, the width of the cutting, and the like are based on the manner of the user obtained by learning.

It can be said that a simple task such as cutting lots of the same kinds of food ingredients among the cooking tasks is a task that the user wishes to omit as much as possible. Since the robotic kitchen 1 learns the user's action and takes the same action as the user's action, the user does not need to perform such a simple task.

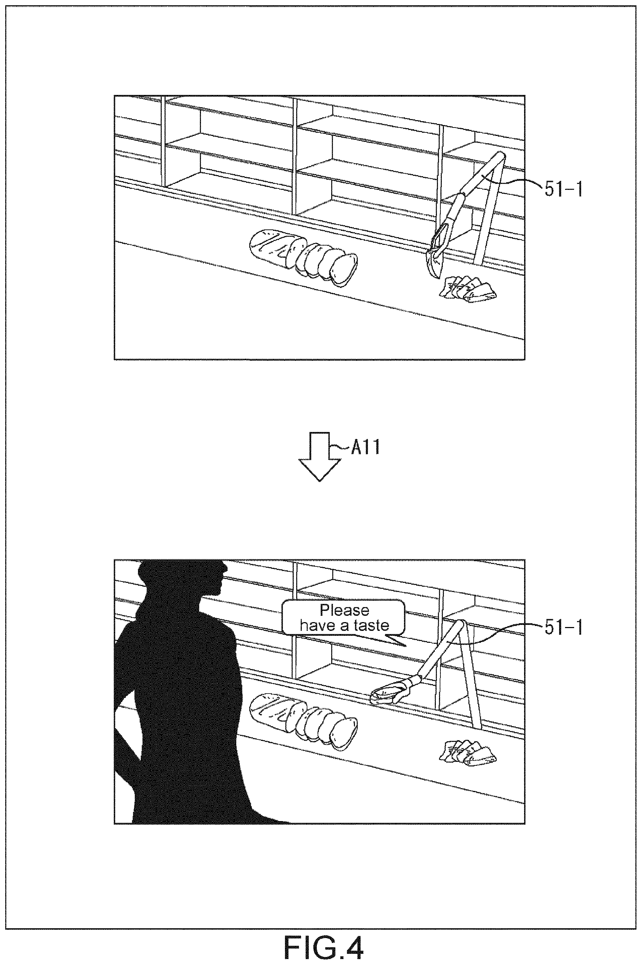

Fig. 4 is a diagram showing a second example of the collaborative task.

In the upper part of Fig. 4, a state in which sliced baguette and smoked salmon are placed on the top plate 21A is shown. The preparation of the food ingredient, the slicing of the food ingredient, and the smoking of the salmon are performed by the cooking arms 51.

The manipulator attachment is attached to the cooking arm 51-1. A piece of smoked salmon is lifted by the cooking arm 51-1 and transported toward the baguette. In this example, the baguette on which the smoked salmon is put is cooked.

When the smoked salmon is put on the baguette, the baguette that is a completed dish is delivered to the user by the cooking arm 51-1 as indicated by the arrow A11. Moreover, a synthesized voice saying "Please have a taste" is output and the user is requested to have a taste.

The user receives and tastes the delivered baguette. In a case where the user who tasted it says a positive thing, for example, "Good", a task of placing the smoked salmon on the baguette is thereafter performed.

The tasting is an important task among cooking tasks and is also a pleasant task for the user. The user can perform the pleasant task by himself or herself.

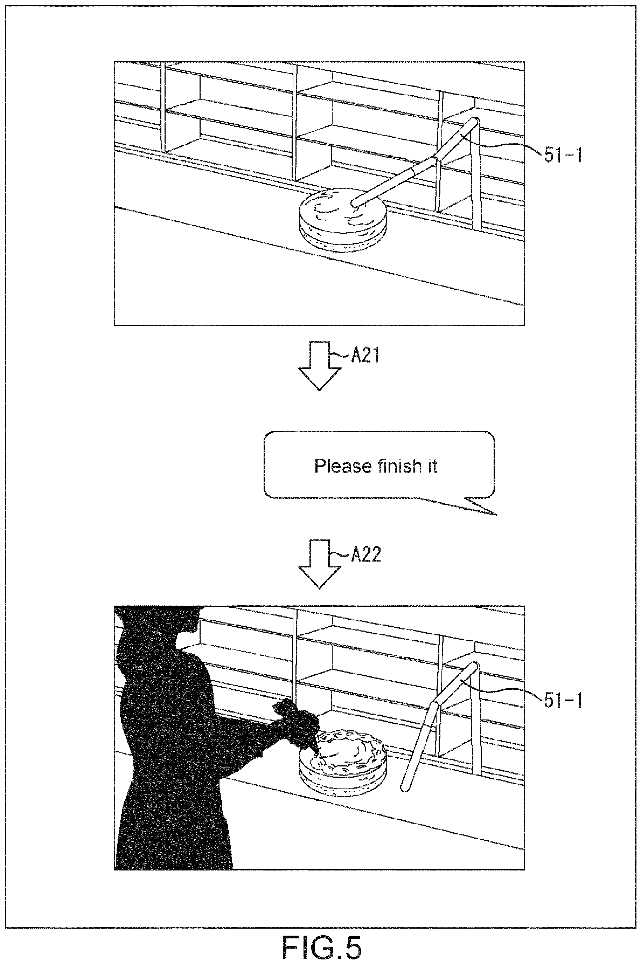

Fig. 5 is a diagram showing a third example of the collaborative task.

In the upper part of Fig. 5, a state in which a coating task of coating a sponge with cream is performed by the cooking arm 51-1 is shown. A spatula attachment having a spatula function is attached to the cooking arm 51-1. The sponge and the cream are prepared by the cooking arms 51.

When the coating task is completed, a synthesized voice saying "Please finish it" as indicated by the arrow A21 is output from the robotic kitchen 1 and the user is requested to perform a finishing task.

As indicated by the arrow A22, the user performs a task of decorating with the cream as the finishing task in response to the request from the robotic kitchen 1.

The finishing task such as decoration with cream in making a cake and food presentation is performed by the user with creativity, and can be a pleasant task. The user can perform such a pleasant task by himself or herself.

In this way, the cooking by the robotic kitchen 1 is performed in collaboration with the user as appropriate. Since the tasks are shared such that the robotic kitchen 1 performs simple tasks such as preparation, the user can perform only the pleasant task by himself or herself and leave the troublesome task up to the robotic kitchen 1.

The user can obtain novel cooking experiences such as cooking in collaboration with the robotic kitchen 1.

Moreover, the user can also enjoy seeing the cooking arms 51 performing the tasks on the top plate 21A. If the cooking is performed inside the housing 11 and the completed dish comes out, such a kitchen can be regarded as a simple apparatus for manufacturing a dish, and it is convenient but lacking in interest.

Since various attachments different from tools used by a person for cooking are used for performing the cooking such that the user can see the cooking, the robotic kitchen 1 can produce a space such as a room by the cooking task itself.

Since the space can be produced by the cooking task and the user can be involved in tasks that the user can enjoy, it can be said that the robotic kitchen 1 is an entertainment kitchen.

### <Transportation Robot>

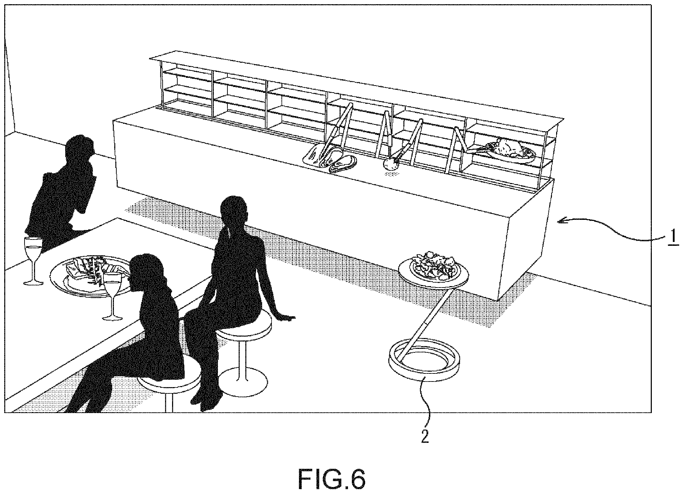

Fig. 6 is a diagram showing a state of a room at meal-time.

The transportation of the dish made by the robotic kitchen 1 is performed by a transportation robot 2 which is a movable object for transportation. When the dish is completed, the robotic kitchen 1 places the completed dish on the top plate of the transportation robot 2 and transports it to the position of the person to whom the dish is to be delivered as shown in Fig. 6.

In the example of Fig. 6, three people are sitting in a chair around a dining table placed in front of the robotic kitchen 1. When the transportation robot 2 comes close, any person of the three people receives the dish placed on the top plate and places it on the dining table.

Control of the transportation robot 2, which is related to setting of a destination, setting of a movement route to the destination, and the like is also performed by the robotic kitchen 1. For example, the position of the person to whom the dish is to be delivered is set as the destination.

The transportation robot 2 also performs transportation of cutlery, transportation of tableware, and the like in addition to the transportation of the completed dish. Moreover, the transportation robot 2 also performs transportation for receiving the used tableware from the user and returning it to the robotic kitchen 1 and the like. The completed dish, tableware, cutlery, a glass, and the like are objects to be transported, which are transported by the transportation robot 2.

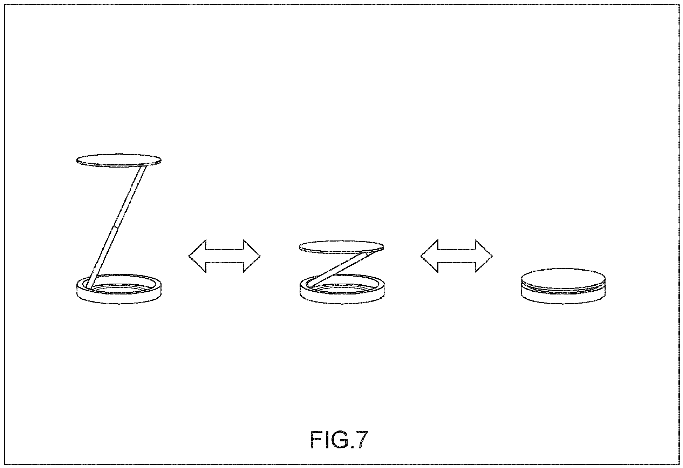

Fig. 7 is a diagram showing an example of deformation of the transportation robot 2.

As shown in Fig. 7, the transportation robot 2 is configured by coupling an annular base portion and a circular top plate with a thin rod-like support arm. The length and angle of the support arm can be adjusted as appropriate. The state shown at the left end of Fig. 7 is a normal state in which the support arm is extended to the maximum.

The state shown in the center of Fig. 7 is a state in which the support arm is contracted to substantially the half length of the maximum length and tilted downward as compared to the state at the left end.

The state shown at the right end of Fig. 7 is a state in which the support arm is folded. When the support arm is folded, the top plate is superimposed on the base portion. On a standby mode, the transportation robot 2 is housed inside the housing 11 of the robotic kitchen 1 in the state at the right end in which the transportation robot 2 is thinned to a flat cylindrical shape.

Since the transportation of the dish is performed by the transportation robot 2 as described above, the user does not need to transport the dish made by the robotic kitchen 1 to the dining table. The details of the configuration and functions of the transportation robot 2 will also be described later.

### <<2. Details of Configuration of Robotic Kitchen>>

### <Deformation of Robotic Kitchen>

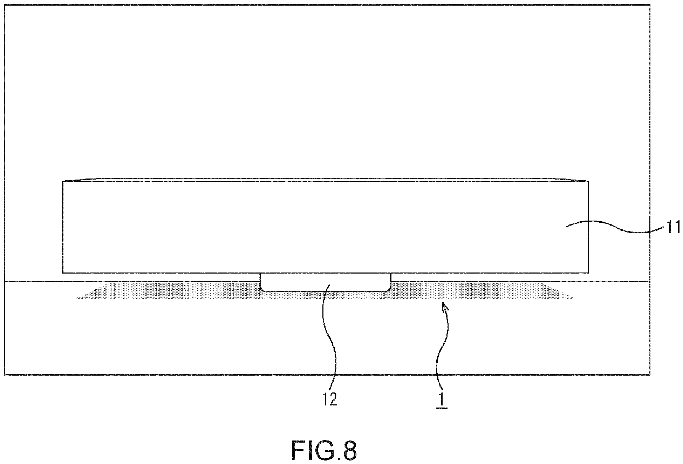

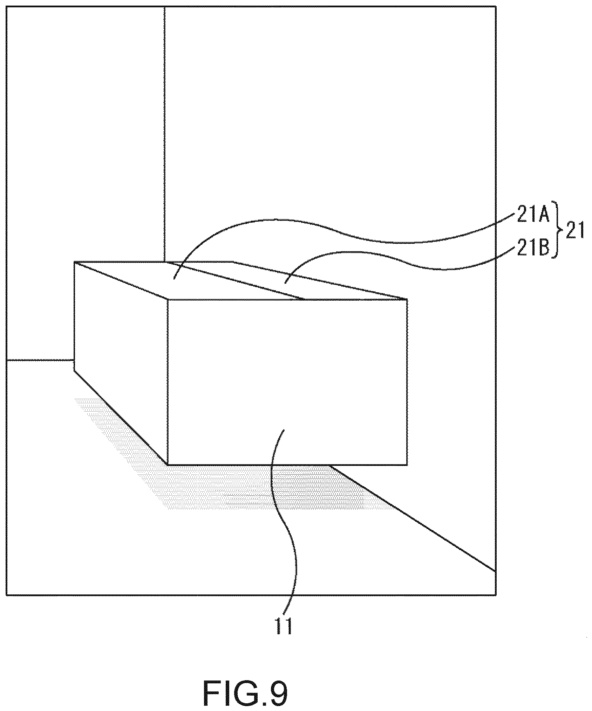

Figs. 8 and 9 are diagrams showing the outer appearance of the robotic kitchen 1 on a sleep mode.

Fig. 8 shows a state in which the robotic kitchen 1 on the sleep mode is viewed from the front and Fig. 9 shows a state in which the robotic kitchen 1 on the sleep mode is viewed from the right front. As shown in Fig. 8, the housing 11 in the horizontally long rectangular parallelepiped shape is provided on a columnar base portion 12 fixed to the floor. A space having a predetermined height is formed between the bottom surface of the housing 11 and the floor.

On the sleep mode, the cooking assistance system 31 is housed in the housing 11. The cooking assistance system 31 is provided at a position lower than a top plate unit 21.

As shown in Fig. 9, the top plate 21A and a top plate 21B constituting the top plate unit 21 are provided at the same height with a slight gap therebetween. The top plate 21A and the top plate 21B are provided in contact at the same height, and the upper surface of the housing 11 is thus a substantially flat surface.

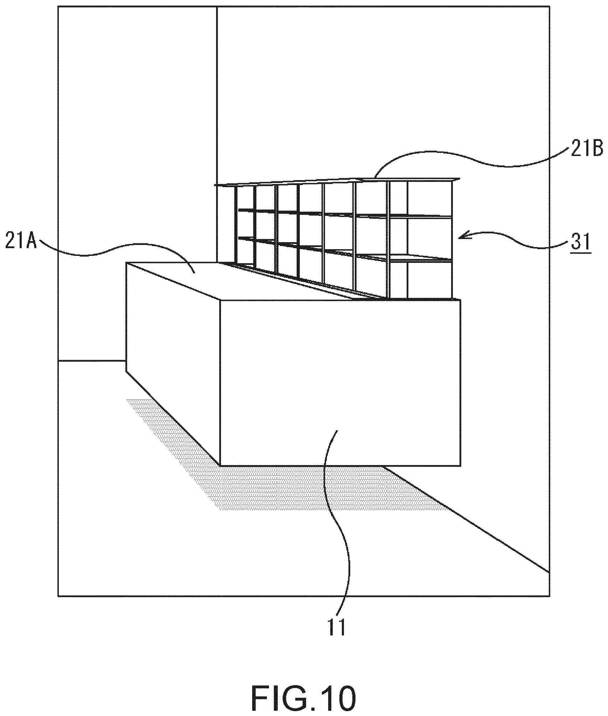

Fig. 10 is a diagram showing the outer appearance of the robotic kitchen 1 on an active mode.

When the operation mode of the robotic kitchen 1 switches from the sleep mode to the active mode, the cooking assistance system 31 ascends and the cooking assistance system 31 is erected on the rear side of the housing 11 as shown in Fig. 10. As the top plate 21B ascends, the cooking assistance system 31 provided on the side of the bottom surface of the top plate 21B appears.

The switching from the sleep mode to the active mode is performed at a predetermined timing such as a timing at which a preset cooking start time comes and a timing at which it is detected that a person who performs a collaborative task is present near the robotic kitchen 1. Such deformation of the robotic kitchen 1 is performed by electric power.

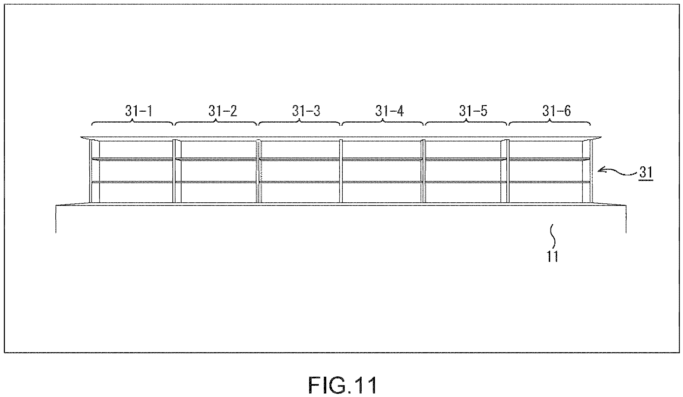

Fig. 11 is a front view of the cooking assistance system 31.

The front, rear, left, and right side surfaces surrounding the box-shaped cooking assistance system 31 are constructed by a transparent member such as a thermally insulative reinforced glass. The interior of the cooking assistance system 31 can be thus seen.

The cooking assistance system 31 includes cooking assistance units 31-1 to 31-6. The cooking assistance units 31-1 to 31-6 are devices having functions of assisting the cooking of the robotic kitchen 1.

The respective cooking assistance units are partitioned by thin plate-like members. Partitioned by two thin plate-like shelf boards, a space having vertically three stages is formed inside of each cooking assistance unit. For example, the front member slides open to allow access to each stage of each cooking assistance unit.

The cooking assistance unit 31-1 is a device having a freezing function. In the cooking assistance unit 31-1, meat, fish, and the like are stored in a frozen state.

The cooking assistance unit 31-2 is a device having a refrigeration function. In the cooking assistance unit 31-2, fruit, beverages, and the like are stored in a cooled state.

The cooking assistance unit 31-3 is a device having a function of maintaining a low temperature state. Vegetables and the like are stored in the cooking assistance unit 31-3 in a low temperature state. For example, in the lower stage of the cooking assistance unit 31-3, the attachments to be attached to the cooking arms 51 are housed. Since the attachments are housed in a low temperature state, the propagation of germs can be suppressed.

The cooking assistance unit 31-4 functions as room temperature storage. The cooking assistance unit 31-4 stores bread, pasta, seasoning, and the like. The cooking assistance unit 31-4 also stores tableware, cutlery, and the like.

The cooking assistance unit 31-5 is a device having a heat insulating function. The cooking assistance unit 31-5 stores soups, foods being thawed, foods being low-temperature cooked, and the like.

The cooking assistance unit 31-6 is a device having an oven function. The cooking assistance unit 31-6 is used for performing cooking with heat such as baking bread and grilling meat.

The cooking assistance units 31-1 to 31-6 are arranged such that the unit having a function of storing foods and the like at a lower temperature is located on the left side and the unit having a function of storing foods and the like at a higher temperature is located on the right side.

A device for adjusting the temperature in each cooking assistance unit is provided at a predetermined position such as under each cooking assistance unit. The temperature in each unit is adjusted by sending cold air or hot air discharged by a temperature adjustment device.

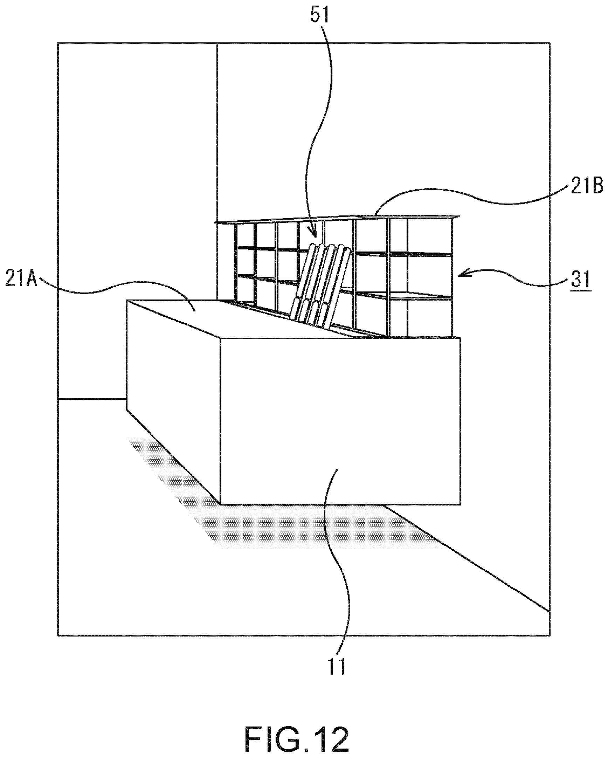

When the operation mode of the robotic kitchen 1 switches from the sleep mode to the active mode and the cooking assistance system 31 appears, the cooking arms 51 appear on the front side of the cooking assistance system 31 as shown in Fig. 12 following the cooking assistance system 31.

The cooking arms 51 are those housed in a groove portion which appears as the top plate 21B ascends. The width in a depth direction of the cooking assistance system 31 is, as shown in Fig. 12, smaller than the width in a depth direction of the top plate 21B. The groove portion closed by the top plate 21B on the sleep mode appears as the top plate 21B ascends and the cooking arms 51 are activated from the groove portion.

### <Configuration of Groove Portion>

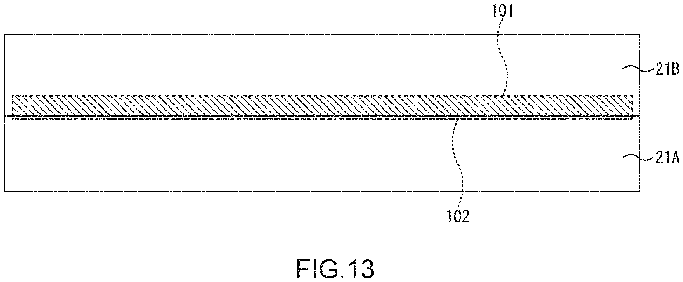

Fig. 13 is a diagram schematically showing the position of the groove portion.

As the robotic kitchen 1 is viewed from above, a groove portion 101 is, as shown by hatching, formed in the longitudinal direction of the housing 11 in the vicinity of the boundary between the top plate 21A and the top plate 21B. The length of the groove portion 101 is substantially the same length as the length of the longitudinal direction of the housing 11 except for wall surface portions having a predetermined width on the side of the left side surface and on the side of the right side surface.

In the vicinity of an opening of the groove portion 101, a rail 102 is provided along the side surface of the groove portion 101. In the example of Fig. 13, the rail 102 is provided along the side surface on the front side of the groove portion 101 as shown by coloring. It can be also said that the groove portion 101 is formed along the rail 102. The cooking arm 51 is mounted to be movable along the rail 102.

### - Washing Function

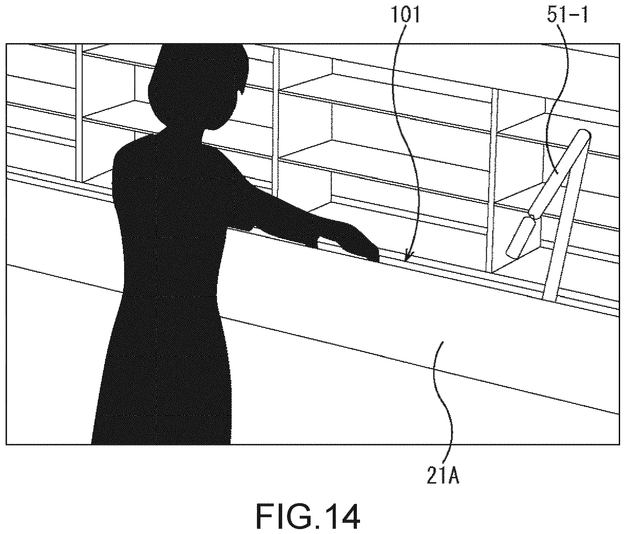

Fig. 14 is a diagram showing an application example of the groove portion 101.

The groove portion 101 is provided with a washing function of washing the hands of a person, which enter the groove portion 101. When the user inserts the hands into the groove portion 101 as shown in Fig. 14, the washing function is activated to wash, dry, and disinfect the hands.

The fact that the user inserts the hands into the groove portion 101 is detected by an infrared sensor or the like. The fact that the user inserts the hands into the groove portion 101 may be detected by analyzing an image taken by a camera.

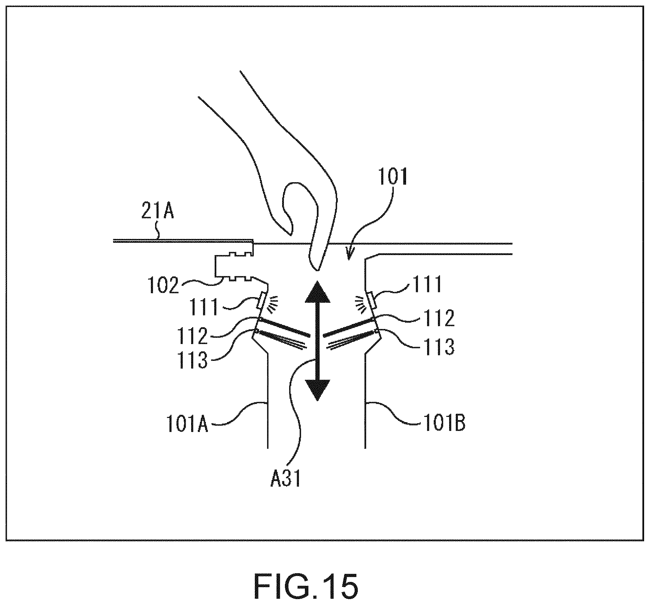

Fig. 15 is a diagram showing a cross-section of the groove portion 101.

In Fig. 15, the vicinity of the opening of the groove portion 101 is shown in an enlarged state. The left side of Fig. 15 corresponds to the front side of the robotic kitchen 1 and the right side of Fig. 15 corresponds to the rear side of the robotic kitchen 1. A side wall portion 101A is formed on the front side of the robotic kitchen 1 and a side wall portion 101B is formed on the rear side.

In the vicinity of the upper ends of the side wall portions 101A and 101B, slant faces oriented slightly obliquely downward are formed. Ultraviolet ray irradiation ports 111 of an ultraviolet disinfection machine, air jet ejection ports 112 of a hand dryer, and water ejection ports 113 are provided on the slant faces.

The user can wash, dry, and disinfect the hands at once by putting the hands in and out of the groove portion 101 as indicated by the arrow A31.

It should be noted that as shown in Fig. 15, the rail 102 is provided at a position in the vicinity of the opening of the groove portion 101, which is the edge of the top plate 21A.

A plurality of sets of the ultraviolet ray irradiation ports 111, the air jet ejection ports 112, the water ejection ports 113 that achieve such a washing function is provided at predetermined intervals in the longitudinal direction of the groove portion 101. The set at the position at which the user has inserted the hands is driven to wash the hands.

The tableware, the cutlery, the attachments to be attached to the cooking arms 51, and the like are also washed by using the washing function of the groove portion 101. Not only washing but also drying and disinfecting the tableware, the cutlery, and the attachments are performed in a manner similar to that of the hands of the person.

For example, washing of the tableware and the cutlery is performed by the cooking arms 51 during a cleaning task. The washing of the tableware and the like is performed by inserting the tableware and the like gripped by the manipulator attachment into the groove portion 101.

Similarly, the washing of the attachments is performed by inserting the distal ends of the cooking arms 51 into the groove portion 101 with the attachments attached to the cooking arms 51.

The washing of food ingredients may be performed in the groove portion 101. The washing time, the movements of the cooking arms 51 at the time of washing, and the like are switched in accordance with a washing target.

The configuration to perform washing in accordance with the movement of the user inserting the hands or the movement of the cooking arm 51 inserting the tableware or the like as described above is provided in the groove portion 101 located at a deep position as viewed from the front of the robotic kitchen 1. Washing the hands and the like in the groove portion 101 makes it possible to suppress scattering of water around.

The function to be activated may be switched in accordance with the washing target, for example, such that the washing, drying, and disinfecting functions are activated in a case where the washing target is the user's hands or the attachments and the washing and drying functions are activated in a case where the washing target is the tableware.

### - Waste Treatment Function

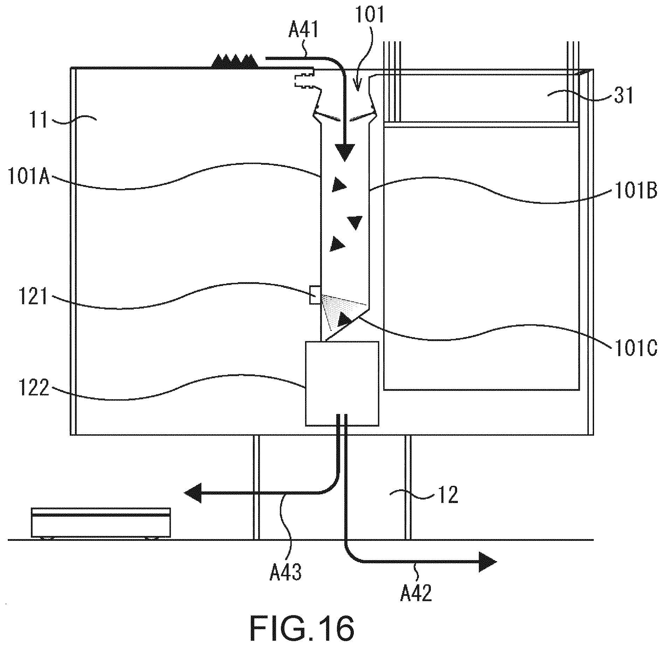

Fig. 16 is a diagram showing another application example of the groove portion 101.

The groove portion 101 is provided with a waste treatment function of treating waste such as trash generated at the time of cooking. For example, the waste scattered on the top plate 21A is swept by the cooking arms 51 and introduced into the groove portion 101. The waste on the top plate 21A is detected by analyzing an image taken by a camera. In Fig. 16, the waste is shown as colored triangles.

As indicated by the arrow A41, the waste introduced into the groove portion 101 reaches a slant face 101C formed below the groove portion 101. When the waste is introduced, water is ejected from the ejection ports 113 and the waste is sent by using the force of the water.

A camera 121 for sensing is provided in the vicinity of the slant face 101C. By analyzing an image taken by the camera 121, the type, size, and the like of the waste are detected.

The waste the type and the like of which have been detected is introduced into a waste treatment device 122 provided at the end of the slant face 101C and is separated in accordance with the type and size. The waste treatment device 122 is provided with a function of separating the waste using centrifugal force or the like.

Shredding treatment, drying treatment, compression treatment, and the like are performed on garbage of food ingredients and the like in the waste treatment device 122. The waste treatment device 122 is provided with a disposer function.

The waste treated in the waste treatment device 122 is discharged through a pipe in the base portion 12 as indicated by the arrow A42.

The waste treated in the waste treatment device 122 may be transported by the transportation robot 2 as indicated by the arrow A43.

In this case, the waste treated in the waste treatment device 122 is packed in a dedicated container, for example, in the waste treatment device 122. The container filled with the waste is discharged from a discharge port provided at a predetermined position in the bottom surface of the housing 11, and is placed on the top plate of the transportation robot 2 that stands by under the discharge port.

The transportation robot 2 moves to the position of a dust box with the container filled with the waste placed on the top plate, and discards the waste together with the container.

Since the groove portion 101 is provided with the waste treatment function as described above, it is possible to treat the waste generated at the time of cooking only by dropping the waste into the groove portion 101.

### - Housing Function

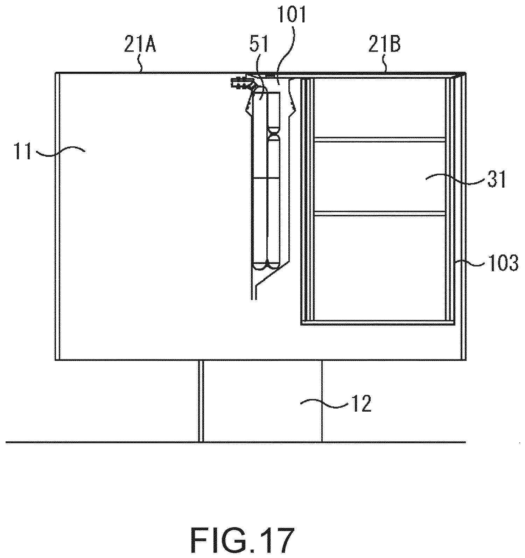

Fig. 17 is a diagram showing still another application example of the groove portion 101.

The groove portion 101 also functions as a housing space for the cooking arms 51. On the sleep mode, the cooking arms 51 in a folded state are housed in the groove portion 101 as shown in Fig. 17.

In this case, the cooking assistance system 31 is also housed in a housing portion 103 which is a space formed in the housing 11. When the groove portion 101 in which the cooking arm 51 is housed is closed by the top plate 21B, the cooking arms 51 are hidden as described with reference to Fig. 8 and the like.

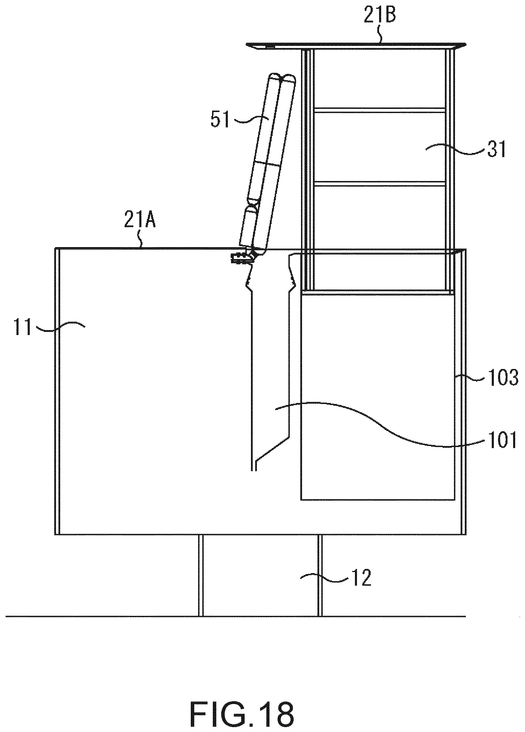

When the operation mode of the robotic kitchen 1 is switched from the sleep mode to the active mode, the cooking arms 51 are driven to be withdrawn from the groove portion 101, such that the cooking arms 51 are arranged on the front side of the cooking assistance system 31 as shown in Fig. 18. As shown in Fig. 18, the folded state of the cooking arms 51 immediately after the cooking arms 51 appear from the groove portion 101 is a standby state of the cooking arms 51.

As described above, the cooking arms 51 are housed in the groove portion 101 on the sleep mode and withdrawn from the groove portion 101 on the active mode. The housing/withdrawal of the cooking arms 51 is performed in accordance with opening/closing of the top plate unit 21.

### <Example of Pipes of Cooking Arms>

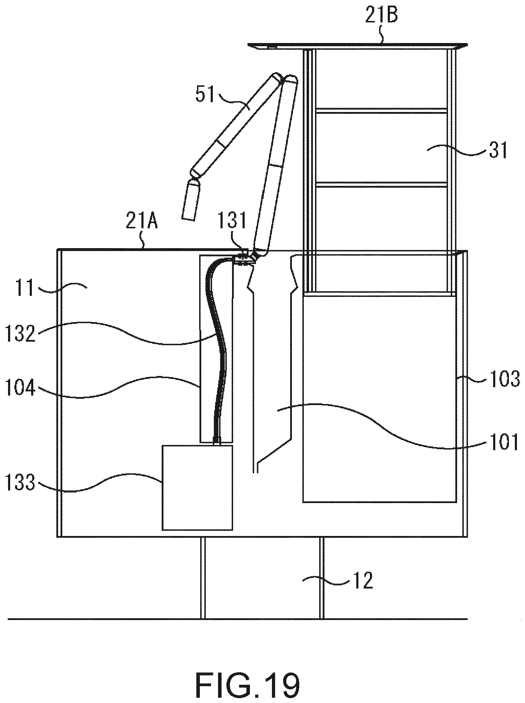

Fig. 19 is a diagram showing a routing example of pipes connected to the cooking arms 51.

As shown in Fig. 19, a pipe housing portion 104 in which the pipes connected to the cooking arms 51 are housed is formed at a position in front of the groove portion 101 inside the housing 11. The pipe housing portion 104 is formed in the longitudinal direction of the housing 11 in a manner similar to that of the groove portion 101 and the rail 102.

As will be described in detail later, the cooking arms 51 have a function of supplying electricity (electric power), heat, cold air, water, edible oil, the air to the attachments attached to the distal ends. Moreover, the cooking arms 51 have a function of suctioning liquid or gas.

An arm movement unit 131 is fitted in the rail 102 which is a base for the cooking arms 51, to which the cooking arms 51 are to be mounted. Pipes 132 that achieve the suction function and the supply function are mounted on the arm movement unit 131 through the pipe housing portion 104 as shown in Fig. 19.

The pipes 132 are constituted by a plurality of pipes such as a pipe for passing gas such as heat or cold air, a pipe for passing water, a pipe for passing edible oil, and a pipe for passing suctioned liquid or gas. The pipes 132 are made from a flexible material such as rubber, vinyl, and plastic.

The ends of the pipes 132 are connected to an arm function control device 133. The arm function control device 133 includes a power supply unit that supplies electricity on the basis of the power supply of the robotic kitchen 1, a boiler unit that generates heat by burning fuel or flowing current to a heating wire, a cooling unit that generates cold air by changing the state of a refrigerant, and the like. A compressor that supplies heat generated by the boiler unit and cold air generated by the cooling unit, a suction unit that generates suction force, and the like are also provided in the arm function control device 133.

Such pipes 132 are respectively connected to the cooking arms 51-1 to 51-4.

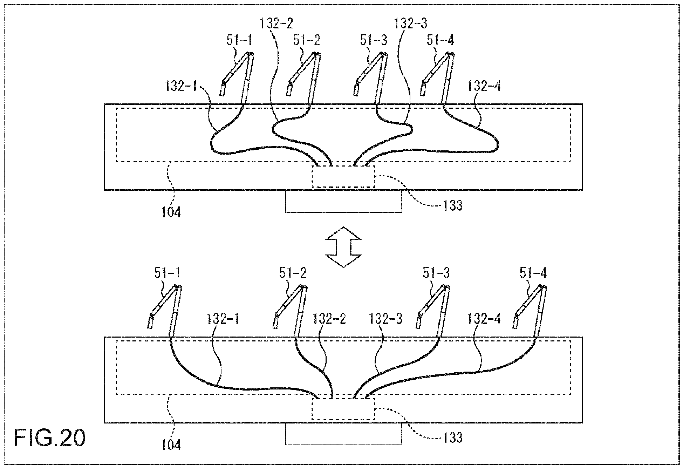

Fig. 20 is a front view showing a routing example of the pipes connected to the cooking arms 51.

In the example of Fig. 20, the cooking arms 51-1 to 51-4 and the arm function control device 133 are connected through pipes 132-1 to 132-4, respectively. The routing of the pipes 132-1 to 132-4 varies in a manner that depends on movements of the cooking arms 51-1 to 51-4.

As described above, the robotic kitchen 1 is provided with the groove portion 101 having the washing function, the waste treatment function, the function of housing the cooking arms 51, and the like. The functions of the groove portion 101 are functions of assisting the cooking by the robotic kitchen 1 like the functions of the cooking assistance system 31.

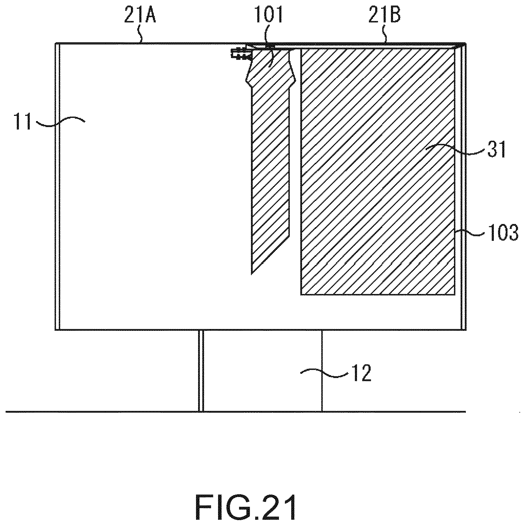

As shown by hatching in Fig. 21, the space of the groove portion 101 and the space of the cooking assistance system 31 serve as a cooking assistance space which is a space for assisting the cooking by the robotic kitchen 1.

The cooking assistance space is a space that appears when the top plate 21B which forms a part of the top plate unit 21 moves after the operation mode of the robotic kitchen 1 becomes the active mode. On the sleep mode, the cooking assistance space is a space that cannot be seen from the outside. It should be noted that the cooking assistance space is a generic term for a space in which the functions of assisting the cooking are exhibited, which appears when the part of the top plate unit moves. The cooking assistance space includes not only a space completely identical to the space in which the functions of assisting the cooking are performed, but also a partial space included in such a space.

### <Other Configurations in Housing>

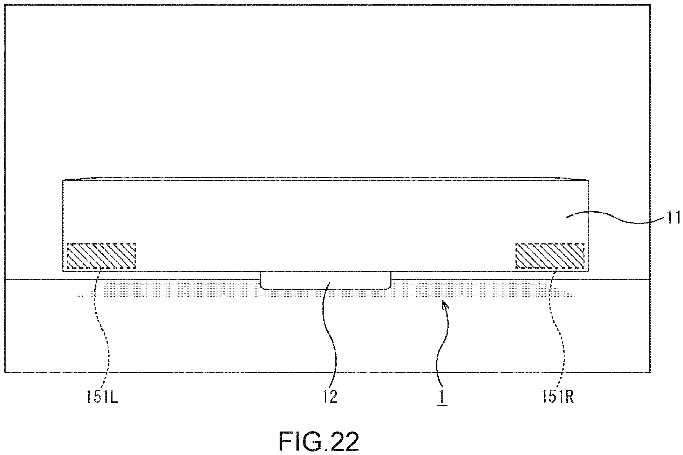

Fig. 22 is a front view showing an example of spaces provided in the housing 11.

As shown in Fig. 22, a housing portion 151R serving as a housing space for the transportation robot 2 is provided at a position near the right side surface in the housing 11. A housing portion 151L serving as a housing space for the transportation robot 2 is provided at a position near the left side surface in the housing 11.

Thus, it is possible to provide a plurality of transportation robots 2 in the robotic kitchen 1. The robotic kitchen 1 can transport dishes and the like by controlling the plurality of transportation robots 2. Three or more transportation robots 2 may be controlled by the robotic kitchen 1.

The transportation robots 2 move out of the housing portions 151R and 151L at a predetermined timing, for example, when a timing for performing transportation task comes, and performs the task in accordance with the control of the robotic kitchen 1.

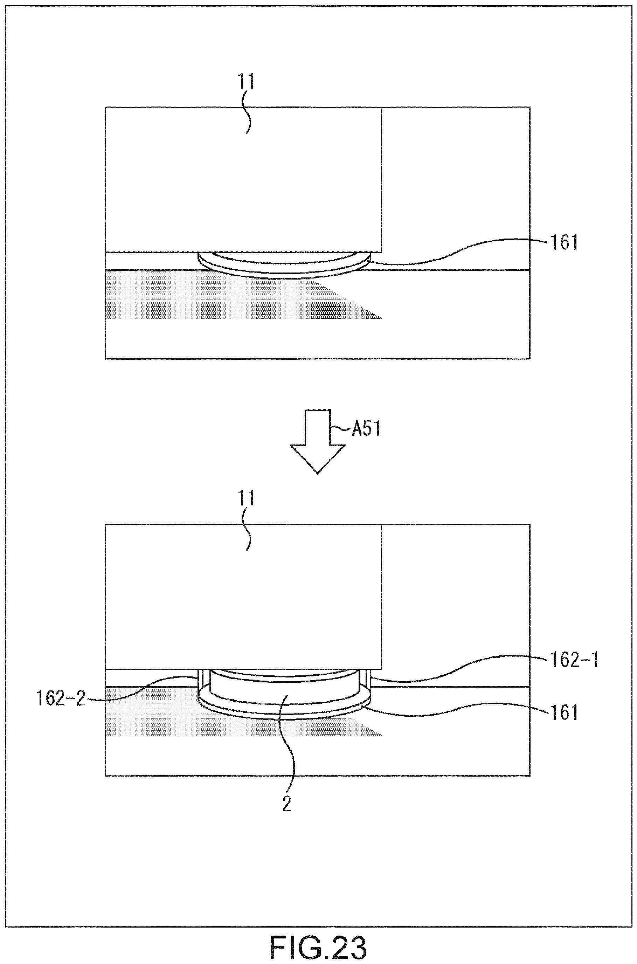

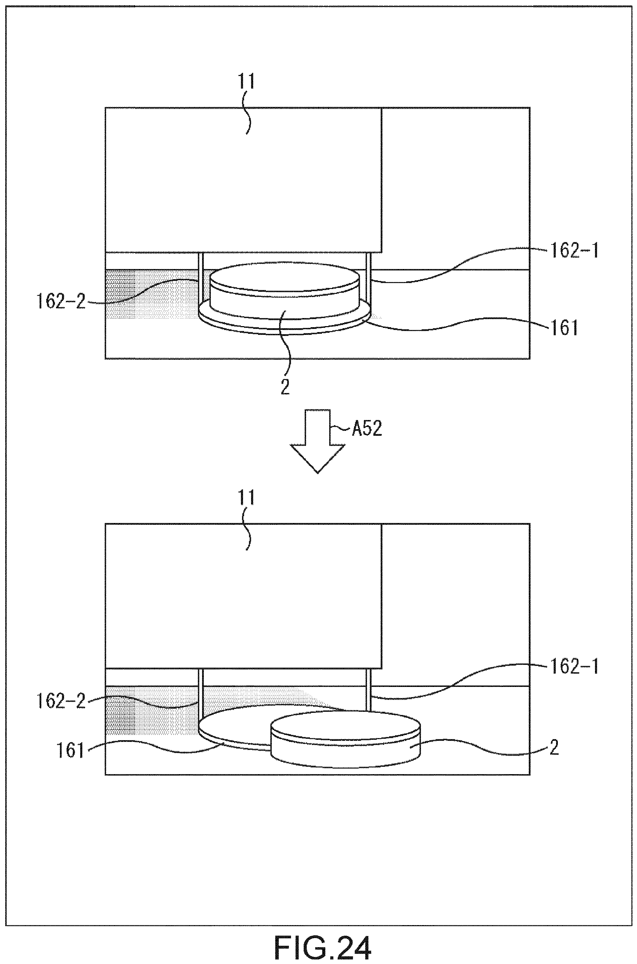

Fig. 23 and Fig. 24 are diagrams showing a state in which the transportation robot 2 moves out.

When the transportation robot 2 is in the housed state, a member on the bottom surface of the storage portion 151R forms substantially the same surface as the bottom surface of the housing 11. When the transportation robot 2 moves out, a circular plate-like tray portion 161 constituting the bottom surface of the housing portion 151R moves down and the transportation robot 2 placed on the tray portion 161 appears as shown in the upper part of Fig. 23.

As indicated by the arrow A51, the tray portion 161 is suspended by support members 162-1 and 162-2. By gradually extending the support members 162-1 and 162-2 from the bottom surface of the housing 11, the transportation robot 2 is moved down to the floor.

The state shown in the upper part of Fig. 24 is a state in which the tray portion 161 lands on the floor. When the tray portion 161 lands on the floor, the transportation robot 2 starts to move as indicated by the arrow A52. The transportation robot 2 changes its shape and starts the task after the transportation robot 2 leaves the space between the housing 11 and the floor.

Similarly, the transportation robot 2 housed in the housing portion 151L moves out at a predetermined timing and performs the task. After the transportation task is complete, the transportation robot 2 changes its own attitude into the attitude of the standby mode and returns to and gets on the tray portion 161 moved down and landed on the floor. As the tray portion 161 ascends, the transportation robot 2 is housed in the housing 11. The attitude and position of the transportation robot 2 are controlled such that the transportation robot 2 can be housed in the housing portion 151R or 151L.

It should be noted that the aspect in which the transportation robot 2 is housed and moves out is not limited to the aspect shown in Figs. 23 and 24. For example, as one of housing structures, the transportation robot 2 is suspended from the upper part and housed by opening/closing the suspension mechanism inside the housing portion 151R or 151L. In this case, the transportation robot 2 is housed such that the suspension mechanism of the housing portion 151R or 151L is opened as the top plate of the transportation robot 2 extends upward (is lifted), and the suspension mechanism is closed to suspend the top plate of the transportation robot 2 at a timing at which the top plate is housed in the housing portion 151R or 151L. The transportation robot 2 moves out such that in the state in which the transportation robot 2 is housed in the housing 11, the base portion of the transportation robot 2 descends first, and at a timing at which the base portion is landed, the suspension mechanism of the housing portion 151R or 151L is opened and the top plate is detached from the suspension mechanism. After the top plate is detached from the suspension mechanism, the transportation robot 2 is once contracted to the thinnest state, for example, and moves out of the space under the housing 11 while keeping that state.

### <Cooking Arm>

### - Cooking Arm Configuration

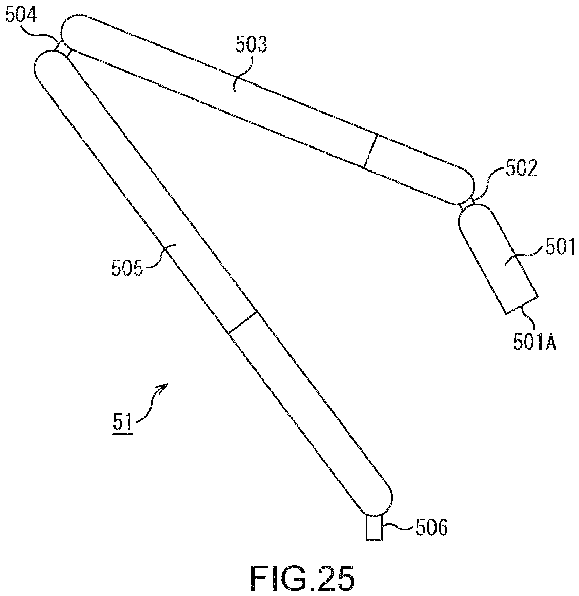

Fig. 25 is a diagram showing the outer appearance of the cooking arm 51.

As shown in Fig. 25, the cooking arm 51 is generally configured by connecting thin cylindrical members with hinge portions serving as joint portions. Each hinge portion is provided with a motor and the like for generating force for driving each member.

As the cylindrical members, an attaching/detaching member 501, a relay member 503, and a base member 505 are provided in order from the distal end. The attaching/detaching member 501 is a member having a length of substantially 1/5 of the length of the relay member 503. The length obtained by adding the length of the attaching/detaching member 501 to the length of the relay member 503 is substantially the same as the length of the base member 505.

The attaching/detaching member 501 and the relay member 503 are connected to each other through a hinge portion 502 and the relay member 503 and the base member 505 are connected to each other through a hinge portion 504. The hinge portion 502 and the hinge portion 504 are provided at both ends of the relay member 503.

Although the cooking arm 51 is constituted by the three cylindrical members in this example, the cooking arm 51 may be constituted by four or more cylindrical members. In this case, a plurality of relay members 503 is provided.

An attaching/detaching portion 501A to/from which the attachment is attached and detached is provided at the distal end of the attaching/detaching member 501. The attaching/detaching member 501 has a attaching/detaching portion 501A to/from which one of the attachments having various cooking functions is attached and detached and functions as a cooking function arm portion that performs cooking by operating the attachment.

The rear end of the base member 505 is provided with an attaching/detaching portion 506 which is attached to the arm movement unit 131 fitted in the rail 102. The base member 505 has an attaching/detaching portion 506 which is attached to the arm movement unit 131 and functions as a movement function arm portion that achieves the movement of the cooking arm 51.

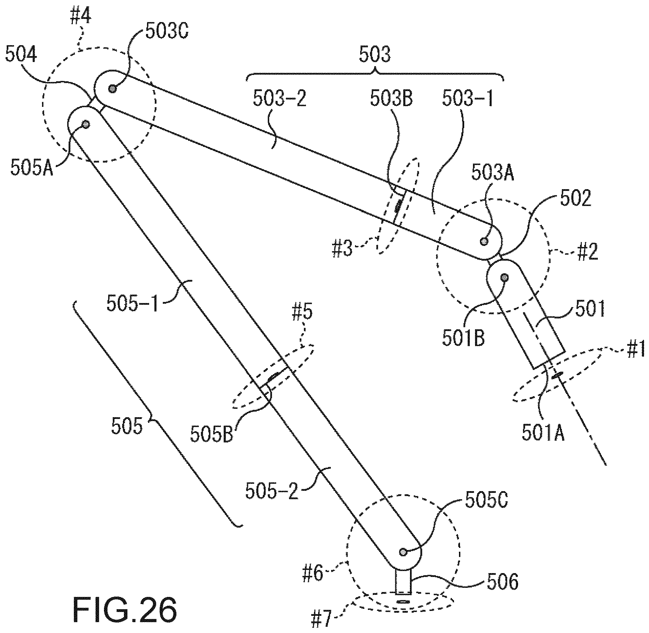

Fig. 26 is a diagram showing an example of a range of motion of each portion of the cooking arm 51.

As shown surrounded by the ellipse #1, the attaching/detaching member 501 is rotatable about the central axis of the circular cross-section. The small flat circle shown in the center of the ellipse #1 indicates the direction of the rotational axis as the long dashed short dashed line.

The range of rotation of the attaching/detaching member 501 is set as a range in which the pipe of the attachment is not detached in a case where the attachment is attached to the attaching/detaching portion 501A. The range of rotation is switched in a manner that depends on the attachment.

As shown surrounded by the circle #2, the attaching/detaching member 501 is rotatable about an axis passing through a fitting portion 501B for the hinge portion 502. Moreover, the relay member 503 is rotatable about an axis passing through a fitting portion 503A for the hinge portion 502.

The two small circles shown inside the circle #2 indicate the direction of each rotational axis (direction perpendicular to the sheet). The range of motion of the attaching/detaching member 501 about the axis passing through the fitting portion 501B and the range of motion of the relay member 503 about the axis passing through the fitting portion 503A are each in the range of 90 degrees, for example.

The relay member 503 is constituted by a member 503-1 on the distal end side and a member 503-2 on the rear end side. As shown surrounded by the ellipse #3, the relay member 503 is rotatable about the central axis of the circular cross-section at a coupling portion 503B between the member 503-1 and the member 503-2.

The other movable portions also have a basically similar range of motion.

That is, as shown surrounded by the circle #4, the relay member 503 is rotatable about an axis passing through a fitting portion 503C for the hinge portion 504. Moreover, the base member 505 is rotatable about an axis passing through a fitting portion 505A for the hinge portion 504.

The base member 505 is constituted by a member 505-1 on the distal end side and a member 505-2 on the rear end side. As shown surrounded by the ellipse #5, the base member 505 is rotatable about the central axis of the circular cross-section at a coupling portion 505B between the member 505-1 and the member 505-2.

As shown surrounded by the circle #6, the base member 505 is rotatable about an axis passing through a fitting portion 505C for the attaching/detaching portion 506.

As shown surrounded by the ellipse #7, the attaching/detaching portion 506 is attached to the arm movement unit 131 to be rotatable about the central axis of the circular cross-section.

As described above, the attaching/detaching member 501 having the attaching/detaching portion 501A at the distal end, the relay member 503 that connects the attaching/detaching member 501 and the base member 505 to each other, and the base member 505 having the rear end to which the attaching/detaching portion 506 is connected are rotatably connected to one another by the hinge portions. The movement of each movable portion is controlled by a controller in the robotic kitchen 1.

This makes it possible to achieve a movement with a high degree of freedom.

### - Movement Mechanism

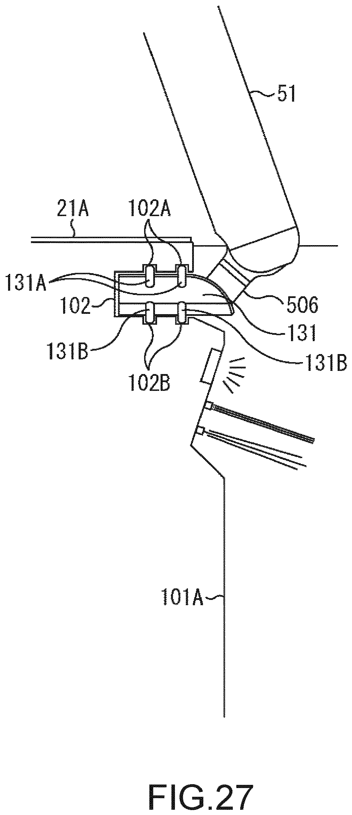

Fig. 27 is a cross-sectional view showing the vicinity of the rail 102 in an enlarged state.

The arm movement unit 131 is fitted in the rail 102 provided at the edge of the top plate 21A. Small grooves 102A and 102B are formed in the upper and lower surfaces of the rail 102 and rollers 131A and 131B provided in the upper and lower surfaces of the arm movement unit 131 are fitted in the grooves 102A and 102B.

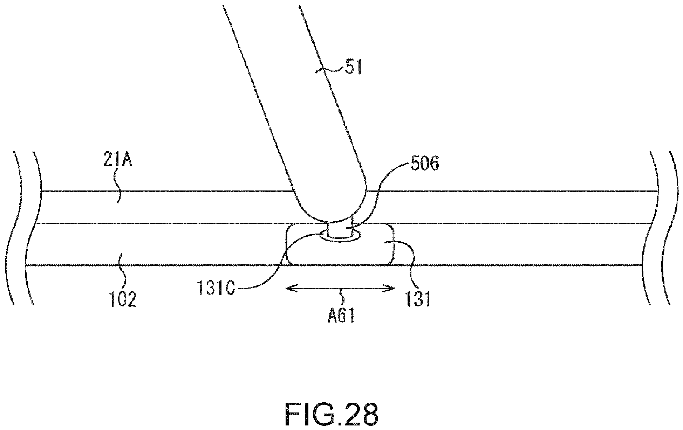

The distal end of the arm movement unit 131 is formed as a gentle curved face and an attaching/detaching portion 131C (Fig. 28) is provided on the curved face. By inserting the attaching/detaching portion 506 into the attaching/detaching portion 131C, the cooking arm 51 is attached to the arm movement unit 131.

It should be noted that in Fig. 27, the illustration of the pipe 132 is omitted. The pipe 132 passes through the inside of the arm movement unit 131 and is guided to the attaching/detaching portion 131C. When the attaching/detaching portion 506 is inserted into the attaching/detaching portion 131C, the pipe 132 is connected to the pipe in the cooking arm 51.

Fig. 28 is a diagram showing a movement direction of the arm movement unit 131.

In Fig. 28, a state of the arm movement unit 131 fitted in the rail 102 as viewed from the inside of the groove portion 101 is shown.

As indicated by the double-headed arrow A61, the arm movement unit 131 moves horizontally along the rail 102. By moving the arm movement unit 131, it is possible to move the cooking arm 51 attached to the arm movement unit 131 to an arbitrary position. Not only the movement of each movable portion, but also the position of the cooking arm 51 are controlled by the controller in the robotic kitchen 1.

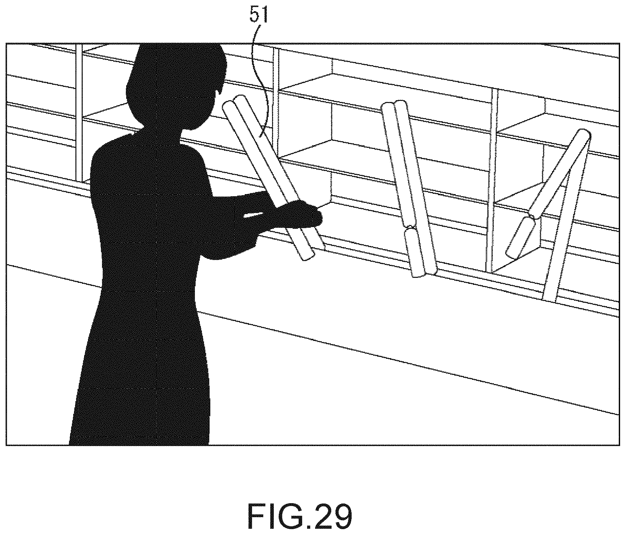

Fig. 29 is a diagram showing a state in which the cooking arm 51 is attached and detached.

As shown in Fig. 29, the cooking arm 51 is attachable/detachable to/from the arm movement unit 131 fitted in the rail 102. For example, the cooking arms 51 are individually sold. By additionally purchasing them, the user can increase the number of cooking arms 51 having the number of arm movement units 131 provided in the rail 102 as the upper limit.

As the number of cooking arms 51 increases, the number of tasks that can be performed at the same time increases or the contents of tasks that the plurality of cooking arms 51 performs in cooperation with each other will change. In the robotic kitchen 1, data whose description content differs in a manner that depends on the number of cooking arms 51 is prepared as recipe data for making the same dish.

### <Attachment>

### - Attaching/Detaching Mechanism

In order to perform cooking using the attachment, it is necessary to supply water and the like to be used for the cooking from the cooking arm 51 side to the attachment side.

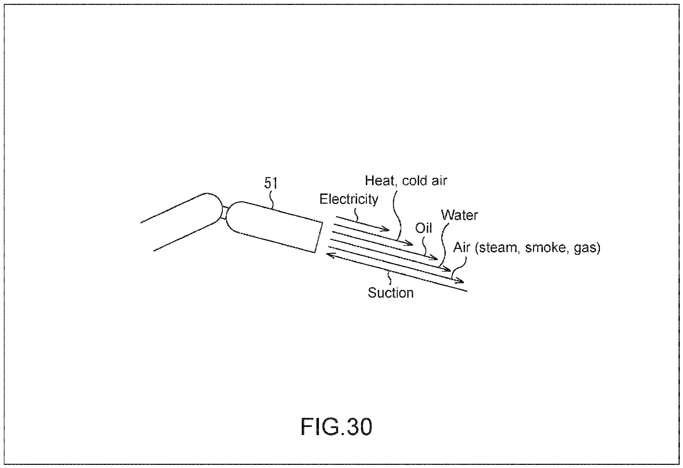

Fig. 30 is a diagram showing a function example of the cooking arm 51.

As indicated by the arrows in Fig. 30, the cooking arm 51 has a function of supplying electricity to the attachment. The attachment is driven by the electricity supplied from the cooking arm 51. The electricity supplied to the attachment is supplied to the cooking arm 51 via the rail 102, for example.

Moreover, the cooking arm 51 has a function of supplying heat or cold air to the attachment. For example, cooking with heat is performed in the attachment by using the heat supplied from the cooking arm 51. Moreover, the temperature adjustment of food ingredients is performed by using the cold air supplied from the cooking arm 51.

The heat or cold air supplied to the attachment is generated in the arm function control device 133 and supplied to the cooking arm 51 via the pipe 132. The heat or cold air generated in the arm function control device 133 is transmitted to the cooking arm 51 by feeding compressed air or the like to the pipe 132 from the arm function control device 133.

The cooking arm 51 has a function of supplying edible oil such as olive oil and vegetable oil to the attachment. By using the edible oil supplied from the cooking arm 51, frying is performed in the attachment, for example. Moreover, cooking such as sprinkling olive oil on ingredients is also performed.

The edible oil supplied to the attachment is supplied to the cooking arm 51 from the arm function control device 133 via the pipe 132. The edible oil stored in the container provided inside the arm function control device 133 is supplied to the cooking arm 51 from the arm function control device 133 by flowing into the pipe 132.

The cooking arm 51 has a function of supplying water to the attachment. For example, washing of food ingredients and washing of the top plate 21A are performed by using the water supplied from the cooking arm 51. The washing of the food ingredients and the washing of the top plate 21A are also tasks performed as cooking.

The water supplied to the attachment is supplied to the cooking arm 51 from the arm function control device 133 via the pipe 132. Water drawn from a water pipe by the arm function control device 133 is supplied to the cooking arm 51 by flowing into the pipe 132. Temperature-regulated water may be supplied to the cooking arm 51 in the arm function control device 133.

The cooking arm 51 has a function of supplying the air to the attachment. For example, steam, smoke, or gas may be supplied to the attachment. For example, steaming or disinfecting the top plate 21A and the attachments attached to the other cooking arms 51 is performed by using the steam supplied from the cooking arm 51.

Moreover, for example, smoking is performed by the attachment by using the smoke supplied from the cooking arm 51. For example, cooking with heat is performed by the attachment with flame using the gas supplied from the cooking arm 51.

The air supplied to the attachment is supplied to the cooking arm 51 from the arm function control device 133 via the pipe 132. Steam or smoke generated in the arm function control device 133 is supplied to the cooking arm 51 by being fed with compressed air from the arm function control device 133 to the pipe 132. Gas drawn from a gas pipe by the arm function control device 133 is supplied to the cooking arm 51 from the arm function control device 133 by being fed into the pipe 132.

The cooking arm 51 has a function of suctioning liquid or gas. Suction force generated in the arm function control device 133 is transmitted to the attachment through the pipe 132 and the cooking arm 51 and the liquid or gas at the suction port of the attachment is suctioned.

It is sufficient that the cooking arm 51 has at least one of the functions rather than having all of the functions shown in Fig. 30.

Other functions such as a function of supplying a drink such as a soft drink and an alcoholic drink to the attachment and a function of supplying a seasoning such as sugar and salt to the attachment may be provided in the cooking arm 51

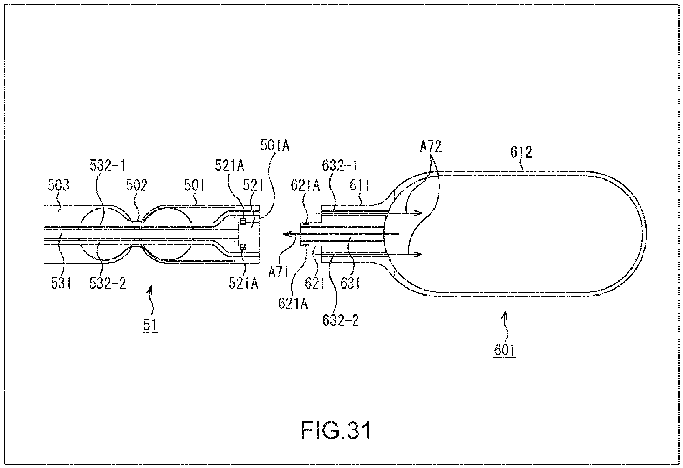

Fig. 31 is a diagram showing an example of and the attaching/detaching mechanism of the attachment.

As shown in Fig. 31, a concave insertion hole 521 is formed in the center of the attaching/detaching portion 501A formed at the distal end of the attaching/detaching member 501 on the cooking arm 51 side.

On the other hand, an attaching/detaching portion 611 is provided on an attachment 601 side. A convex protrusion is formed as an insertion portion 621 at the distal end of the attaching/detaching portion 611.

When the insertion portion 621 is inserted into the insertion hole 521, a lock portion 521A provided in the insertion hole 521 is fitted in a groove portion 621A formed in the circumferential side surface of the insertion portion 621, such that the attachment 601 is fixed to the cooking arm 51.

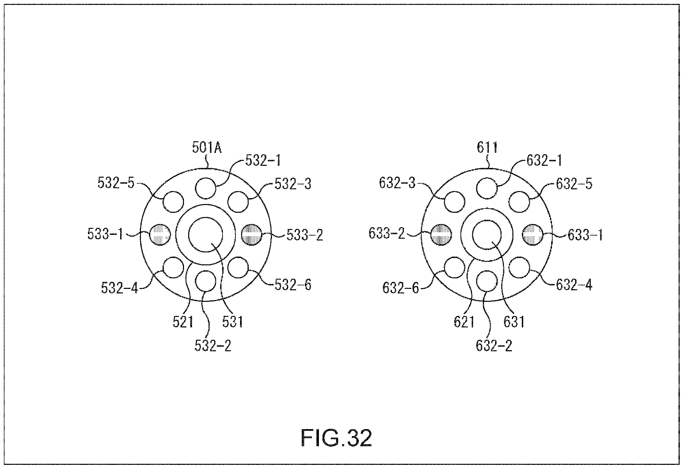

Insertion of the insertion portion 621 into the insertion hole 521 is guided by attraction of magnets provided on the attaching/detaching portion 501A side and the attaching/detaching portion 611 side, respectively. As shown by coloring in Fig. 32, magnets 533-1 and 533-2 and magnets 633-1 and 633-2 are provided at corresponding positions on the attaching/detaching portion 501A side and the attaching/detaching portion 611 side, respectively. Fig. 32 shows a configuration of a contact surface between the attaching/detaching portion 501A and the attaching/detaching portion 611.

A pipe 531 is provided in the innermost portion of the insertion hole 521. As shown in Fig. 32, three pipes are provided on the upper side of the pipe 531 and three pipes are provided on the lower side of the pipe 531. Each pipe is disposed in each member constituting the cooking arm 51.

On the other hand, a pipe 631 is provided in the tip end surface of the insertion portion 621. As shown in Fig. 32, three pipes are provided on the upper side of the pipe 631 and three pipes are provided on the lower side of the pipe 631.

The pipe 531 on the cooking arm 51 side and the pipe 631 on the attachment 601 side are used for suctioning liquid or gas as indicated by the arrow A71 in Fig. 31.

Pipes 532-1 and 532-2 on the cooking arm 51 side and pipes 632-1 and 632-2 on the attachment 601 side are used for supplying water as indicated by the arrows A72 in Fig. 31, for example.

Moreover, pipes 532-3 and 532-4 on the cooking arm 51 side and pipes 632-3 and 632-4 on the attachment 601 side are used for supplying edible oil.

Pipes 532-5 and 532-6 on the cooking arm 51 side and pipes 632-5 and 632-6 on the attachment 601 side are used for supplying gas. The supply of heat or cold air, the supply of steam, smoke, or gas, and the like are performed through the pipes 532-5 and 532-6 and pipes 632-5 and 632-6.

In the cooking arm 51 side, two pipes used for the same function are provided at diagonal positions across the pipe 531 in the center. Also on the attachment 601 side, two pipes used for the same function are provided at diagonal positions across the pipe 631 in the center.

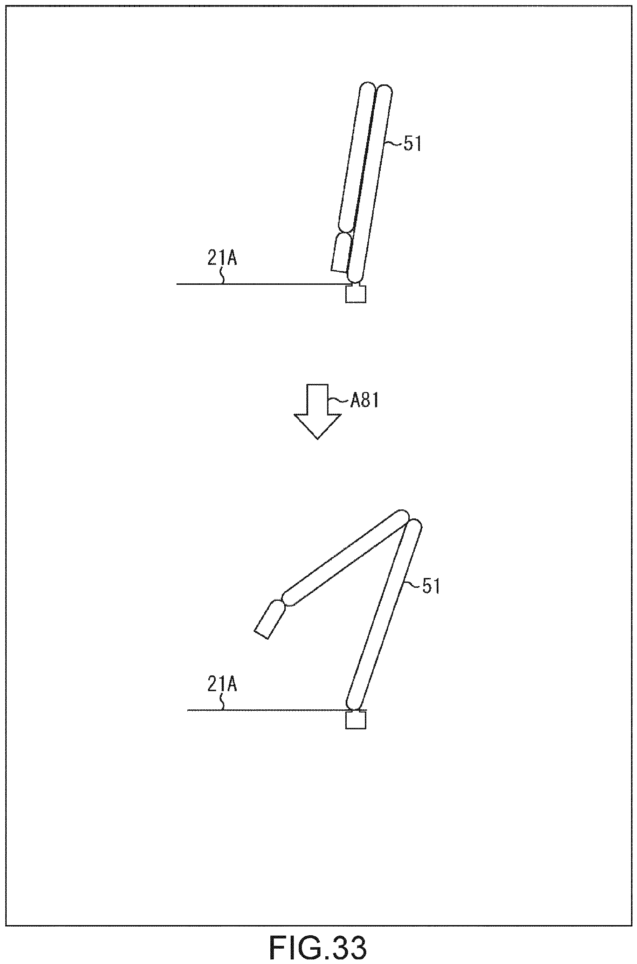

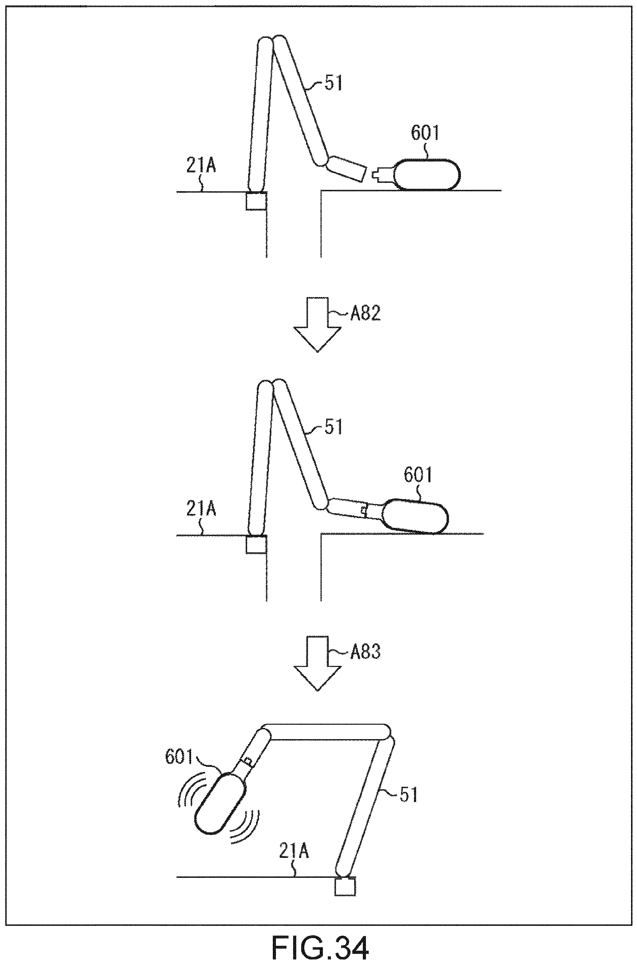

Figs. 33 and 34 are diagrams showing a flow of attaching the attachment 601.

The state of the cooking arm 51 immediately after it is activated is in the standby state as shown in the upper part of Fig. 33. After it is determined to attach the attachment on the basis of the recipe data or the like, the driving of the cooking arm 51 is started as indicated by the arrow A81.

The position of an attachment of the plurality of attachments housed in the cooking assistance unit 31-3, which is to be attached, is recognized. The position of each attachment is recognized by analyzing an image taken by a camera, for example.

The housing position of each attachment may be fixed. Each attachment is housed in the cooking assistance unit 31-3 in a state in which the attaching/detaching portion 611 is directed to the groove portion 101, for example.

As shown in the upper part of Fig. 34, each portion of the cooking arm 51 is driven such that the attaching/detaching portion 501A comes close to the attaching/detaching portion 611 of the attachment 601 to be attached.

When the attaching/detaching portion 501A is moved close to the attaching/detaching portion 611 of the attachment 601, the attachment 601 is attached to the attaching/detaching portion 501A by attraction force of the magnets provided on the attaching/detaching portion 501A side and the attaching/detaching portion 611 side as indicated by the arrow A82.

Accordingly, cooking using the attachment 601 can be performed as indicated by the arrow A83. In the example of Fig. 34, cooking of mixing ingredients is performed by vibrating the attachment 601.

It is possible to replace the attachment 601 by respectively providing the attaching/detaching portions on the cooking arm 51 side and the attachment 601 side as described above.

Moreover, the attachment 601 can be provided with various cooking functions by connection between the pipe on the attachment 601 side and the pipe on the cooking arm 51 side when the attachment 601 is attached.

Returning to the description of Fig. 31, a portion of the entire configuration of the attachment 601, which excludes the attaching/detaching portion 611, serves as a cooking unit 612 that achieves the cooking functions. In accordance with the operation of the cooking arms 51, tasks according to the cooking process are achieved in the cooking unit 612. The operation of the cooking unit 612 is switched as appropriate in accordance with the state of the user who performs the collaborative task. The configuration of the cooking unit 612 differs in a manner that depends on the type of attachment.

Although the connection of the pipes has been mainly described in the example of Figs. 31 and 32, configurations and the like for connecting a cable for supplying electricity and signal lines for supplying various control signals to the attachment 601 side are provided on the cooking arm 51 side and the attachment 601 side, respectively.

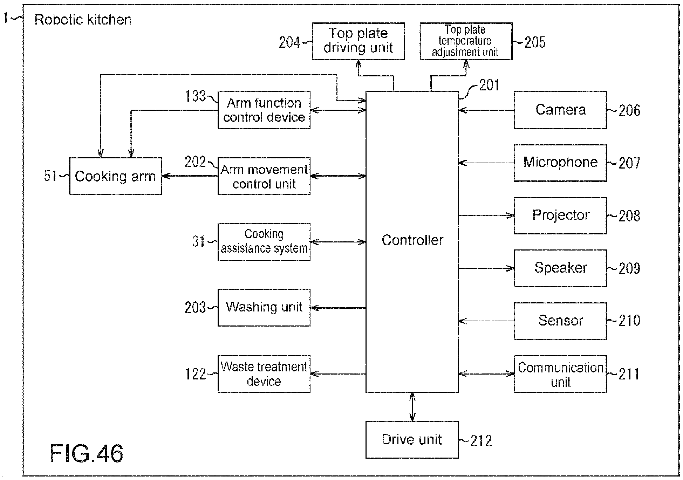

The cooking unit 612 is connected to the control device (controller 201 in Fig. 46) of the robotic kitchen 1 and functions as a connection unit that receives a control signal transmitted from the control device. Moreover, the cooking unit 612 functions as a control unit that controls the cooking functions of the cooking unit 612 itself on the basis of a control signal received at the connection unit.

### - Type of Attachment

Here, the type of attachment attached to the cooking arm 51 in the above-mentioned manner will be described.

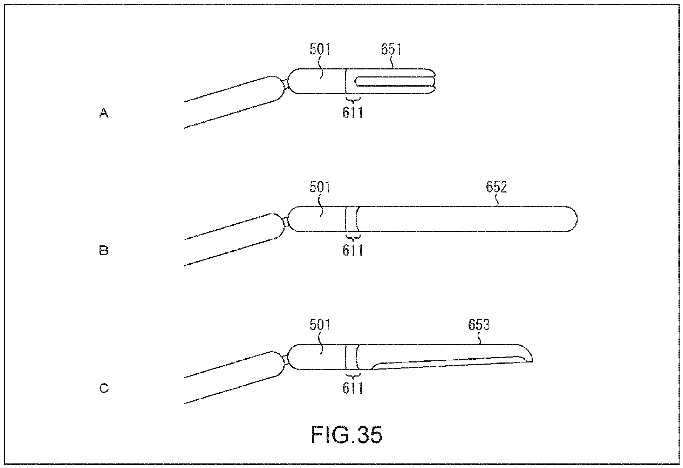

Figs. 35 to 38 are diagrams showing examples of attachments.

In Figs. 35 to 37, each attachment attached to the cooking arm 51 is shown. The attaching/detaching portion 611 is provided at the root of each attachment. The portion on the distal side of the attaching/detaching portion 611 corresponds to the cooking unit 612 of each attachment.

A of Fig. 35 shows the outer appearance of a manipulator attachment 651, which is an attachment having a manipulator function of gripping ingredients, tableware, and the like. The details of the manipulator attachment 651 will be described later.

B of Fig. 35 shows the outer appearance of a spatula attachment 652, which is an attachment having a spatula function.

The spatula attachment 652 has a narrow, thin plate-like shape having a tip rounded in a semicircular arc shape. The spatula attachment 652 is made from metal such as stainless steel, ceramic, resin, and the like.

The spatula attachment 652 is used for performing a task such as coating as described above. In a case where the material of the spatula attachment 652 is metal, a task of heating the a food ingredient with heat supplied from the cooking arm 51 or cooling a food ingredient with the cold air supplied from the cooking arm 51 by placing the spatula attachment 652 on the food ingredient may be performed.

C of Fig. 35 shows the outer appearance of a knife attachment 653, which is an attachment having a knife function.

The knife attachment 653 has a narrow, thin plate-like shape. A blade is formed in the lower part of the knife attachment 653. The knife attachment 653 is made from metal such as stainless steel, ceramic, resin, and the like.

A task of cutting a food ingredient as described above is performed by using the knife attachment 653. In a case where the material of the knife attachment 653 is metal, a food ingredient is cut while heating the cut section with heat generated by the heating wire inside the knife attachment 653.

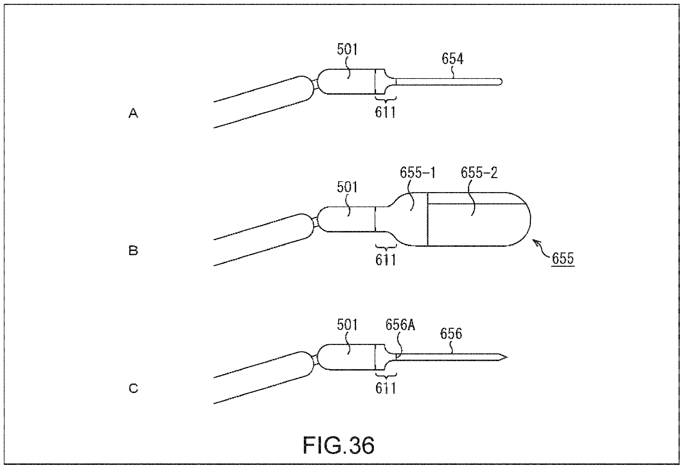

A of Fig. 36 shows the outer appearance of an all-purpose pin attachment 654.

The all-purpose pin attachment 654 has a thin pin-like shape having a rounded tip. The all-purpose pin attachment 654 is made from metal such as stainless steel.

A task of stirring or warming soup in a pan by using the all-purpose pin attachment 654. For example, when the all-purpose pin attachment 654 is inserted into the soup, the all-purpose pin attachment 654 is heated with heat supplied from the cooking arm 51 and the soup is warmed with the heat of the all-purpose pin attachment 654.

B of Fig. 36 shows the outer appearance of a shaker attachment 655.

The shaker attachment 655 has a hollow cylindrical shape. The shaker attachment 655 includes a base portion 655-1 and a capsule portion 655-2 provided on the distal side of the base portion 655-1. The capsule portion 655-2 is made from a transparent material such as reinforced glass and acrylic resin. The attachment 601 described with reference to Figs. 33 and 34 and the like is the shaker attachment 655.

A task of mixing seasonings put in the capsule portion 655-2 is performed by shaking the entire shaker attachment 655. A part of the capsule portion 655-2 is configured as a slidable cover portion. Food ingredients including seasonings to be mixed are put into the capsule portion 655-2 from an opening formed when the cover portion is opened.

A task of heating the food ingredients put in the capsule portion 655-2 with heat supplied from the cooking arm 51 or mixing the food ingredients put in the capsule portion 655-2 with water and olive oil supplied from the cooking arm 51 may be performed.

C in Fig. 36 shows the outer appearance of a spindle attachment 656.

The spindle attachment 656 has a thin pin-like shape having a sharp tip. A pin-like portion on the distal side of a movable portion 656A is rotatable. The spindle attachment 656 is made from metal such as stainless steel.

A task of peeling vegetables as described above is performed by using the spindle attachment 656. In a case of peeling a potato, the cooking arm 51 to which the spindle attachment 656 is attached sticks the tip of the spindle attachment 656 into the potato, lifts the potato, and rotates the potato in that state. For example, another cooking arm 51 to which the peeler attachment is attached presses the peeler attachment against the surface of the rotating potato and performs the task of peeling the potato.

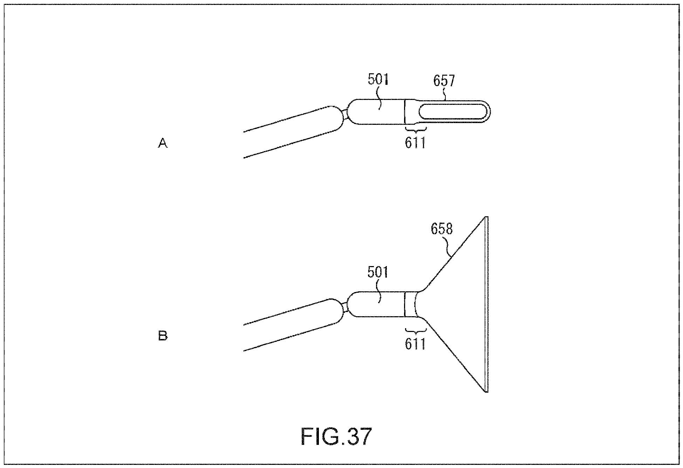

A of Fig. 37 shows the outer appearance of a peeler attachment 657.

The peeler attachment 657 has an oblong elliptical shape and an elliptical hole portion is formed at its center. A blade for peeling is formed along the hole portion. The peeler attachment 657 is made from metal such as stainless steel, ceramic, resin, and the like.

The task of peeling vegetables in cooperation with the cooking arm 51 to which the spindle attachment 656 is attached is performed by using the peeler attachment 657.

B of Fig. 37 shows the outer appearance of a cleaner attachment 658.

The cleaner attachment 658 has a substantially triangular shape extending from the root toward the tip. The cleaner attachment 658 is made from metal such as stainless steel, resin, and the like.

The top plate 21A is cleaned by using the cleaner attachment 658. The details of the cleaner attachment 658 will be described later.

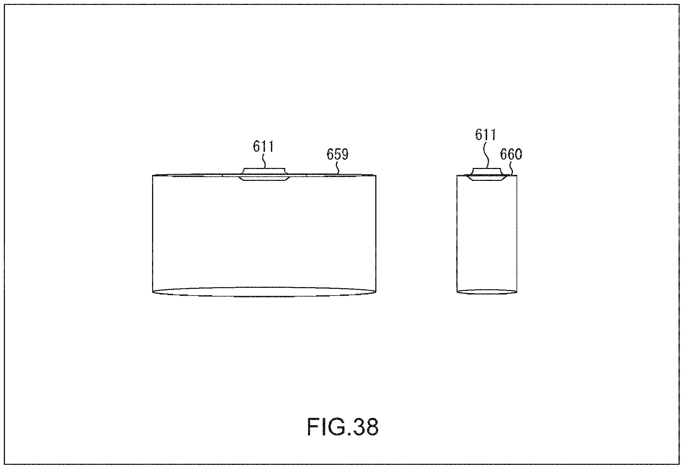

Fig. 38 shows the outer appearance of cover attachments 659 and 660.

The cover attachments 659 and 660 each has a hollow cylindrical housing. The cover attachment 659 is wider than the cover attachment 660. The cover attachments 659 and 660 are each made from a transparent material such as reinforced glass and acrylic resin. The attaching/detaching portion 611 is provided in the center of the upper surface of each of the cover attachments 659 and 660.

The entire bottom surface of the housing of each of the cover attachments 659 and 660 is opened. The cover attachments 659 and 660 each covers a food ingredient placed on the top plate 21A and is used for performing various tasks in its hollow portion. The details of the cover attachments 659 and 660 will be described later.

As described above, the robotic kitchen 1 is provided with various dedicated attachments different from tools used for cooking by a human. By replacing the attachment, it is possible to provide the cooking arm 51 with various cooking functions.

These attachments are grouped and managed in accordance with the cooking process and frequency of use. For example, frequently used attachments are stored in the upper shelf of the cooking assistance unit 31-3, from which it can be easily taken out. In this case, infrequently used attachments are stored in the lower shelf of the cooking assistance unit 31-3.

For example, the attachments are individually sold. The user can increase the variety of cooking that can be performed by the robotic kitchen 1 by additionally purchasing them.

As the number of attachments increases, the dishes that can be made change or the contents of tasks will change. As recipe data for making a certain dish, data whose description content differs in a manner that depends on a combination of attachments prepared in the robotic kitchen 1 is prepared.

### - Manipulator Attachment

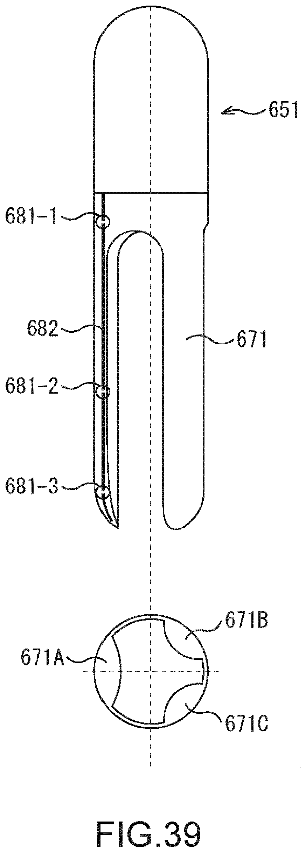

Fig. 39 is a diagram showing a configuration example of the manipulator attachment 651.

As shown in the upper part of Fig. 39, a gripping portion 671 is provided on the distal end side of the manipulator attachment 651. The gripping portion 671 is made from a deformable material such as silicon.

Finger portions 671A to 671C serving as three fingers are formed in the gripping portion 671 by dividing the gripping portion 671 into three pieces. The lower part of Fig. 39 shows a state of the gripping portion 671 as viewed from the distal end side of the manipulator attachment 651. The finger portions 671A to 671C have curved faces. The width of the finger 671A is larger than the width of the finger 671B or 671C.

As shown in the upper part of Fig. 39 in a see-through state, joint portions 681-1 to 681-3 are provided inside each finger portion. The joint portions are connected to one another with a wire 682.

The joint portions 681-1 are provided in the vicinity of the root of the gripping portion 671 branched into the finger portions 671A to 671C and the joint portion 681-3 is provided in the vicinity of the tip end of each finger portion. The joint portion 681-2 is provided at a position slightly closer to the joint portion 681-3 than the intermediate position between the joint portion 681-1 and the joint portion 681-3. The distance between the joint portions on the distal end side of the gripping portion 671 is smaller than the distance between the joint portions on the rear end side.

By driving the joint portions 681-1 to 681-3 and the wires 682, various movements such as a movement of gripping a food ingredient are achieved.

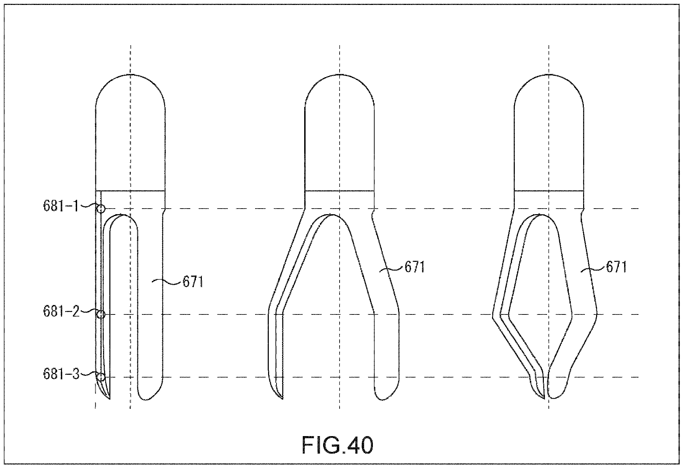

Fig. 40 is a diagram showing an example of movement of the gripping portion 671.

The state of the gripping portion 671 shown on the left side of Fig. 40 is a standby state.

The state of the gripping portion 671 shown in the center of Fig. 40 is a state of gripping a large object.

In this case, the respective joint portions 681-1 of the finger portions 671A to 671C are driven to open the portions on the distal side of the joint portions 681-1 outward. Moreover, the respective joint portions 681-2 of the finger portions 671A to 671C are driven to gently close the portions on the distal side of the joint portions 681-2 inward.

The state of the gripping portion 671 shown on the right side of Fig. 40 is a state of pinching a small object.

In this case, the respective joint portions 681-1 of the finger portions 671A to 671C are driven to open the portions on the distal side of the joint portions 681-1 outward in a manner similar to that when gripping the large object. Moreover, the joint portions 681-2 of the finger portions 671A to 671C are driven to close the portions on the distal side of the joint portions 681-2 more inward than when gripping the large object. The respective joint portions 681-3 of the finger portions 671A to 671C are driven to open the portions on the distal side of the joint portions 681-3 outward.

The finger portions 671A to 671C are also capable of performing different movements rather than performing the same movement.

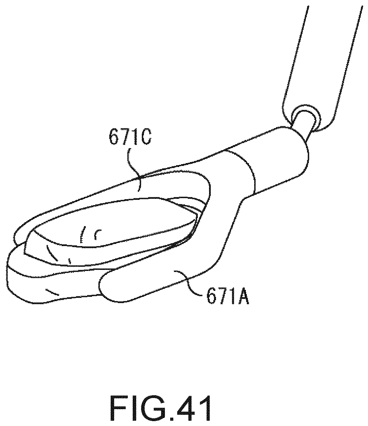

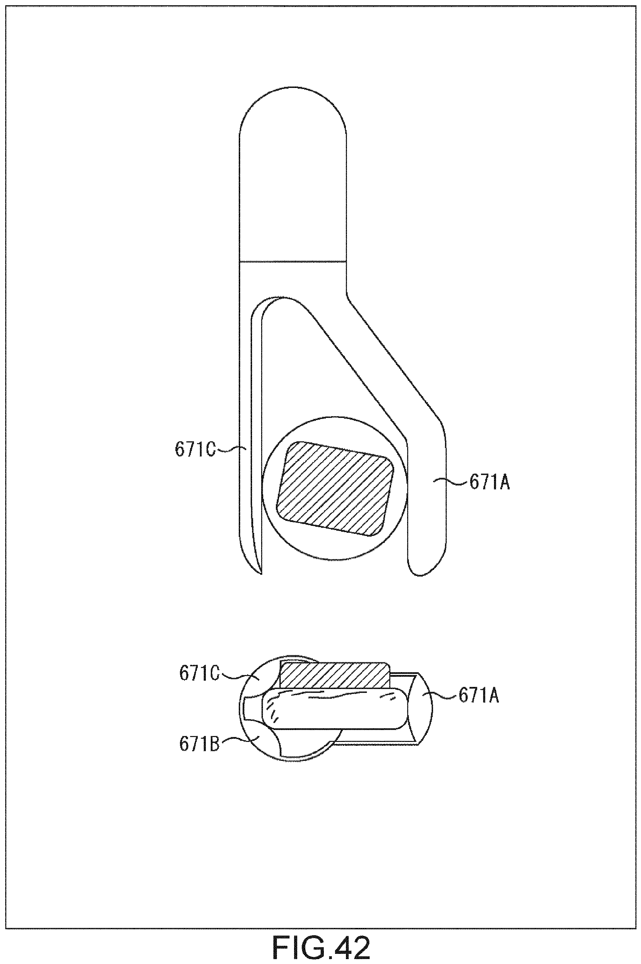

Figs. 41 and 42 are diagrams showing a state of gripping food ingredients.

In the example of Figs. 41 and 42, the manipulator attachment 651 grips a baguette on which a piece of smoked salmon is put by bending the finger portion 671A and making the finger portion 671B and the finger portion 671C substantially straight.

By driving the respective joint portions of the finger portions 671A to 671C as described above, various finger movements can be achieved.

Air suction ports are provided in the inner surfaces of the finger portions 671A to 671C. By suctioning an object to the inner surfaces of the finger portions 671A to 671C, it is possible to support force for gripping an object such as a food ingredient.

### - Cleaner Attachment

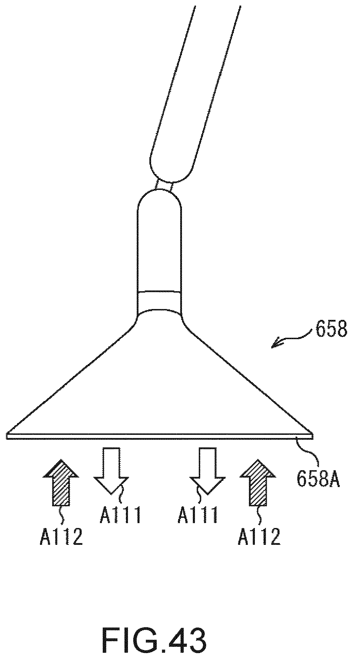

Fig. 43 is a diagram showing the cleaner attachment 658 in an enlarged state.

As shown in Fig. 43, a narrow opening 658A is formed at the distal end of the cleaner attachment 658 having a triangular shape.

As indicated by the arrows A111, hot water is ejected from the opening 658A. The surface of the top plate 21A is washed with the hot water ejected from the opening 658A. The hot water used for washing is suctioned into the opening 658A as indicated by the arrows A112. The hot water is ejected and suctioned, for example, simultaneously.

The robotic kitchen 1 can wash the surface of the top plate 21A by driving the cooking arm 51 to slide the distal end of the cleaner attachment 658 along the surface of the top plate 21A.

The surface of the top plate 21A may be washed by ejecting steam from the opening 658A.

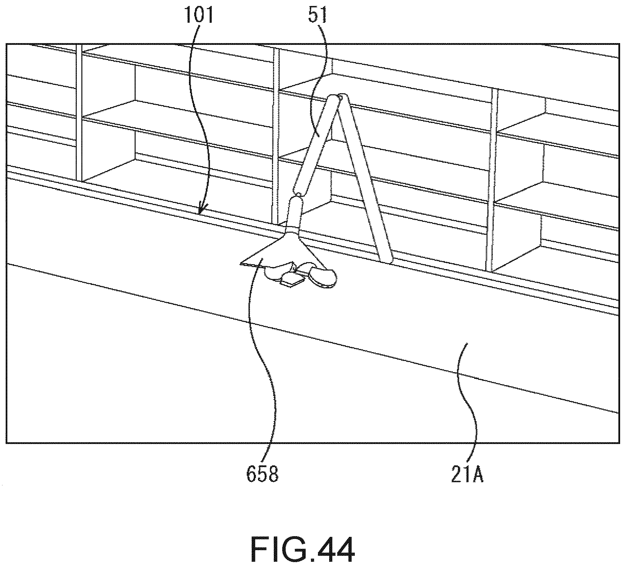

Fig. 44 shows another application example of the cleaner attachment 658.

As described above, the groove portion 101 is provided with the function of treating waste. As shown in Fig. 44, the cleaner attachment 658 is also used for introducing waste on the top plate 21A into the groove portion 101.

The robotic kitchen 1 can recognize the position of the waste and introduce the waste into the groove portion 101 by driving the cooking arm 51 to sweep from the position of the waste to the position of the groove portion 101 with the distal end of the cleaner attachment 658.

The cleaner attachment 658 having such a function is used not only for washing the surface of the top plate 21A, but also for washing other portions of the robotic kitchen 1 such as the inside of the groove portion 101 and the rail 102.

### - Cover Attachment

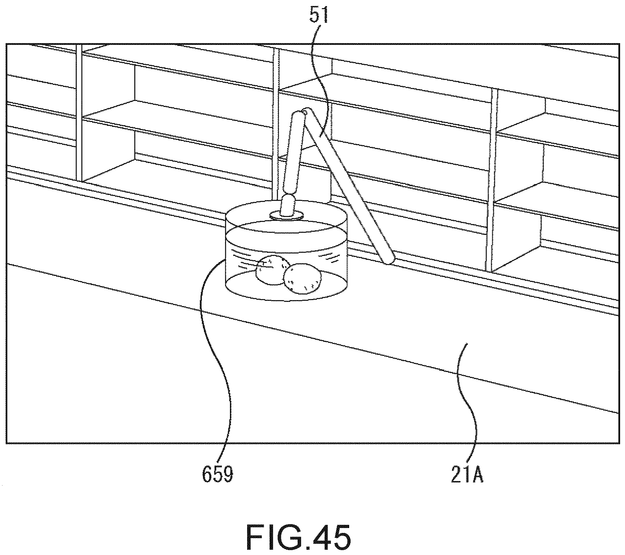

Fig. 45 is a diagram showing an application example of the cover attachment 659.

As shown in Fig. 45, the cover attachment 659 is used covering food ingredients placed on the top plate 21A, for example. In the example of Fig. 45, the cooking arm 51 makes the cover attachment 659 cover two potatoes.

In a case where the cover attachment 659 is made to cover them, the cover attachment 659 is filled with water supplied from the cooking arm 51 as shown in Fig. 45. After the cover attachment 7659 is filled with water, the air supplied from the cooking arm 51 causes convection inside the cover attachment 659 to wash the food ingredients.

When the washing of food ingredients has been completed, the water with which the cover attachment 659 is filled is suctioned by the cooking arm 51. After the water has been completely suctioned, the washed ingredients are removed by detaching the cover attachment 659.

In this manner, the cover attachment 659 is used for bringing the opening into close contact with the surface of the top plate 21A and washing the food ingredients in the inner space.

Moreover, the cover attachment 659 is used for smoking ingredients in the inner space.

In this case, the food ingredients are covered with the cover attachment 659 and smoking is performed in the inner space of the cover attachment 659 with smoke supplied from the cooking arm 51.

When a predetermined time has elapsed and smoking has been completed, the smoke with which the cover attachment 659 is filled is suctioned by the cooking arm 51. After the smoke is suctioned, the smoked food ingredients are removed by detaching the cover attachment 659.

The cover attachment 659 is also used for frying food ingredients in the inner space.

In this case, the food ingredients are covered with the cover attachment 659, and the frying is performed in the inner space of the cover attachment 659 with high-temperature edible oil sprayed from the cooking arm 51.

When a predetermined time has elapsed and the frying has been completed, the cooked food ingredients are removed by detaching the cover attachment 659.

In this manner, the cover attachment 659 is used for performing various tasks in the inner space. Since the task is performed in the closed space, it is possible to prevent the surrounding from becoming dirty.

The application of the cover attachment 660 is basically similar to the application of the cover attachment 659. For example, the cover attachment 659 is used in a case where the amount of food ingredient is large or a large food ingredient is used and the cover attachment 660 is used in a case where the amount of food ingredient is small or a small food ingredient is used.

The cover attachments 659 and 660 may be used in a manner that depends on applications, for example, such that the cover attachment 659 is used for washing and smoking food ingredients and the cover attachment 660 is used for frying food ingredients.

### <Internal Configuration>

### - Hardware Configuration

Fig. 46 is a block diagram showing a configuration example of hardware of the robotic kitchen 1.

The robotic kitchen 1 is configured by connecting each unit to the controller 201. Of the configurations shown in Fig. 46, the same configurations as the configurations described above are denoted by the same reference signs. Duplicate descriptions will be omitted as appropriate.

The above-mentioned configurations such as the cooking assistance system 31, the cooking arms 51, the waste treatment device 122, and the arm function control device 133 are connected to the controller 201.

Moreover, the arm movement control unit 202, the washing unit 203, the top plate driving unit 204, and the top plate temperature adjustment unit 205 are connected to the controller 201. The camera 206, the microphone 207, the projector 208, the speaker 209, the sensor 210, the communication unit 211, and the drive unit 212 are connected to the controller 201.

The controller 201 is constituted by a computer including a central processing unit (CPU), a read only memory (ROM), a random access memory (RAM), a flash memory, and the like. The controller 201 executes a predetermined program by the CPU and controls general operations of the robotic kitchen 1. The computer constituting the controller 201 is housed inside the housing 11 and functions as a control device that controls the operation of the robotic kitchen 1.

The arm movement control unit 202 is constituted by a motor that moves the arm movement unit 131 along the rail 102, a sensor that detects the position of the arm movement unit 131, and the like.

The washing unit 203 is constituted by an ultraviolet disinfection machine, a hand dryer, and a water ejection device. The washing unit 203 is also provided with a sensor or the like that detects that the user's hands are put into the groove portion 101. Instead of providing all of the ultraviolet disinfection machine, the hand dryer, and the water ejection device, at least one of the ultraviolet disinfection machine, the hand dryer, or the water ejection device may be provided in the washing unit 203.

Ultraviolet rays generated by the ultraviolet disinfection machine constituting the washing unit 203 are emitted from the irradiation ports 111 provided in the groove portion 101. Moreover, the air jet generated by the hand dryer constituting the washing unit 203 is discharged from the ejection ports 112 provided in the groove portion 101. Water pressurized by the ejection device constituting the washing unit 203 is discharged from the ejection ports 113 provided in the groove portion 101.

The top plate driving unit 204 is constituted by a motor that drives the top plate 21B together with the cooking assistance system 31, a sensor that detects the position of the cooking assistance system 31 or the like, and the like.

The top plate temperature adjustment unit 205 is constituted by a heating device that warms the surface of the top plate 21A, a cooling device that cools the surface of the top plate 21A, a temperature sensor that measures the temperature of each portion of the top plate 21A, and the like. The temperature of the surface of the top plate 21A can be adjusted for each position. The temperature of the surface of the top plate 21A is adjusted in accordance with a cooking process, for example.

The camera 206 images a room where the robotic kitchen 1 is installed and outputs an image obtained by imaging to the controller 201. The camera 206 is provided at various positions such as the sides of the housing 11, the front of the cooking assistance system 31, and the inside of the groove portion 101.

The microphone 207 detects the user's voice and outputs the user's voice data to controller 201. The microphone 207 also detects an environmental sound and the like of the room where the robotic kitchen 1 is installed. The data of the environmental sound is used for analysis of a peripheral state and the like.

The projector 208 projects various types of information such as a menu of dishes, information regarding a cooking process, and the like. Various requests for the robotic kitchen 1, such as a request for a refill, are also input by using a UI projected by the projector 208.

For example, the surface of the top plate 21A is used as a projection surface of information by the projector 208. Another flat surface such as a floor surface, a wall surface provided on the rear side of the robotic kitchen 1, and a surface of a top plate of the dining table provided in front of the robotic kitchen 1 may be used as the projection surface.

Instead of or in addition to the projector 208, a display such as an LCD or an organic EL display may be provided at a predetermined position in the robotic kitchen 1.

The speaker 209 outputs a predetermined sound such as a synthesized voice, a sound effect, and BGM.

The sensor 210 is constituted by various sensors such as temperature and wetness sensors, a pressure sensor, an optical sensor, a distance sensor, a human sense, and a position measurement sensor. The detection by the sensor 210 is performed at a predetermined cycle. Data representing the detection result of the sensor 210 is output to the controller 201.

The communication unit 211 is a wireless communication module such as a wireless LAN module or a portable communication module corresponding to long term evolution (LTE). The communication unit 211 communicates with the transportation robot 2 and an external device such as a server on the Internet. The communication between the controller 201 and the cooking arms 51 may be performed by the communication unit 211.

Moreover, the communication unit 211 communicates with a portable terminal such as a smartphone and a tablet terminal used by the user. The user's request to the robotic kitchen 1 may be input by an operation on the portable terminal.

Moreover, the robotic kitchen 1 may notify the user by using screen display of the portable terminal or the like. For example, when a timing of a task to be performed in collaboration with the user comes, the user is notified of it by using the screen display of the portable terminal. In this manner, the robotic kitchen 1 has a function of cooperating with the user's portable terminal.

The drive unit 212 is a drive unit that drives respective units such as motors that drive the tray portions 161 constituting the bottom surfaces of the housing portions 151R and 151L of the transportation robots 2.

The camera 206, the microphone 207, the projector 208, the speaker 209, and the sensor 210 may be provided at positions distant from the robotic kitchen 1, rather than provided in the robotic kitchen 1.

Each device provided at the position distant from the robotic kitchen 1 is connected to the controller 201 via wireless communication.

For example, the projector 208 provided at the position distant from the robotic kitchen 1 projects predetermined information on a projection surface on the basis of information transmitted from the controller 201. Moreover, the sensor 210 provided at the position distant from the robotic kitchen 1 transmits detected data to the controller 201.

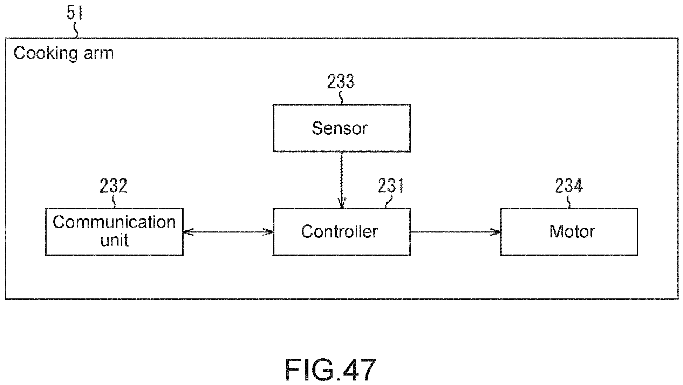

Fig. 47 is a block diagram showing a configuration example of hardware of the cooking arm 51.

The cooking arm 51 includes a controller 231, a communication unit 232, a sensor 233, and a motor 234.

The controller 231 includes a CPU, a ROM, RAM, a flash memory, and the like. The controller 231 executes a predetermined program and controls the driving of the motor 234 on the basis of the information transmitted from the controller 201 serving as a control device on the main body side of the robotic kitchen 1. Moreover, the controller 231 controls the driving of the motor 234 in accordance with the detection result of the sensor 233.

The controller 231 controls the driving of the attachment. The controller 231 functions as a cooking control unit that controls the cooking function of the attachment.

The communication unit 232 receives information transmitted from the controller 201 and outputs the received information to the controller 231. The controller 201 transmits, for example, information for controlling the driving of each joint portion and information for controlling the driving of the attachment.

Moreover, the communication unit 232 transmits information regarding the state of the cooking arm 51 to the controller 201 as appropriate. The information regarding the state of the cooking arm 51 includes information indicating a driving state of each joint portion, which is represented by the detection result of the sensor 233, and the like.

Thus, the communication unit 232 is connected to the controller 201 serving as the control device on the main body side of the robotic kitchen 1 and functions as a connection unit that transmits and receives various types of information to/from the controller 201.

The sensor 233 is constituted by a gyro sensor, an acceleration sensor, a touch sensor, and the like, for example. During operation of the cooking arm 51, the sensor 233 detects angular velocity, acceleration, or the like of each joint portion and outputs information representing the detection result to the controller 231.

Moreover, the sensor 233 also detects the user's contact state to each member of the cooking arms 51 during operation of the cooking arms 51 and outputs information representing the user's contact state to the controller 231. For example, the sensor 233 detects the contact state of the user performing a task in collaboration with the cooking arms 51.

The information representing the detection result of the sensor 233 is, as appropriate, output to the communication unit 232 from the controller 231 and transmitted to the controller 201 on the main body side. Based on the information detected by the sensor 233, the operation of the cooking arm 51 is controlled by the controller 201.

In addition to operating in accordance with the control of the controller 201, autonomous operating functions may be provided in the cooking arms 51.

The motor 234 is provided at each joint. The motor 234 performs a rotational operation about the axis in accordance with the control of the controller 231. The motor 234 functions as a drive unit that drives in accordance with the control of the controller 231.

An encoder that detects the amount of rotation of the motor 234, a driver that adaptively controls the rotation of the motor 234 on the basis of a detection result of the encoder is also provided in each joint portion.

### - Functional Configuration

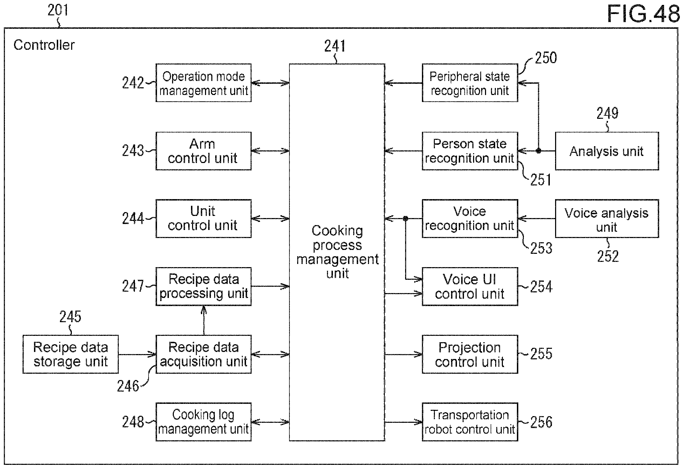

Fig. 48 is a block diagram showing a functional configuration example of the controller 201 of Fig. 46.

At least some of the functional units shown in Fig. 48 are realized by executing the predetermined program through the CPU of the computer constituting the controller 201.

A cooking process management unit 241, an operation mode management unit 242, an arm control unit 243, a unit control unit 244, a recipe data storage unit 245, a recipe data acquisition unit 246, a recipe data processing unit 247, a cooking log management unit 248 are realized in the controller 201. An analysis unit 249, a peripheral state recognition unit 250, a person state recognition unit 251, a voice analysis unit 252, a voice recognition unit 253, a voice UI control unit 254, a projection control unit 255, and a transportation robot control unit 256 are also realized in the controller 201.

The cooking process management unit 241 controls each unit in accordance with a cooking process described in the recipe data. The control on each unit by the cooking process management unit 241 is performed as appropriate in accordance with recognition results of the peripheral state recognition unit 250, the person state recognition unit 251, and the voice recognition unit 253.

The operation mode management unit 242 manages the operation mode of the robotic kitchen 1. The operation mode management unit 242 controls the top plate driving unit 204 to deform the robotic kitchen 1 in accordance with the operation mode.

For example, when the operation mode of the robotic kitchen 1 is a sleep mode, the operation mode management unit 242 causes the cooking assistance system 31 or the like to be housed inside the housing 11 as described with reference to Fig. 8 and the like.

Moreover, when the person state recognition unit 251 recognizes that a particular user is nearby, the operation mode management unit 242 switches the operation mode of the robotic kitchen 1 from the sleep mode to the active mode. The operation mode management unit 242 lifts the cooking assistance system 31 together with the top plate 21B to expose the cooking assistance space of the cooking assistance system 31, the groove portion 101, and the like.

The arm control unit 243 controls the position on the rail 102 of the cooking arm 51 by driving the arm movement control unit 202.

Moreover, the arm control unit 243 controls the attitude and operation of the cooking arm 51 by driving each joint portion of the cooking arm 51.

The arm control unit 243 controls the driving of the attachment attached to the cooking arm 51.

The unit control unit 244 controls the driving of the unit of each unit. Each cooking assistance unit constituting the cooking assistance system 31, each device of the washing unit 203, the waste treatment device 122, the arm function control device 133, and the like are driven in accordance with the control of the unit control unit 244.

The recipe data storage unit 245 stores recipe data describing a cooking process. The recipe data storage unit 245 is realized as a memory of the controller 201.

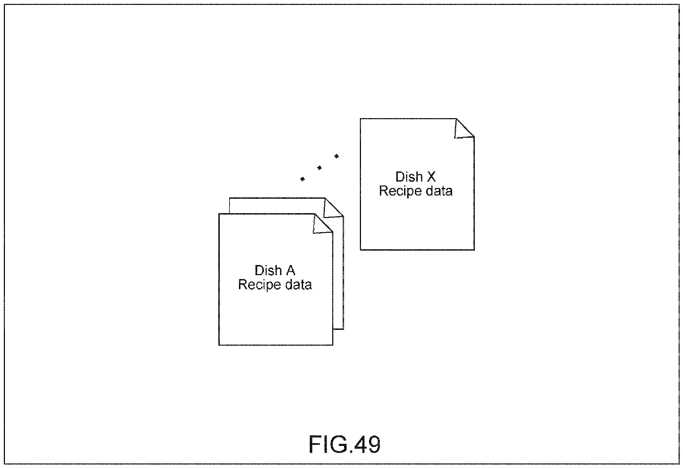

For starting the cooking, the recipe data acquisition unit 246 reads and acquires the recipe data for the dish from the recipe data storage unit 245. As shown in Fig. 49, the recipe data is prepared for each dish.

Which dish to make is selected by the user from a menu projected by the projector 208, for example.

Moreover, it is also possible to select which dish to make in accordance with food ingredients prepared in the cooking assistance system 31. In this case, ingredients prepared in the cooking assistance system 31 are recognized by the peripheral state recognition unit 250 and the cooking process management unit 241 selects a dish that can be made from the food ingredients prepared in the cooking assistance system 31.

Which dish to make may be selected in a manner that depends on the person who eats the dish. In this case, the person who is present near the robotic kitchen 1 is recognized by the person state recognition unit 251 and the cooking process management unit 241 selects the dish that matches the preference of the recognized person. In the cooking process management unit 241, information regarding the preference of a person living in a house where the robotic kitchen 1 is installed is registered. In this case, the cooking using the cooking arms 51 is performed in accordance with the preference of the person who eats the dish.

The cooking process management unit 241 may select the dish according to attributes of the person who eats the dish, such as gender and age or may select the dish according to characteristics of the person who eats the dish, such as personality and mood. The attributes or characteristics of the person who eats the dish are also recognized by the person state recognition unit 251.

The cooking process management unit 241 may select the dish according to the timing of eating the dish, such as a season, a temperature, and a time zone.

The recipe data acquisition unit 246 reads and acquires recipe data for the dish selected to be made from the recipe data storage unit 245 and outputs the recipe data to the cooking process management unit 241. The recipe data acquired by the recipe data acquisition unit 246 is also output to the recipe data processing unit 247 as necessary.

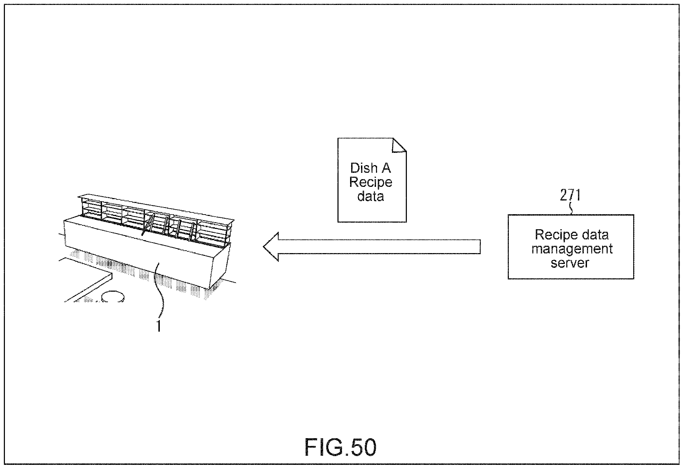

The recipe data may be acquired from the server connected via the Internet as shown in Fig. 50 rather than acquired from the recipe data storage unit 245 in the robotic kitchen 1.

In the recipe data management server 271 shown in Fig. 50, various types of recipe data are managed. Recipe data corresponding to the request from the recipe data acquisition unit 246 is transmitted to the robotic kitchen 1 from the recipe data management server 271 and is acquired by the recipe data acquisition unit 246.

The recipe data processing unit 247 processes the recipe data supplied from the recipe data acquisition unit 246 and outputs the processed recipe data to the cooking process management unit 241. The processing of the recipe data will be described later.

The cooking log management unit 248 manages a cooking log which is a history of cooking performed in the robotic kitchen 1. The cooking log records, for example, information regarding people who ate dishes, information regarding dishes made in the robotic kitchen 1, and information regarding cooking that represents processes by which the robotic kitchen 1 made the dishes.

The analysis unit 249 analyzes the image captured by the camera 206 and the detected data of the sensor 210. An analysis result of the analysis unit 249 is supplied to the peripheral state recognition unit 250 and the person state recognition unit 251.

The peripheral state recognition unit 250 recognizes a peripheral state on the basis of the analysis result of the analysis unit 249. The recognition result of the peripheral state is output to the cooking process management unit 241.

For example, the peripheral state recognition unit 250 recognizes a state of the cooking assistance system 31, such as the types and amount of food ingredients, the type and number of tableware, the type and number of cutlery, and the types of attachments prepared in the cooking assistance system 31. Moreover, when cooking with heat is performed in the cooking assistance unit 31-5 or the cooking assistance unit 31-6 of the cooking assistance system 31, the peripheral state recognition unit 250 also recognizes a state of the food ingredient when cooked with heat as the state of the cooking assistance system 31.

The peripheral state recognition unit 250 recognizes a state of the cooking arm 51, such as a position and an operation of each cooking arm 51 and a state of the food ingredient handled by the cooking arm 51.

When the transportation robot 2 performs transportation, the peripheral state recognition unit 250 recognizes a state of the transportation robot 2, such as a position and an attitude of the transportation robot 2.

The person state recognition unit 251 recognizes a state of the person on the basis of the analysis result of the analysis unit 249. In addition to the movement of the person, the person's gender, age, height, expression, emotion, progress of the meal, and the like are also recognized. The recognition result of the state of the person is output to the cooking process management unit 241.

For example, when performing a task in collaboration with the user, the person state recognition unit 251 recognizes a state of the task of the user, such as a standing position of the user and a movement of each site of the user's body.

As described with reference to Fig. 3, in a case where the robotic kitchen 1 performs the continuation of the task performed by the user, the cooking process management unit 241 learns the task performed by the user on the basis of a recognition result of the person state recognition unit 251. The cooking process management unit 241 controls the arm control unit 243 and the like, such that the continuation of the task is performed.

Moreover, in a case where the user performs tasting as described with reference to Fig. 4, the person state recognition unit 251 recognizes the result of tasting. Whether or not the user who performed the tasting feels delicious may be recognized on the basis of the user's expression.

The state of the user's task recognized by the person state recognition unit 251 is also used in the cooking process management unit 241 to secure the user's safety, to determine whether the user is performing the task incorrectly, or the like.

For example, in a case where the cooking arm 51 to which the knife attachment 653 is attached is performing the task, the range of motion of the cooking arm 51 is set as a dangerous area. The safety of the user is secured by outputting a warning or stopping the task of the cooking arm 51 when the user's body is present in the vicinity of the dangerous area. Since the task is performed in collaboration with the user, it is necessary to give consideration to such security.

Moreover, the person state recognition unit 251 recognizes a state of the person who is present near the robotic kitchen 1, such as the number of people who eat the dish, attributes of the person who eats the dish, and the like. For example, the person who is present near the robotic kitchen 1 is considered as the person who eats the dish.

The recognition of the peripheral state by the peripheral state recognition unit 250 and the recognition of the person state by the person state recognition unit 251 may be performed by using an analysis result of a voice detected by the microphone 207.

The voice analysis unit 252 analyzes the user's voice detected by the microphone 207 and outputs the analysis result to the voice recognition unit 253.

The voice recognition unit 253 recognizes the content of the user's utterance on the basis of the analysis result of the voice analysis unit 252. For example, a request to the robotic kitchen 1 is input by voice. The recognition result of the content of the user's utterance is output to the cooking process management unit 241 and the voice UI control unit 254.

The voice UI control unit 254 determines the content of a response to the user's utterance on the basis of the recognition result of the voice recognition unit 253 and outputs a synthesized voice from the speaker 209. Moreover, the voice UI control unit 254 outputs various synthesized voices of an inquiry to the user and the like from the speaker 209 in accordance with the control of the cooking process management unit 241.

The projection control unit 255 controls the projection by the projector 208.

The transportation robot control unit 256 controls the communication unit 211 to communicate with the transportation robot 2 and controls the operation of the transportation robot 2.

For example, for transporting the completed dish, the transportation robot control unit 256 sets the position of the person to whom the dish is to be delivered as a destination. The position of the person to whom the dish is to be delivered is determined on the basis of, for example, the recognition result of the person state recognition unit 251.

Moreover, the transportation robot control unit 256 sets a movement route to the destination. Results of recognition of an obstacle and the like by the peripheral state recognition unit 250 are used for setting the movement route. The transportation robot control unit 256 transmits information regarding the destination and the movement route to the transportation robot 2 for transporting the dish.

### <Recipe Data>

Here, recipe data describing the operation of each unit at the time of cooking will be described.

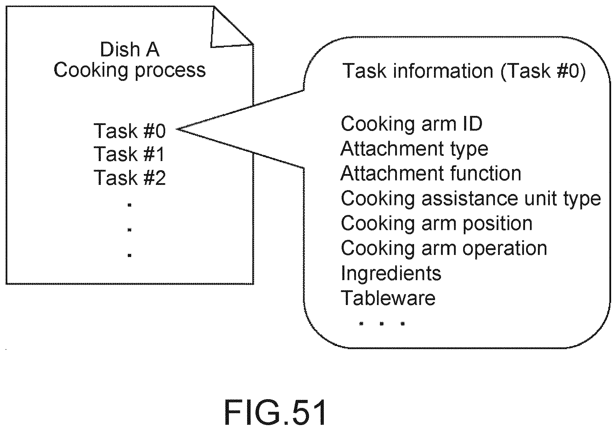

Fig. 51 is a diagram showing an example of the description of the recipe data.

As shown in Fig. 51, information regarding the cooking process of a dish A is described in the recipe data for the dish A. The cooking process represents the order of tasks. Types of tasks constituting the cooking process include a task performed by the robotic kitchen 1 (cooking arm 51) alone, a task performed in collaboration with the user, a transportation task performed by the transportation robot 2, and the like.

Hereinafter, as appropriate, the task performed by the robotic kitchen 1 alone will be referred to as a solo task and the task performed in collaboration with the user will be referred to as a collaborative task. The transportation task by the transportation robot 2 will be referred to as a transportation task.

The information regarding the cooking process includes a plurality of pieces of task information which is information regarding the task.

In the example in Fig. 51, task information regarding a task #0, task information regarding a task #1, and task information regarding a task #2, ... are described in the order of tasks.

As shown in the blowout, one piece of task information includes information regarding a cooking arm ID, an attachment type, an attachment function, a cooking assistance unit type, a cooking arm position, a cooking arm operation, ingredients, and tableware.

The cooking arm ID is an identifier of the cooking arm 51 that performs the task. Based on the cooking arm ID, the cooking arm 51 in charge of the task is determined. In a case where the plurality of cooking arms 51 performs a single task in cooperation with each other, a plurality of cooking arm IDs is described in the task information of the task.

The attachment type represents the type of attachment used for the task. The attachment represented by the attachment type is attached to the cooking arm 51 in charge of the task.

The attachment function represents functions of the attachment used for the task, such as supply of water and suction of the air.

The cooking assistance unit type represents the type of cooking assistance unit used for the task. For example, in a case of preparing tableware, the use of the cooking assistance unit 31-4 in which the tableware is stored is specified by the type of cooking assistance unit.

The cooking arm position represents a position on the rail 102 of the cooking arms 51 when performing the task. The position of the cooking arm 51 is controlled to move to a position represented by the cooking arm position.

The cooking arm operation represents the operation of the cooking arm 51 when performing the task. Specifically, the operation of the cooking arm 51 is represented by a time series of angles of each joint, torque of the motor 234 that drives the joint, and the like. Each portion of the cooking arm 51 is controlled to perform an operation represented by the cooking arm operation.

The ingredients represent ingredients such as seasonings and food ingredients used in the task.

The tableware represents tableware, cutlery, and the like used in the task.

Such various types of information are described in the task information as information regarding each task.

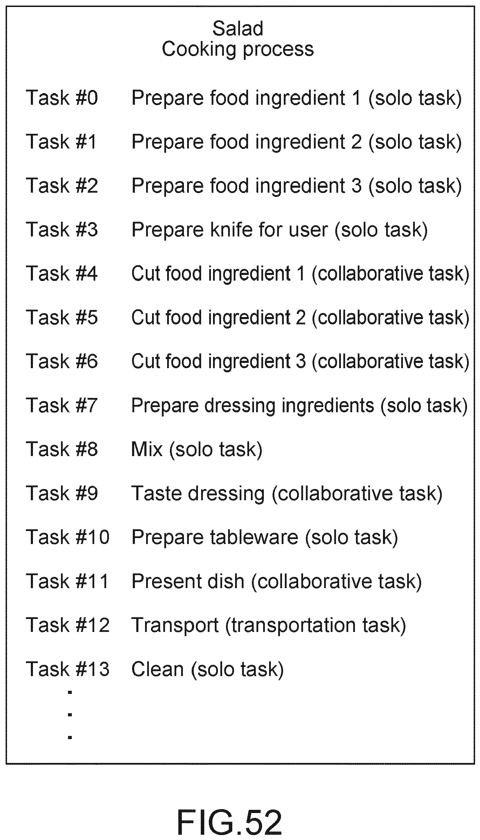

Fig. 52 is a diagram showing a specific example of the description of the recipe data.

The cooking process shown in Fig. 52 is a cooking process related to "salad". In the example of Fig. 52, tasks #0 to #13 are shown as the cooking process related to the "salad".

The task #0 is a task of preparing a food ingredient 1. The task #0 is a solo task performed by the robotic kitchen 1 alone.

In accordance with the description of the task information of the task #0, for example, the cooking arm 51-1 to which the manipulator attachment 651 is attached takes the food ingredient 1 which is a first food ingredient out of the cooking assistance system 31 and places the food ingredient 1 on the top plate 21A.

The task #1 is a solo task of preparing a food ingredient 2 which is a second ingredient. Like the task #0, the food ingredient 2 is prepared in accordance with the description of the task information of the task #1.

The task #2 is a solo task of preparing a food ingredient 3 which is a third ingredient. As in the task #0, the food ingredient 3 is prepared in accordance with the description of the task information of the task #2.

The "salad" made on the basis of the recipe data of Fig. 52 is a dish using three kinds of food ingredients.

Each operation is performed in parallel with other tasks as necessary. The task described later in the cooking process may be performed before the task described earlier in a manner that depends on the state of the cooking arm 51.

The task #3 is a solo task of preparing a knife for the user.

In accordance with the description of the task information of the task #3, for example, the cooking arm 51-1 to which the manipulator attachment 651 is attached takes the knife for the user out of the cooking assistance system 31 and presents the knife to the user. The user receives the presented knife.

The task #4 is a task of learning the user's movement of cutting the food ingredient 1 and cutting the food ingredient 1 by the same movement as the user's movement. The task #4 is a collaborative task performed in collaboration with the user.

In accordance with the description of the task information of the task #4, for example, a notification for prompting the user to cut the food ingredient 1 is made. Information regarding such a notification is described in the task information of the collaborative task.

The notification to the user is made, for example, by projecting predetermined information through the projector 208 or by outputting a synthesized voice from the speaker 209.

The notification to the user may be made by causing an LED provided at a predetermined position in the top plate 21A to emit light. The notification to the user may be made by sending information to the user's portable terminal and displaying the information on the screen.

In response to the notification from the robotic kitchen 1, the user cuts the food ingredient 1 by using the knife.

While the user cuts the food ingredient 1, the user's movement is recognized by the person state recognition unit 251 and learning is performed. When the learning is completed, the user is notified of the completion of the learning. The user who has received this notification can leave the continuation of the cutting of the food ingredient 1 up to the robotic kitchen 1.

In a case where it is requested by the user to perform the continuation of the cutting of the food ingredient 1, the food ingredient 1 is cut by the same movement as the movement of the user by the cooking arm 51-2 to which the knife attachment 653 is attached, for example.

The task #5 is a collaborative task of cutting the food ingredient 2. As in the task #4, the user's movement of cutting the food ingredient 2 is learned and the cutting of the food ingredient 2 is taken over by the cooking arm 51 on the basis of the learning result.

The task #6 is a collaborative task of cutting the food ingredient 3. As in the task #4, the user's movement of cutting the food ingredient 3 is learned and the cutting of the food ingredient 3 is taken over by the cooking arm 51 on the basis of the learning result.

The task #7 is a solo task of preparing ingredients of dressing.

In accordance with the description of the task information of the task #7, for example, the cooking arm 51-1 to which the manipulator attachment 651 is attached takes a seasoning out of the cooking assistance system 31. Moreover, the cooking arm 51-3 to which the shaker attachment 655 is attached opens the cover portion of the shaker attachment 655 and moves the shaker attachment 655 close to the cooking arm 51-1 gripping the seasoning. As described above, the task #7 is a task performed by the plurality of cooking arms 51 in cooperation with each other.

After the cooking arm 51-3 moves the shaker attachment 655 close to it, the cooking arm 51-1 pours the seasoning into the shaker attachment 655. Thus, for example, a plurality of seasonings may be sequentially poured into the shaker attachment 655.

The task #8 is a solo task of mixing the poured seasonings as ingredients of the dressing.

In accordance with the description of the task information of the task #8, for example, the cooking arm 51-3 shakes the shaker attachment 655 and mixing the seasonings poured into the shaker attachment 655. Olive oil and the like are also supplied into the shaker attachment 655 from the cooking arm 51-3.

The task #9 is a task of tasting the dressing. The task #9 is a collaborative task.

In accordance with the description of the task information of the task #9, for example, the cooking arm 51-3 presents the shaker attachment 655 with the cover opened to the user. Moreover, a notification for prompting to have a taste is made. In response to the notification from the robotic kitchen 1, the user tastes the dressing.

For example, when the user makes an utterance indicating that the taste is not bad, the task of tasting is completed.

The task #10 is a solo task of preparing tableware.

In accordance with the description of the task information of the task #10, for example, the cooking arm 51-1 to which the manipulator attachment 651 is attached takes a plate for presenting the salad out of the cooking assistance system 31 and places the plate on the top plate 21A.

The task #11 is a collaborative task to present the salad.

In accordance with the description of the task information of the task #11, the user is prompted to present the cut ingredients 1, 2, and 3 on the tableware. In response to the notification from the robotic kitchen 1, the user presents the cut ingredients 1, 2, and 3 on the plate.

In a case where it is determined on the basis of the recognition result of the person state recognition unit 251 that the presentation of the food ingredients has been completed, for example, the cooking arm 51-3 performs an operation of putting the dressing in the shaker attachment 655 on the salad.

The task #12 is a task of transporting the salad. The task #12 is a transportation task by the transportation robot 2.

In accordance with the description of the task information of the task #12, the position of the transportation robot 2 is controlled by the transportation robot control unit 256. In accordance with the control of the transportation robot control unit 256, the transportation robot 2 moves to a transportation reference position set as a position that the cooking arm 51 can reach, for example.

Such information regarding the control of the transportation robot 2 is described in the task information of the transportation task. The information regarding the destination and the movement route is transmitted to the transportation robot 2 from the transportation robot control unit 256.

Moreover, in accordance with the description of the task information of the task #12, for example, the cooking arm 51-1 to which the manipulator attachment 651 is attached grips the plate on which the salad is presented and places the plate on the top plate of the transportation robot 2. After the plate is placed on the top plate, the transportation robot 2 starts the transportation.

The task #13 is a cleaning task. The task #13 is a solo task.

In accordance with the description of the task information of the task #13, for example, the cooking arm 51-4 to which the cleaner attachment 658 is attached introduces the remains of the cut food ingredients into the groove portion 101. Moreover, the surface of the top plate 21A is washed with hot water or steam.

The cooking of the "salad" is performed by the cooking process including the series of tasks described above. Information for achieving each task as described above is described in each piece of recipe data.

The content of each task changes in accordance with various conditions such as a condition of the person who eats the dish. Even in a case of making the same dishes, for example, the more people eat the dishes, the more food ingredients are needed and the more times the same task is repeated.

As recipe data of one dish, for example, a plurality of pieces of recipe data having different description contents in a manner that depends on a combination of conditions is prepared.

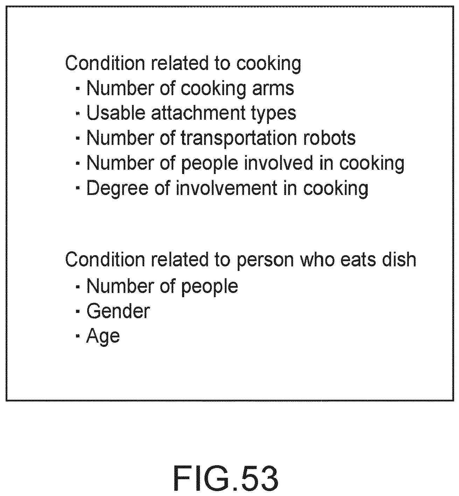

Fig. 53 is a diagram showing examples of conditions under which the description contents of the recipe data are determined.

As shown in Fig. 53, the conditions under which the description contents of the recipe data are determined include a condition related to the cooking and a condition related to the person who eats the dish.

The condition related to the cooking includes, for example, the number of cooking arms 51, the usable attachment types, the number of transportation robots 2, the number of users involved in the cooking, and the degree of involvement in the cooking.

The number and types of tasks that can be performed simultaneously vary in a manner that depends on the number of cooking arms 51.

Moreover, the type of task that can be performed varies in a manner that depends on the type of attachment prepared in the cooking assistance system 31.

The number and amount of dishes and the like that can be transported at the same time vary in a manner that depends on the number of transportation robots 2. In the above example was assumed that two transportation robots 2 are prepared, sometimes only one is prepared, or three or more transportation robots 2 by purchasing additional may be prepared.

The number and types of collaborations that can be performed simultaneously vary in a manner that depends on the number of users involved in the cooking.

The number, contents, and percentage of collaborative tasks vary in a manner that depends on the degree of involvement in the cooking. For example, the higher the degree of involvement, the greater the number of collaborative task or the more advanced task is required for the user.

As described above, the user can select the degree of involvement by himself or herself. The degree of involvement is selected at a predetermined timing, for example, before the start of cooking.

The condition related to the person who eats the dish includes the number, gender, and age of people who eats the dish.

The amount of food ingredients required, the number of times the same task is repeated, the degree of seasoning, a presentation method, a transportation method, and the like vary in a manner that depends on these conditions.

Various conditions represented by information that can be acquired as information about the user, such as schedule information regarding the schedule of the person who eats the dish and biometric information, as well as conditions related to the outer appearance such as weight and height may be included as the condition related to the person who eats the dish.

For example, in a case where the time available for eating is short due to a plan, the cooking is performed by reducing the amount of food ingredients. Moreover, in a case where the blood pressure represented by the biometric information is high, the cooking is performed with reduced salt.

A plurality of pieces of recipe data whose description content differs in a manner that depends on such a combination of conditions are prepared as recipe data for each dish. For example, as recipe data for the dish A, pieces of data having different description contents which are as many as the number of combinations of conditions are prepared.

In a case where the dish to be made is selected, the recipe data acquisition unit 246 of Fig. 48 reads and acquires recipe data of the pieces of recipe data for the selected dish, which corresponds to the conditions, from the recipe data storage unit 245.

Instead of preparing a plurality of pieces of recipe data corresponding to the conditions in advance, recipe data corresponding to the conditions may be generated on the basis of one piece of recipe data serving as a reference.

In this case, the recipe data processing unit 247 processes one piece of recipe data serving as the reference acquired by the recipe data acquisition unit 246 to generate recipe data corresponding to the conditions.

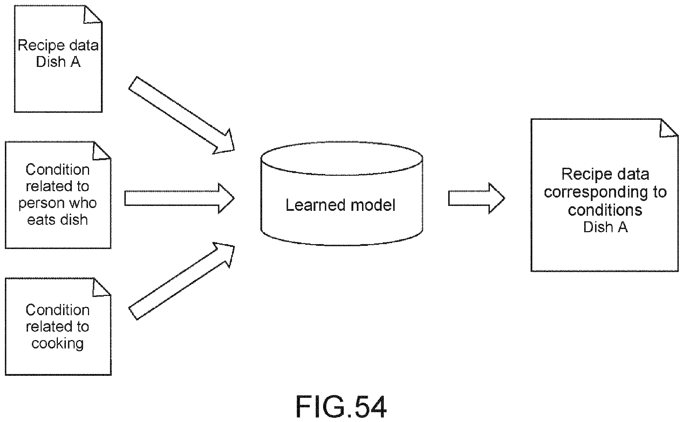

Fig. 54 is a diagram showing an example of processing the recipe data.

The learned model shown in Fig. 54 is a model for outputting recipe data corresponding to the conditions, using the condition related to the cooking, the condition related to the person who eats the dish, and the recipe data as inputs. For example, machine learning is performed by using various types of recipe data and conditions as inputs and a learned model is generated. Conditions other than the condition related to the cooking and the condition related to the person who eats the dish may be used for learning the model.

In a case where it is selected to make the dish A, the recipe data processing unit 247 inputs the recipe data for the dish A serving as a reference to a learned model together with the condition related to the cooking and the condition related to the person who eats the dish. The recipe data processing unit 247 acquires recipe data output as an estimation result as recipe data for the dish A, which corresponds to the conditions.

Such a model may be prepared in the recipe data processing unit 247 to process the recipe data.

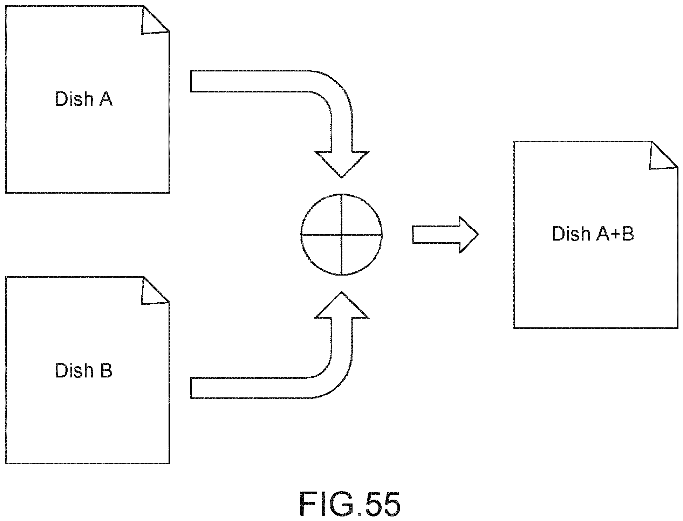

Fig. 55 is a diagram showing another example of processing the recipe data.

In a case of making a plurality of kinds of dishes, it is possible to make the dishes simultaneously by proceeding the tasks in parallel, instead of making the dishes sequentially one by one. The content of each task varies in a manner that depends on a combination of dishes made simultaneously.

For example, when it is selected to make dishes A and B, the recipe data processing unit 247 merges recipe data for the dish A and recipe data for the dish B to generate recipe data for making the dishes A and B as shown in Fig. 55.

In the recipe data after the merge, the tasks for making the dish A and the tasks for making the dish B are combined one after the other.

In a manner that depends on the number of cooking arms 51 and the usable attachment types, other tasks for making the dish B can be performed in some cases while a certain task for making the dish A is performed.

In a case of making a plurality of kinds of dishes, the robotic kitchen 1 can shorten the cooking time by changing the description contents of the recipe data such that the tasks for making the respective dishes are performed in parallel as necessary.

### <<3. Operation of Robotic Kitchen>>

Here, the operation of the robotic kitchen 1 having the above-mentioned configuration will be described.

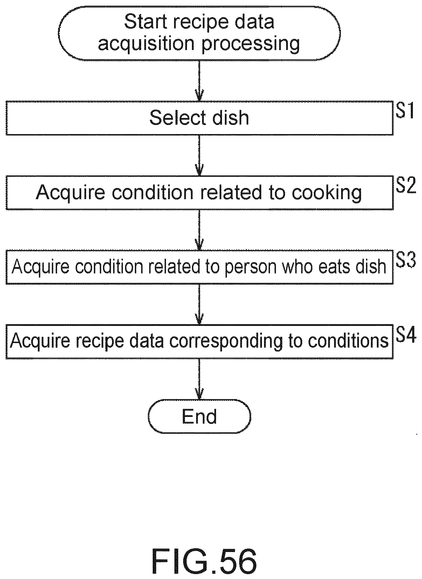

First, the processing of the robotic kitchen 1 that acquires the recipe data will be described with reference to the flowchart of Fig. 56.

In Step S1, the cooking process management unit 241 selects which dish to make.

In Step S2, the cooking process management unit 241 acquires the condition related to the cooking. Here, conditions such as the number of cooking arms 51 and the usable attachment types are detected and acquired.

In Step S3, the cooking process management unit 241 acquires the condition related to the person who eats the dish. Here, conditions such as the number, gender, age, and the like of people are detected and acquired.

In the acquisition of the condition related to the cooking and the acquisition of the condition related to the person who eats the dish, the recognition result of the peripheral state by the peripheral state recognition unit 250, the recognition result of the state of the person by the person state recognition unit 251, and the like are used as appropriate. The information regarding the dish selected to be made and the information regarding the conditions acquired by the cooking process management unit 241 are supplied to the recipe data acquisition unit 246.

In Step S4, the recipe data acquisition unit 246 reads and acquires recipe data corresponding to the conditions from the recipe data storage unit 245. The recipe data corresponding to the conditions may be generated by the recipe data processing unit 247 by performing the processing as described above.

The recipe data acquired by the recipe data acquisition unit 246 is supplied to the cooking process management unit 241, and then used for the cooking.

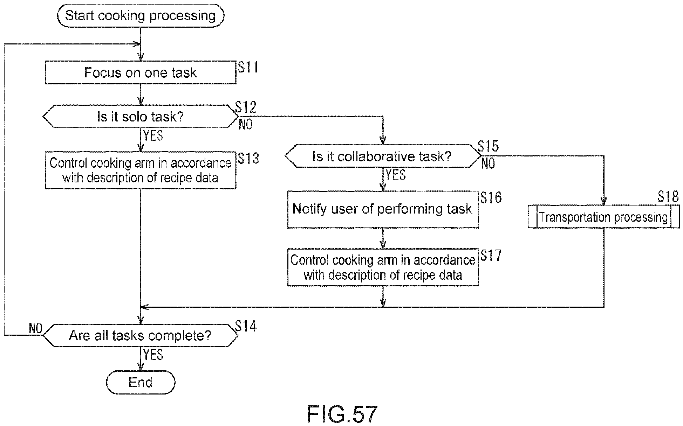

Next, the processing of the robotic kitchen 1 that performs the cooking will be described with reference to the flowchart of Fig. 57.

The processing of Fig. 57 is started at a predetermined timing such as a timing at which it is detected that the user who performs the collaborative task is present near the robotic kitchen 1, for example.

In Step S11, the cooking process management unit 241 focuses on one task described in the recipe data.

In Step S12, the cooking process management unit 241 determines whether or not the focused task is a solo task performed by the robotic kitchen 1 alone.

In a case where it is determined in Step S12 that the focused task is the solo task, the arm control unit 243 controls the position and operation of each cooking arm 51 in accordance with the description of the recipe data in Step S13. The task information of the focused task is supplied to the arm control unit 243 from the cooking process management unit 241.

In Step S14, the cooking process management unit 241 determines whether or not all the tasks are complete. In a case where it is determined in Step S14 that all the tasks are not complete, the cooking process management unit 241 returns to Step S11, focuses on the next task, and repeats the subsequent processing.

In a case where it is determined in Step S12 that the focused task is not the solo task, the cooking process management unit 241 determines whether or not the focused task is a collaborative task performed in collaboration with the user in Step S15.

In a case where it is determined in Step S15 that the focused task is the collaborative task, the cooking process management unit 241 controls the voice UI control unit 254 and the projection control unit 255, for example, to notify the user of performing a predetermined task in Step S16.

After the task is performed by the user, the arm control unit 243 controls the position and operation of each cooking arm 51 in accordance with the description of the recipe data in Step S17. Accordingly, the collaborative task by the user and the robotic kitchen 1 is performed.

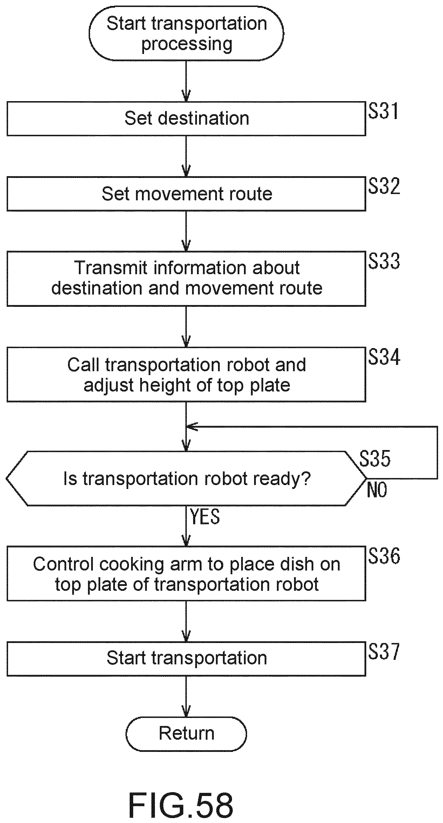

In a case where it is determined in Step S15 that the focused task is not the collaborative task, transportation processing which is processing of transporting the dish and the like is performed in Step S18. The details of the transportation processing will be described later with reference to the flowchart of Fig. 58.

After the collaborative task is performed in Step S17 or after the transportation processing is performed in Step S18, the processing proceeds to Step S14. In a case where it is determined in Step S14 that all the tasks are complete, the processing ends.

Next, the transportation processing performed in Step S18 of Fig. 57 will be described with reference to the flowchart of Fig. 58.

The transportation processing is started at a predetermined timing, for example, when a dish that is an object to be transported is prepared.

In Step S31, the transportation robot control unit 256 sets a destination. In a case of transporting the completed dish, the position of the person to whom the dish is to be delivered is set as the destination.

In Step S32, the transportation robot control unit 256 sets a movement route to the destination. For example, the movement route is set to avoid obstacles recognized by the peripheral state recognition unit 250.

In Step S33, the transportation robot control unit 256 transmits information regarding the destination and the movement route to the transportation robot 2.

In Step S34, the transportation robot control unit 256 calls (moves) the transportation robot 2 to the transportation reference position set in advance and causes the transportation robot 2 to adjust the height of the top plate to be a height that the cooking arm 51 can reach.

In a case of a state housed in the housing 11, the transportation robot 2 is moved out as described with reference to Figs. 23 and 24 and moves to the transportation reference position.

In Step S35, the transportation robot control unit 256 determines whether or not the transportation robot 2 is ready and waits until it is determined that the transportation robot 2 is ready. When the transportation robot 2 is present in the transportation reference position and the height of the top plate is adjusted to the height that the cooking arm 51 can reach, it is determined that the transportation robot 2 is ready.

In Step S36, for example, the arm control unit 243 controls the cooking arm 51 to which the manipulator attachment 651 is attached and places the dish on the top plate of the transportation robot 2.

After the dish is placed on the top plate, the transportation robot control unit 256 starts the transportation in Step S37. Thereafter, the processing returns to Step S18 in Fig. 57 and the subsequent processing is performed.

Through the above-mentioned series of processing, the robotic kitchen 1 can make the dish by performing some of the tasks in collaboration with the user.

The user can perform a pleasant task by himself or herself and leave a troublesome task such as a simple task up to the robotic kitchen 1.

The user can feel the real fun of cooking by selecting the degree of involvement by himself or herself.

For example, even a task easy and pleasant for other users can be a task difficult and unpleasant for that user. The user can perform only tasks that the user can feel pleasant and enjoy cooking by preventing such a task by setting the degree of involvement to be low, for example.

Moreover, a user having a high level of skill can perform a complicated task by himself or herself and enjoy cooking by setting the degree of involvement to be high.

The robotic kitchen 1 and the user achieve entertainment cooking.

### <<4. Other Functions>>

### - Abandonment of Collaborative Task

When the user who has started a task requested as the collaborative task does not wish to perform the task, the user may be able to leave the continuation of the task up to the robotic kitchen 1.

When the user does not wish to perform the task, the user makes an utterance, for example, "I will leave the remaining task up to you" to leave the continuation of the task up to the robotic kitchen 1. When it is recognized that the user has trouble with the task, the robotic kitchen 1 may ask a question to the user, for example, "Shall I perform the remaining task instead of you?"

In the robotic kitchen 1, the control of the cooking arm 51 and the like for performing the continuation of the task are performed in response to such interaction. The task information of the collaborative task also describes information regarding the operation in a case where the task is abandoned.

### - Movement of Top Plate

Although it is assumed that a part of the top plate unit 21 is moved in accordance with switching of the operation mode, a part of the top plate unit 21 may be moved in accordance with the cooking process described in the recipe data.

In this case, it may be possible to close the top plate 21B while the cooking arm 51 is out of the groove portion 101. Thus, the cooking arms 51 are arranged are in the center of the flat top plate unit 21 in which the top plate 21A and the top plate 21B are at the same height.

Accordingly, a large task space can be secured and it is possible to cause the cooking arms 51 to perform tasks using such a large task space.

### <<5. Details of Transportation Robot>>

### <Outer Appearance Configuration>

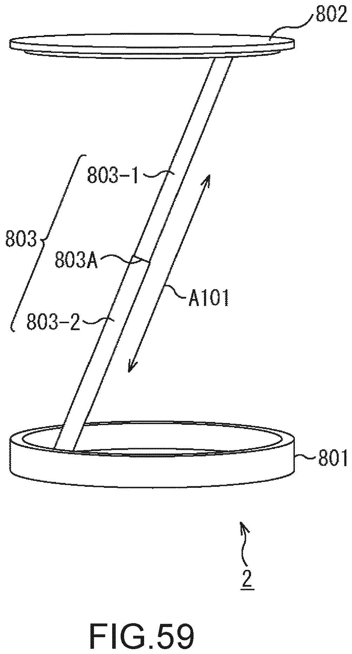

Fig. 59 is a diagram showing the outer appearance of the transportation robot 2 in an enlarged state.

As shown in Fig. 59, the transportation robot 2 is configured by coupling an annular base portion 801 and a circular thin plate-like top plate 802 with a thin rod-like support arm 803. A plurality of tires is provided on the side of the bottom surface of the base portion 801. The base portion 801 functions as a movement unit that achieves the movement of the transportation robot 2.

The radial length of the base portion 801 and the radial length of the top plate 802 are substantially the same length. In a case where the top plate 802 is located substantially directly above the base portion 801, the support arm 803 is in an oblique state as shown in Fig. 59.

The support arm 803 is constituted by an arm member 803-1 and an arm member 803-2. The diameter of the arm member 803-1 on the top plate 802 side is significantly smaller than the diameter of the arm member 803-2 on the base portion 801 side. The length of the support arm 803 is adjusted as indicated by the arrow A101 by housing the arm member 803-1 inside the arm member 803-2 in an extension/contraction portion 803A.

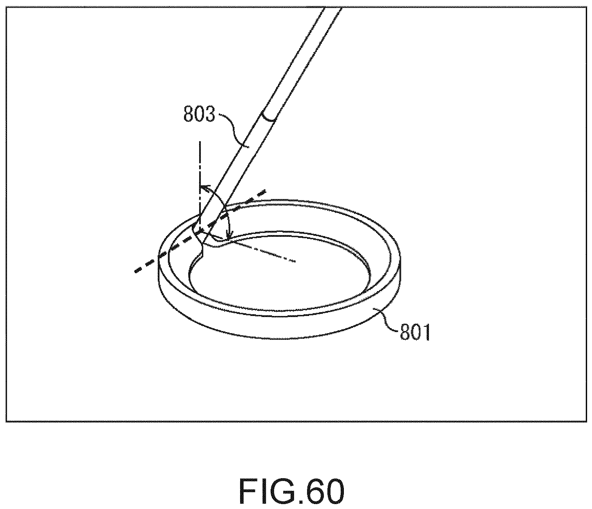

Fig. 60 is a perspective view showing a configuration of a coupling portion between the base portion 801 and the support arm 803.

The angle of the support arm 803 (arm member 803-2) can be adjusted in the coupling portion with the base portion 801, using the axis shown as the broken line as the center. The range of motion of the support arm 803 around the axis is, for example, 90 degrees as shown as the long dashed short dashed line.

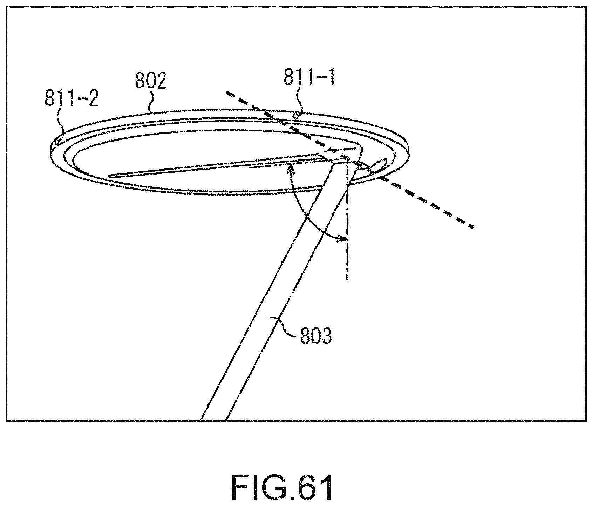

Fig. 61 is a perspective view showing a configuration of the coupling portion between the top plate 802 and the support arm 803.

The coupling portion between the top plate 802 and the support arm 803 (arm member 803-1) is provided at a position near the edge on the side of the bottom surface of the top plate 802. The angle of the support arm 803 can be adjusted at the coupling portion with the top plate 802, using the axis shown as the broken line as the center. The range of motion of the support arm 803 around the axis is, for example, 90 degrees as shown by the long dashed short dashed line.

The thin, circumferential side surface of the top plate 802 is provided with cameras at predetermined intervals. A camera 811-1 and a camera 811-2 are shown in Fig. 61. Based on images taken by the cameras, for example, the peripheral state during movement is recognized.

By adjusting the length and angle of the support arm 803, the transportation robot 2 is capable of changing the attitude as described with reference to Fig. 7. Moreover, the transportation robot 2 can adjust the height of the top plate 802.

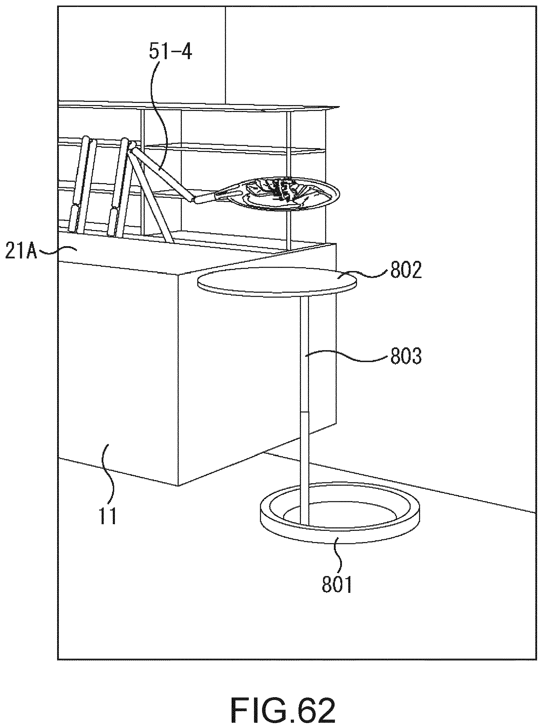

Fig. 62 is a diagram showing an example of the attitude of the transportation robot 2 when placing the dish.

In the example of Fig. 62, the support arm 803 is made substantially vertical and the length is set to be the maximum length, such that the height of the top plate 802 is adjusted to be substantially the same height as the height of the top plate 21A of the robotic kitchen 1.

When the state of the transportation robot 2 is such a state, the cooking arm 51 places the dish. In the example of Fig. 62, the completed dish is placed by the cooking arm 51-4 to which the manipulator attachment 651 is attached. In a manner that depends on the movement of the cooking arm 51-4, the attitude of the transportation robot 2 including the height of the top plate 21A may be controlled.

The transportation robot 2 moves to the position shown in Fig. 62 and changes the attitude at the start of the transportation task in accordance with the control of the transportation robot control unit 256 as described above (Step S34 in Fig. 58).

The position shown in Fig. 62 in the vicinity of the side surface of the housing 11 is a preset transportation reference position as a position for placing the dish or the like. In a case where the transportation robot 2 is present at the transportation reference position, the robotic kitchen 1 can allow the cooking arm 51 to which the manipulator attachment 651 is attached to reach the top plate 802.

Also picking up tableware or the like transportation robot 2 has been collected from the top plate 802 is performed when the transportation robot 2 is present in the transportation reference position.

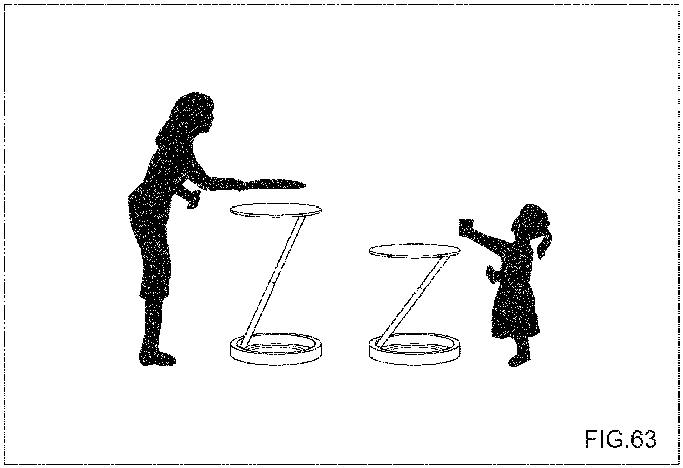

Fig. 63 is a diagram showing another example of the attitude of the transportation robot 2.

The transportation robot 2 has a function of adjusting the height of the top plate 802 in accordance with the height of the person to whom the dish or the like is to be delivered. As shown in Fig. 63, in a case where the person to whom the dish or the like is to be delivered is a child, the height of the top plate 802 is adjusted to be lower than in a case where the person to whom the dish or the like is to be delivered is an adult.

The person who receives the dish or the like transported by the transportation robot 2 can easily receive the transported dish.

The height of the top plate 802 may be adjusted in accordance with the control of the robotic kitchen 1 or may be autonomously adjusted by the transportation robot 2.

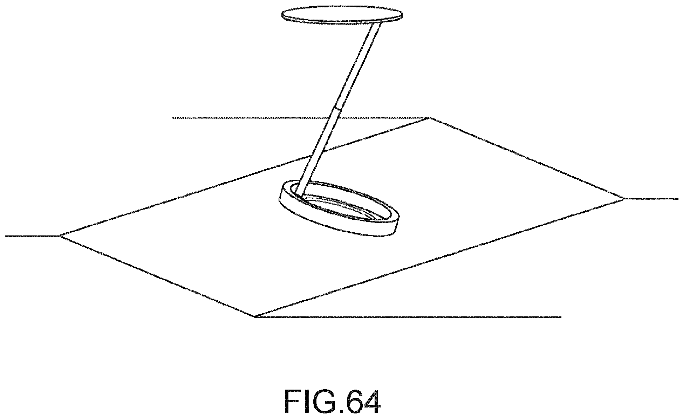

By adjusting each of the angle of the support arm 803 relative to the base portion 801 and the angle of the support arm 803 relative to the top plate 802, the transportation robot 2 can move on a slope while keeping the top plate 802 horizontal as shown in Fig. 64.

### <Internal Configuration>

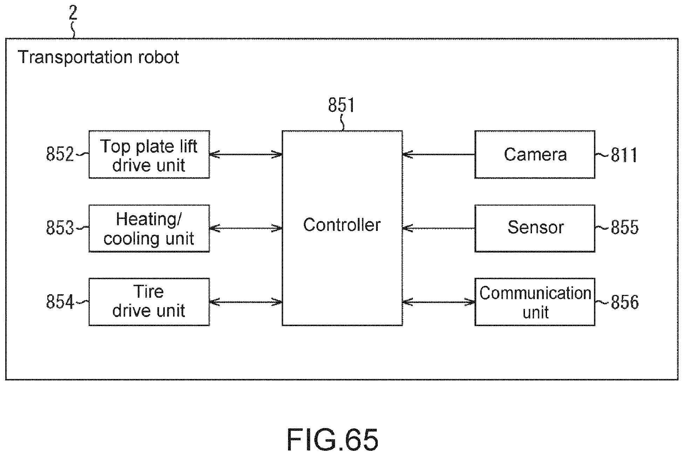

Fig. 65 is a block diagram showing a configuration example of hardware of the transportation robot 2.

The transportation robot 2 is configured by connecting a top plate lift drive unit 852, a heating/cooling unit 853, a tire drive unit 854, a sensor 855, and a communication unit 856 to a controller 851. A camera 811 including the cameras 811-1 and 811-2 is also connected to the controller 851.

The controller 851 includes a CPU, a ROM, a RAM, a flash memory, and the like. The controller 851 executes a predetermined program and controls general operations of the transportation robot 2.

The top plate lift drive unit 852 is constituted by a motor and the like provided in a coupling portion between the base portion 801 and the support arm 803, a coupling portion between the top plate 802 and the support arm 803, and the like. The top plate lift drive unit 852 drives each coupling portion.

Moreover, the top plate lift drive unit 852 is constituted by a rail or a motor provided inside the support arm 803. The top plate lift drive unit 852 extends and contracts the support arm 803.

The heating/cooling unit 853 is a heating device using a heating wire or a cooling device of a predetermined type such as an air-cooled type and a forced-air-cooled type. The heating/cooling unit 853 is provided at a predetermined position such as the inside of the top plate 802 and the side of the bottom surface of the top plate 802.

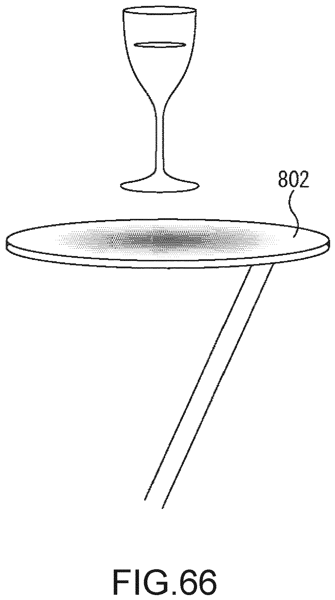

Fig. 66 is a diagram showing an example of temperature adjustment of the top plate 802.

As shown in Fig. 66, in a case of transporting a glass in which a cold drink has been poured, the temperature of the top plate 802 is cooled to a temperature suitable for the drink. Moreover, in a case of transporting a warm dish, the temperature of the top plate 802 is warmed to a temperature suitable for the dish.

The temperature of the top plate 802 is adjusted in advance in accordance with the object to be transported before the object to be transported is placed by the cooking arm 51, for example. Since what is to be placed at what timing can be determined on the basis of the recipe data, it is possible to adjust the temperature in advance.

Returning to the description of Fig. 65, the tire drive unit 854 is constituted by a motor that drives the tires provided on the bottom surface of the base portion 801.

The sensor 855 is constituted by various sensors such as a position measurement sensor, a distance sensor, and a human sensor. Data representing the detection result of the sensor 855 is output to the controller 851.

The communication unit 856 is a wireless communication module such as a wireless LAN module and a portable communication module. The communication unit 856 performs communication with the robotic kitchen 1 and an external device such as a server on the Internet.

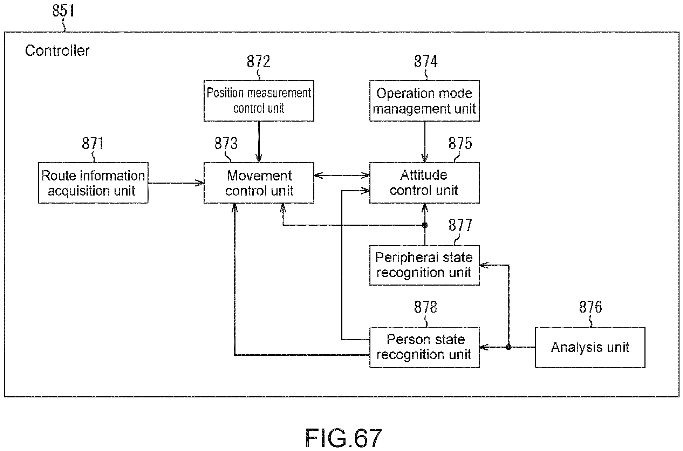

Fig. 67 is a block diagram showing a functional configuration example of the controller 851.

At least some of the functional units shown in Fig. 67 are realized by executing the predetermined program by the CPU constituting the controller 851.

In the controller 851, a route information acquisition unit 871, a position measurement control unit 872, a movement control unit 873, an operation mode management unit 874, an attitude control unit 875, an analysis unit 876, a peripheral state recognition unit 877, and a person state recognition unit 878 are realized.

The route information acquisition unit 871 controls the communication unit 856 to receive information regarding the destination and the movement route which is transmitted from the robotic kitchen 1. The information received by the route information acquisition unit 871 is output to the movement control unit 873.

The position measurement control unit 872 detects the current position of the transportation robot 2. For example, the position measurement control unit 872 generates a map of the space where the robotic kitchen 1 is installed on the basis of a detection result of the distance sensor. The position measurement control unit 872 detects the current position by determining its own position in the generated map. Information about the current position detected by the position measurement control unit 872 is output to the movement control unit 873.

By controlling the tire drive unit 854, the movement control unit 873 controls the movement of the transportation robot 2 on the basis of information supplied from the route information acquisition unit 871 and the current position detected by the position measurement control unit 872.

The operation mode management unit 874 controls the operation mode of the transportation robot 2. The operation mode of the transportation robot 2 includes, for example, a normal mode which is a mode in the normal time and the standby mode described above. The operation mode management unit 874 switches the operation mode of the transportation robot 2 in accordance with the control of the robotic kitchen 1. Information about the operation mode set by the operation mode management unit 874 is output to the attitude control unit 875.

The attitude control unit 875 controls the top plate lift drive unit 852 in accordance with the operation mode set by the operation mode management unit 874 and controls the attitude of the transportation robot 2. Moreover, as the movement control unit 873 controls the transportation robot 2, the attitude control unit 875 controls the attitude of the moving transportation robot 2 to keep the top plate 802 horizontal.

The attitude control unit 875 controls the attitude of the transportation robot 2 in accordance with the peripheral state recognized by the peripheral state recognition unit 877 or in accordance with the state of the person recognized by the person state recognition unit 878.

For example, the attitude control unit 875 controls the attitude of the transportation robot 2 to make the height of the top plate 802 closer to the height of the top plate unit 21 of the robotic kitchen 1 or the top plate of the dining table, which is recognized by the peripheral state recognition unit 877.

Moreover, the attitude control unit 875 adjusts the height of the top plate 802, which is recognized by the person state recognition unit 878, in accordance with the height of the person to whom the dish or the like is to be delivered.

The analysis unit 876 analyzes an image captured by the camera 811 and detected data of the sensor 855. An analysis result of the analysis unit 876 is supplied to the peripheral state recognition unit 877 and the person state recognition unit 878.

The peripheral state recognition unit 877 recognizes a peripheral state such as an obstacle position and a floor state on the basis of the analysis result of the analysis unit 876. Information representing the recognition result of the peripheral state recognition unit 877 is supplied to the movement control unit 873 and the attitude control unit 875.

The person state recognition unit 878 recognizes the state of a surrounding person on the basis of the analysis result of the analysis unit 876. Information representing the recognition result of the person state recognition unit 878 is supplied to the movement control unit 873 and the attitude control unit 875.

### <Operation of Transportation Robot>

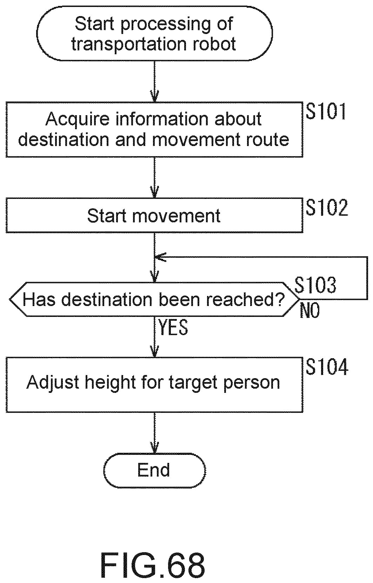

The processing of the transportation robot 2 having the above-mentioned configuration will be described with reference to the flowchart of Fig. 68.

The processing of Fig. 68 is started when, for example, an object to be transported such as a dish is placed on the top plate 802 because the timing of transporting task comes and information regarding the destination and the movement route is transmitted from the robotic kitchen 1.

In Step S101, the route information acquisition unit 871 receives the information regarding the destination and the movement route transmitted from the robotic kitchen 1.

In Step S102, the movement control unit 873 starts to move to the destination on the basis of the information transmitted from the robotic kitchen 1.

In Step S103, the movement control unit 873 determines whether or not it has arrived at the destination and continues moving until it is determined that it has arrived at the destination.

In a case where it is determined in Step S103 that it has arrived at the destination, the attitude control unit 875 adjusts the height of the top plate 802 in accordance with the height of a target person recognized by the person state recognition unit 878 and prompts to receive the dish.

When the dish is received, the processing of the transportation robot 2 ends. The transportation robot 2 returns to the transportation reference position and stands by until the next transportation task.

By performing processing similar to the processing of Fig. 68, delivery of the cutlery such as a spoon and a fork, collection of used tableware, and the like are performed.

Through the processing described above, the user does not need to perform a simple task such as setting the table for the dish by himself or herself and can leave it up to the transportation robot 2.

### <Other Functions of Transportation Robot>

### - Shape of Transportation Robot

Although it is assumed that the state of the transportation robot 2 on the standby mode is a state in which the top plate 802 is superimposed on the base portion 801 as described with reference to Fig. 7 and the like, it may be a state in which the top plate 802 is housed in the base portion 801.

### - Setting of Destination

The robotic kitchen 1 may set the person to whom the dish or the like is to be delivered rather than setting the destination and the movement route. Moving to the position of the person to whom the dish or the like is to be delivered is performed autonomously by the transportation robot 2.

In this case, the robotic kitchen 1 transmits information indicating the person to whom the dish or the like is to be delivered to the transportation robot 2. The person state recognition unit 878 of the transportation robot 2 identifies each of surrounding people and determines the position of a person to whom the dish or the like is to be delivered, who is set by the robotic kitchen 1.

The movement control unit 873 sets a movement route to the position determined by the person state recognition unit 878 and controls the movement. Moreover, the attitude control unit 875 controls the attitude of the transportation robot 2 by adjusting the height of the top plate 802 in accordance with the person identified by the person state recognition unit 878, for example.

Accordingly, the robotic kitchen 1 can leave the transportation of the dish up to the transportation robot 2 only by designating the person to whom the dish or the like is to be delivered.

### - Transportation According to Progress of Meal

The transportation of the next dish may be controlled in accordance with the progress of the meal of the person who eats the dish.

In this case, the person state recognition unit 878 recognizes the progress of the meal of each person eating the dish. For example, the progress of the meal is recognized in accordance with the amount of meal remaining on the plate in front of the person eating the dish.

In a case where the progress of the meal is slow, the movement control unit 873 stands by at a position distant from the person to whom the dish or the like is to be delivered, and moves to the vicinity of the person to whom the dish or the like is to be delivered at a timing at which the meal is ending. When the attitude control unit 875 moves to the vicinity of the person to be provided, the attitude control unit 875 adjusts the height of the top plate 802 in accordance with to whom the dish or the like is to be delivered and prompts the person to receive the dish.

In this manner, the position and attitude of the transportation robot 2 can be controlled in accordance with the progress of the meal of the person to whom the dish is to be delivered.

### <<6. Another Configuration Example of Robotic Kitchen>>

### <Outer Appearance Configuration>

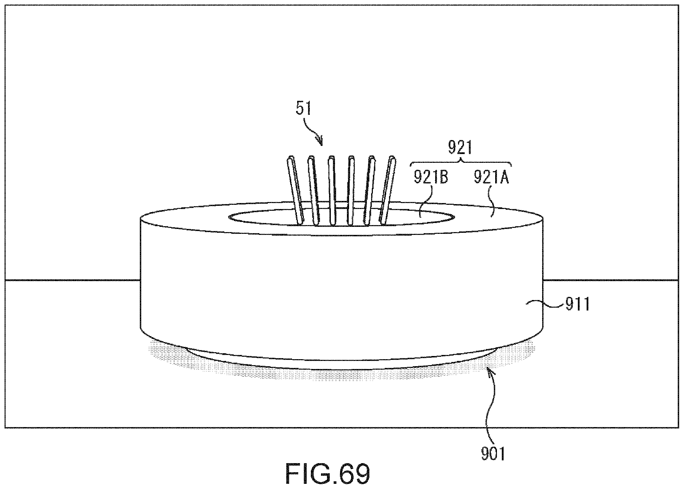

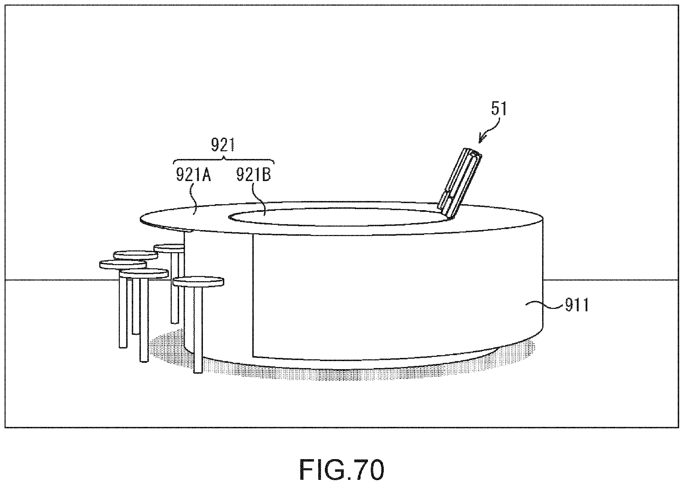

Figs. 69 and 70 are diagrams showing another example of the outer appearance of the robotic kitchen. The same configurations as the configurations of the robotic kitchen 1 described above are denoted by the same reference signs.

A robotic kitchen 901 of Figs. 69 and 70 is provided in a space in which many people are present, for example, an airport lounge, a hotel party room, or the like.

The operation of the robotic kitchen 901 is controlled on the basis of recipe data including only the description of the solo task and not including the description of the collaborative task, for example, as the description related to the task.

That is, the robotic kitchen 901 is used for serving a dish made by itself to a person, rather than making a dish in collaboration with a person. The cooking by the robotic kitchen 901 may be performed in collaboration with the person on the basis of recipe data including the description of the collaborative task.

As shown in Fig. 69, the robotic kitchen 1 has a cylindrical housing 911. The surface shown in Fig. 69 is the front of the housing 911. Various devices such as a computer are provided inside the housing 911.

A top plate unit 921 is provided in the upper surface of the housing 911 in a state in which a part thereof protrudes on the rear side as shown in Fig.70. Chairs are arranged along the circumferential side surface on the side of the rear surface of the housing 911.

The top plate unit 921 includes an annular top plate 921A and a circular top plate 921B. The top plate 921B is provided at a position surrounded by the top plate 921A.

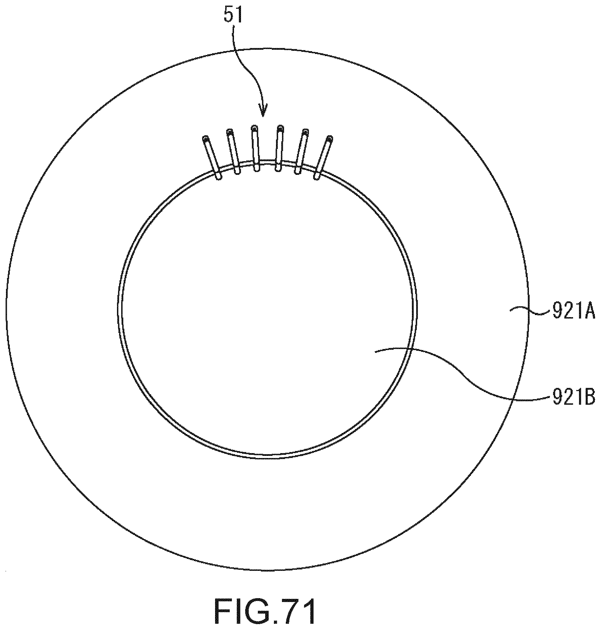

Fig. 71 is a top view of the robotic kitchen 901.

On the sleep mode, the top plate 921A and the top plate 921B constituting the top plate unit 921 are provided at the same height with a slight gap therebetween as shown in Fig. 71. The top plate 921A and the top plate 921B are provided in contact at the same height, and the upper surface of the housing 911 is thus a substantially flat surface.

Cooking arm 51 are provided along a gap between the top plate 921A and the top plate 921B. A rail is provided in the vicinity of an inner edge of the top plate 921A. The cooking arm 51 has a configuration similar to that described above. In this example, six cooking arms 51 are provided.

When the operation mode of the robotic kitchen 901 is switched from the sleep mode to the active mode, a part of the top plate unit 921 moves, such that cooking can be performed. The movement of a part of the top plate unit 921 may be performed in accordance with the cooking process described in the recipe data.

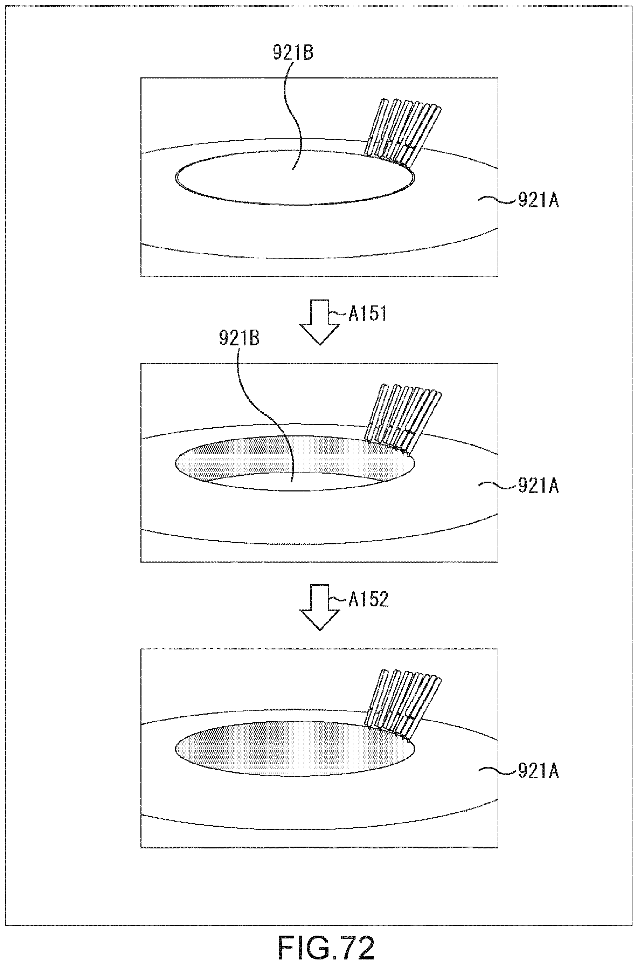

Fig. 72 is a diagram showing an example of the movement of the top plate unit 921 at the time of switching the operation mode.

The state shown in the upper part of Fig. 72 is a state before the movement of the top plate unit 921 is started.

When the operation mode is switched to the active mode, the top plate 921B gradually descends as indicated by the arrows A151 and A152. That is, the movement direction of the part of the top plate unit 921 of the robotic kitchen 901 is a vertically lower direction.

After the top plate 921B completely descends, the cooking arms 51 start their operations. The cooking is performed on the top plate 921B by using various attachments.

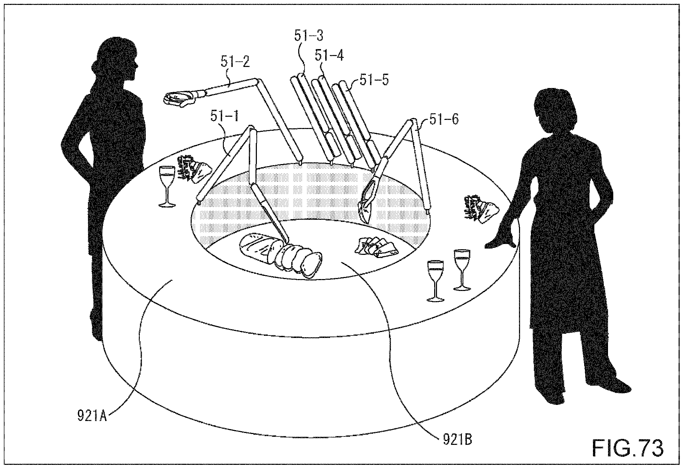

Fig. 73 is a diagram showing a state of the cooking arms 51 during operation.

In the example of Fig. 73, tasks are performed by cooking arms 51-1, 51-2, and 51-6 of cooking arms 51-1 to 51-6.

The cooking arm 51-1 to which the knife attachment is attached slices a baguette, and the cooking arm 51-6 to which the manipulator attachment is attached performs a task of lifting a piece of smoked salmon and moving it toward the baguette. Also in this example, the baguette on which the smoked salmon is put is cooked.

Moreover, the cooking arm 51-2 to which the manipulator attachment is attached presents the baguette on which the smoked salmon is put to a person near the robotic kitchen 901.

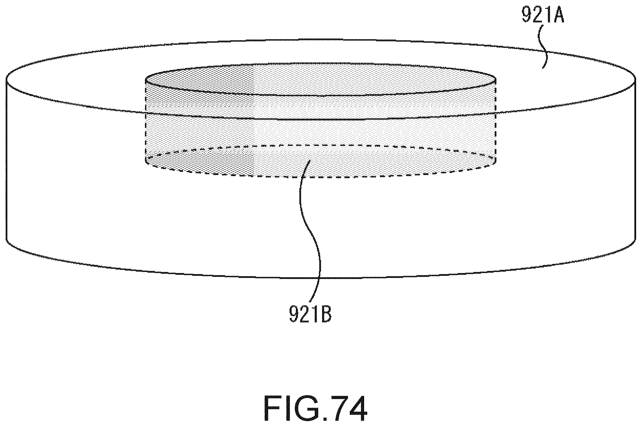

Fig. 74 is a diagram showing the position of the cooking space.

As shown by coloring in Fig. 74, the cylindrical space above the top plate 921B that has descended is a cooking space in which that cooking arms 51 perform cooking. In the robotic kitchen 901, the cooking space is formed by the top plate 921B descending.

It should be noted that in Fig. 73, dishes and glasses prepared in front of two people near the robotic kitchen 901 are prepared by the cooking arms 51.

The dish by the robotic kitchen 901 is served by directly placing the dish on the top plate 921A whose the temperature can be partially adjusted, for example. A heating device using a heating wire and a cooling device of a predetermined type such as an air cooled type and a forced-air-cooled type are provided inside the housing 911.

In this manner, cooking by the robotic kitchen 901 is performed in the cooking space formed in the center of the people surrounding the robotic kitchen 901.

By performing cooking such that a place easy to see by anyone surrounding it is set as a stage, the robotic kitchen 901 can show the state of performing cooking as entertainment and produce the space.

Moreover, a distance from the side surface of the housing 911 to the cooking space can be secured by performing cooking in the space above the top plate 921B that has descended, the robotic kitchen 901. Since the distance from the side surface of the housing 911 to the cooking space is secured, the cooking arms 51 at the time of cooking or the attachments used for cooking can be prevented from hitting the people.

### <Internal Configuration>

Next, an internal configuration of the robotic kitchen 901 will be described.

### - Arrangement Example of Cooking Assistance Units

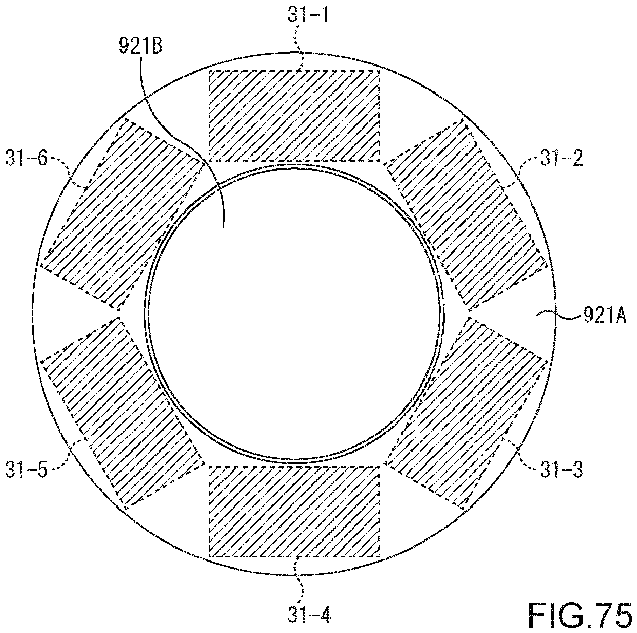

Fig. 75 is a diagram showing an arrangement example of cooking assistance units.

As shown by hatching in Fig. 75, cooking assistance units 31-1 to 31-6 having functions of assisting the cooking of the robotic kitchen 901 are provided inside the housing 911, arranged in an annular form. The cooking assistance units 31-1 to 31-6 are positioned on the side of the bottom surface of the top plate 921A.

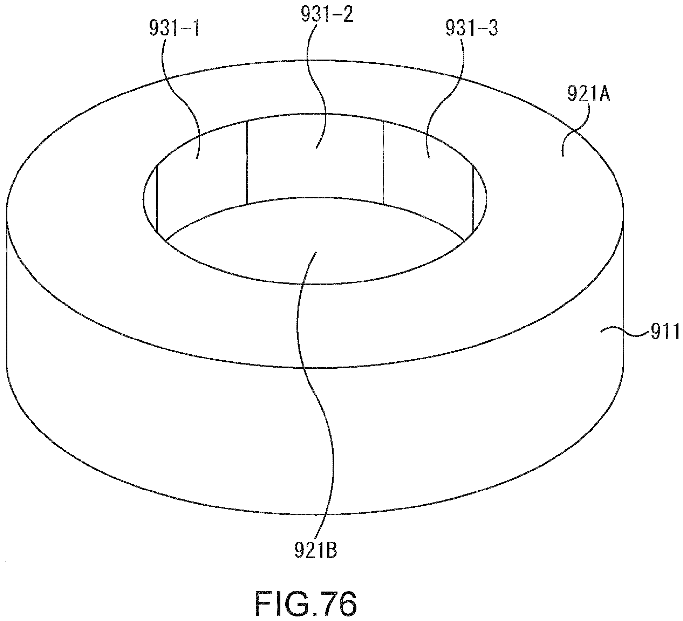

In Fig. 75, the illustrations of the cooking arms 51 are omitted. The same applies to Fig. 76 and the like.

Fig. 76 is a perspective view showing an example of the inner circumferential side surface of the housing 911.

The inner circumferential side surface of the housing 911 that appears when the top plate 921B descends is constituted by members serving as doors slidable in a predetermined direction. In the example of Fig. 76, door portions 931-1 to 931-3 are shown.

For example, when the door portion 931-1 is opened, the cooking assistance unit 31-1 of Fig. 75 appears. Moreover, when the door portion 931-2 is opened, the cooking assistance unit 31-2 appears. When the door portion 931-3 is opened, the cooking assistance unit 31-3 appears. The cooking assistance unit 31-4 to 31-6 also appear when the door portion provided in front of each of them is opened. The cooking assistance units 31-1 to 31-6 are provided with their fronts directed to the center of the housing 911.

As described above, each of the cooking assistance units is provided on the side surface surrounding the cooking space such that the cooking assistance unit is accessible from the cooking space formed when the top plate 921B descends. Each cooking assistance unit appears with the cooking space in accordance with descending of the top plate 921B.

Since the cooking assistance units are provided to surround the cooking space, the robotic kitchen 901 can access a predetermined cooking assistance unit by the cooking arm 51 and perform cooking by using the cooking assistance unit.

### - Arrangement Example of Groove Portion

Also in the robotic kitchen 901, a groove portion having a washing function and a waste treatment function is formed.

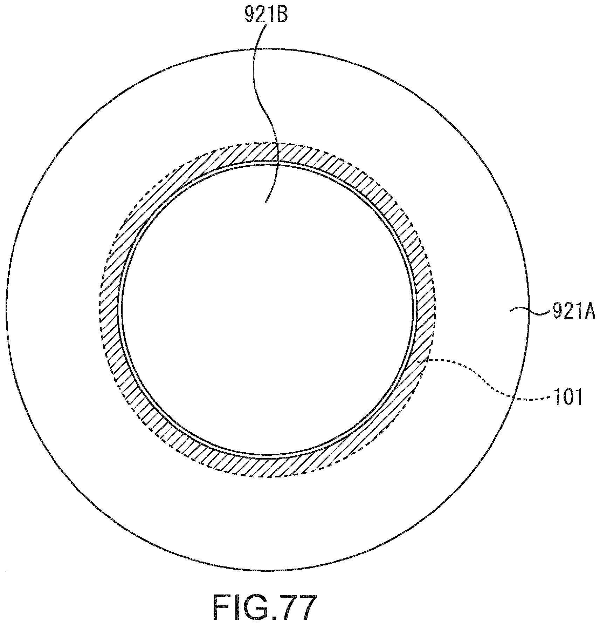

Fig. 77 is a diagram showing an arrangement example of the groove portion.

As shown by hatching in Fig. 77, the position of a groove portion 101 as viewed from above is a lower position in the vicinity of the boundary between the top plate 921A and the top plate 921B. The groove portion 101 is formed to surround the top plate 921B that has descended.

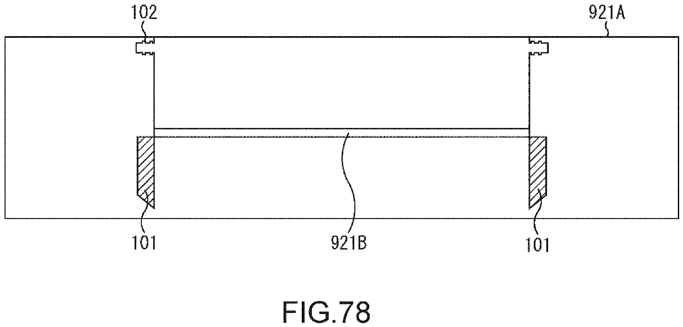

Fig. 78 is a diagram showing a cross-section of the housing 911.

As shown by hatching, the groove portion 101 is formed at a position lower than the top plate 921B around the top plate 921B that has descended. Since the groove portion 101 is provided to surround the top plate 921B that has descended, the cooking arms 51 can wash the attachments and the tableware by using the groove portion 101 or treat the waste from any position on the rail 102. Each configuration described with reference to Figs. 15 and 16 is also provided in the groove portion 101 formed in the housing 911.

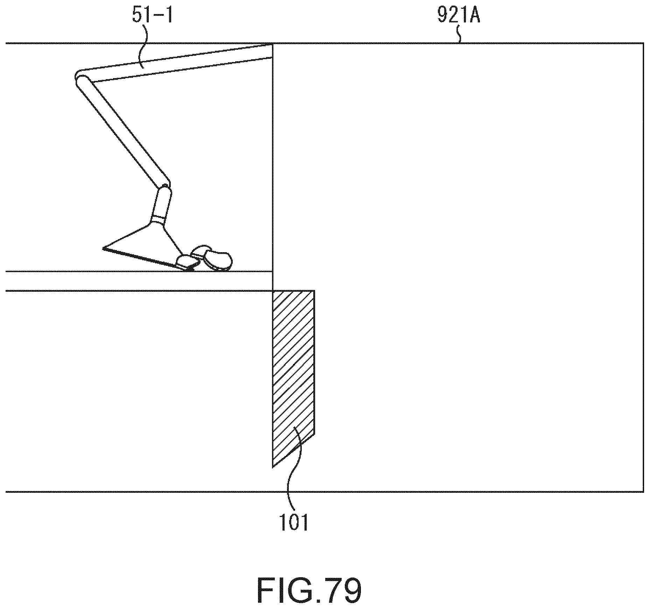

Fig. 79 is a diagram showing a state in which waste is treated.

As shown in Fig. 79, the robotic kitchen 901 may introduce the waste on the top plate 921B into the groove portion 101 by operating the cooking arm 51-1 to sweep the surface of the top plate 921B with the distal end of the cleaner attachment.

The groove portion 101 of the robotic kitchen 901 may have a function of housing the cooking arms 51. The groove portion 101 is used as a housing space for the cooking arms 51. The cooking arms 51 are housed in the groove portion 101 on the sleep mode or in accordance with the cooking process, for example.

As described above, the robotic kitchen 901 basically has a configuration similar to that of the robotic kitchen 1 while the shape of the housing and the arrangement of the respective configurations are different.

In the controller 201 (Fig. 46) of the robotic kitchen 901, the respective functional units described with reference to Fig. 48 are realized by executing a predetermined program and the respective processes described above are performed on the basis of the recipe data.

### <<7. Other Examples>>

### <Example of Movement of Top Plate>

### - First Movement Example

Although it is assumed that the movement direction of the top plate 21B that is a part of the top plate unit 21 of the robotic kitchen 1 is a vertically upper direction in the example described with reference to Figs. 9 and 10, the part of the top plate unit 21 may be moved in another direction. When the part of the top plate unit 21 moves, the space of the cooking assistance system 31 and the groove portion 101 serving as the cooking assistance space that has been hidden so far appears.

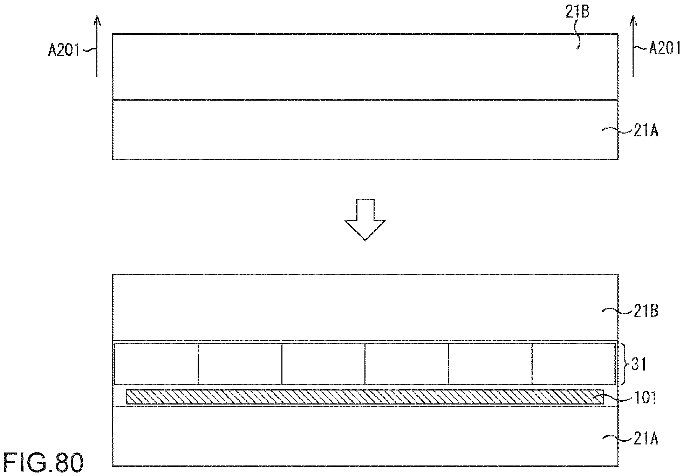

Fig. 80 is a top view showing an example of the movement of the top plate.

When the operation mode is switched to the active mode, the top plate 21B may move horizontally as indicated by the arrows A201. The position of the top plate 21A remains fixed.

When the top plate 21B moves horizontally, the cooking assistance system 31 and the groove portion 101 whose tops have been covered with the top plate 21A appear as shown in the lower part of Fig. 80.

Thus, it is possible to make the cooking assistance space appear by the part of the top plate unit 21 moving horizontally.

### - Second Movement Example

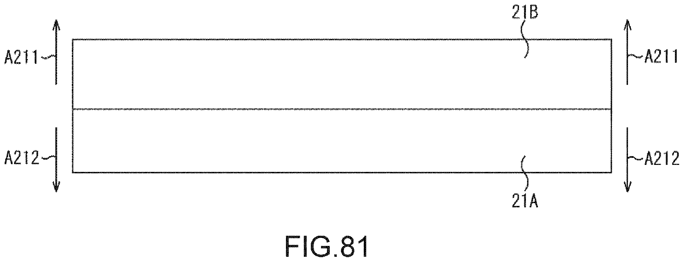

Fig. 81 is a top view showing another example of the movement of the top plate.

As indicated by the arrows A211 and A212 in Fig. 81, the cooking assistance space may appear as not only the top plate 21B but also the top plate 21A move horizontally.

In the example of Fig. 81, the top plate 21A on the front side constituting the top plate unit 21 moves horizontally forward and the top plate 21B of the rear side moves horizontally rearward, such that the cooking assistance space appears.

In a case where the top plate is constituted by two members as described above, the cooking assistance space appears along with movement of at least one of the members.

### - Third Movement Example

Although it is assumed that the movement direction of the top plate 921B, which is the part of the top plate unit 921 of the robotic kitchen 901, is the vertically lower direction in the example described with reference to Fig. 72, the part of the top plate unit 921 may move in another direction. The cooking space and the cooking assistance space are formed by the movement of the part of the top plate unit 921.

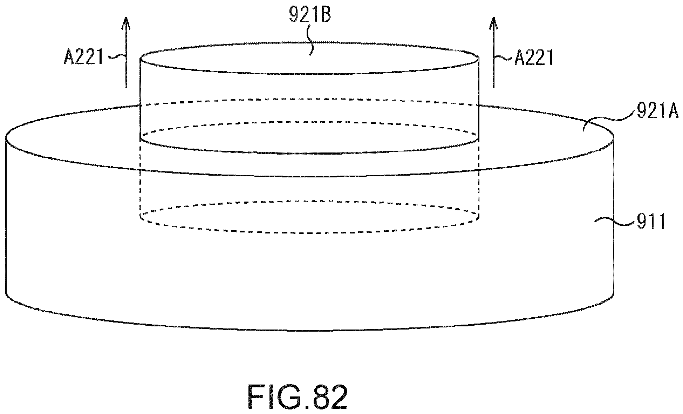

Fig. 82 is a diagram showing an example of the movement direction of the top plate.

When the operation mode is switched to the active mode, the top plate 921B may ascend as indicated by the arrows A221. The position of the top plate 921A remains fixed.

As the top plate 921B moves in the vertically upper direction, the cooking assistance system 31 that has been provided on the side of the bottom surface of the top plate 921B appears.

In this case, a space above the top plate 921A or a space above the top plate 921B serves as the cooking space in which the cooking arms 51 perform cooking.

### <Other Configuration Examples>

### - First Configuration Example

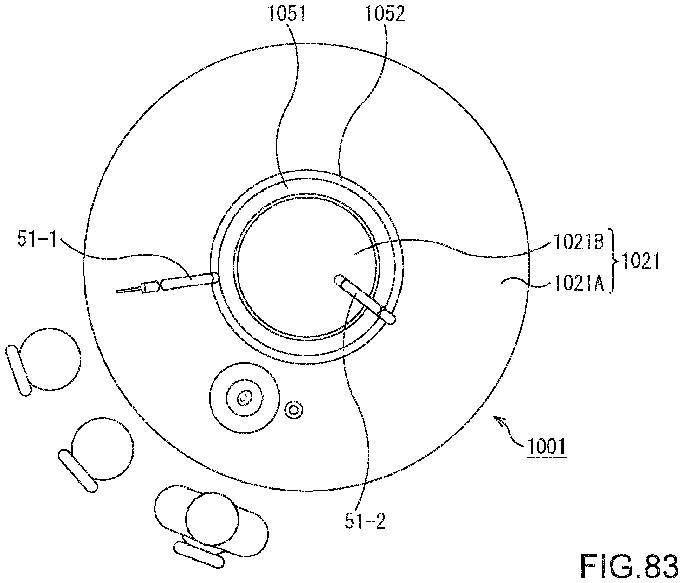

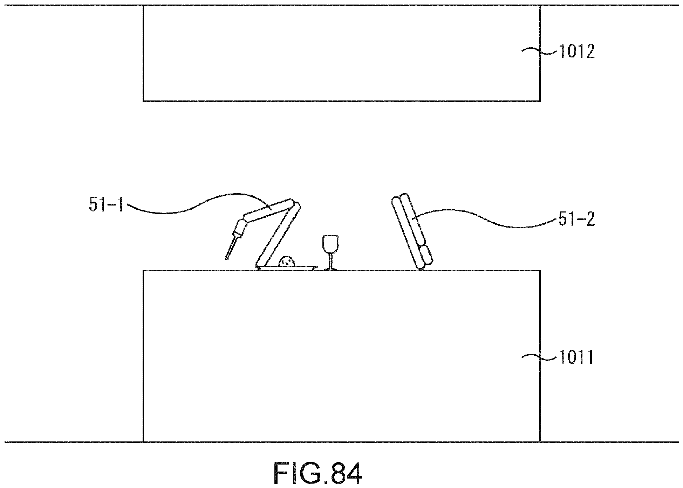

Figs. 83 and 84 are diagrams showing another configuration example of the robotic kitchen.

A robotic kitchen 1001 shown in Figs. 83 and 84 has a cylindrical housing 1011. As shown in Fig. 84, a cover 1012 which is movable vertically is provided above the housing 1011. The cover 1012 is a cylindrical cover whose radial length is substantially the same as the radial length of the housing 1011.

A top plate unit 1021 of the housing 1011 is constituted by an annular top plate 1021A and a circular top plate 1021B. The top plate 1021B is provided at a position surrounded by the top plate 1021A.

As shown in Fig. 83, a groove portion 1051 is provided around the top plate 1021B. Moreover, a rail 1052 is provided around the groove portion 1051. The top plate 1021A and the top plate 1021B are provided with the groove portion 1051 and the rail 1052 interposed therebetween.

In this example, the groove portion is provided in a state in which the groove portion is constantly exposed, which does not appear when a part of the top plate moves.

Cooking arms 51-1 and 51-2 provided in the rail 1052 perform cooking on the top plate 1021B, for example, and place the completed dish on the top plate 1021A.

The movement direction of the top plate 1021B in the case of using the cooking assistance unit is, for example, the vertically upper direction as described with reference to Fig. 82. As the top plate 1021B moves in the vertically upper direction, the cooking assistance unit provided on the side of the bottom surface of the top plate 1021B appears.

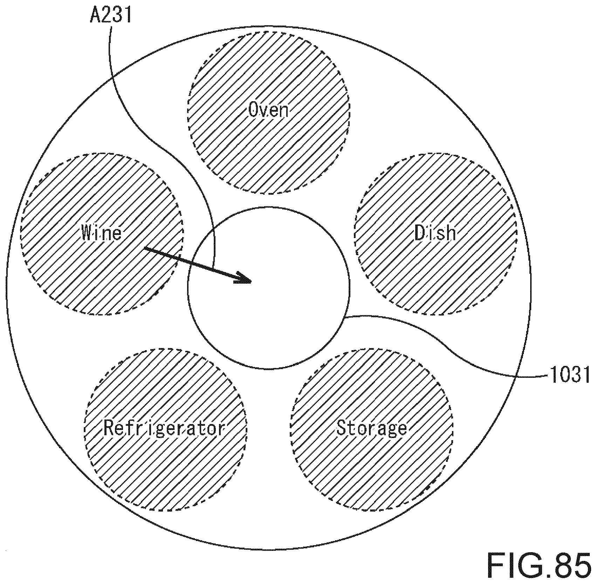

Fig. 85 is a diagram schematically showing an arrangement example of cooking assistance units.

As shown by hatching in Fig. 85, the cooking assistance units having functions for assisting the cooking of the robotic kitchen 1001 are provided inside the housing 1011, arranged in an annular form. The position of the cooking assistance unit is a position on the side of the bottom surface of the top plate 1021A. In Fig. 85, five cooking assistance units are provided.

As shown by the arrow A231, one of the five cooking assistance units are housed in a housing portion 1031 provided on the side of the bottom surface of the top plate 1021B. As the top plate 1021B ascends, the cooking assistance units housed in the housing portion 1031 ascend and appear on the surface of the robotic kitchen 1001.

Switching of the cooking assistance units is achieved by replacing the cooking assistance units to be housed in the housing portion 1031.

A rail and a motor that guide each cooking assistance unit to the housing portion 1031 and retract each cooking assistance unit to a predetermined original position from the housing portion 1031 are provided inside the housing 1011. Moreover, a rail and a motor that move the housing portion 1031 in which the cooking assistance units are housed in upper and lower directions are provided inside the housing 1011.

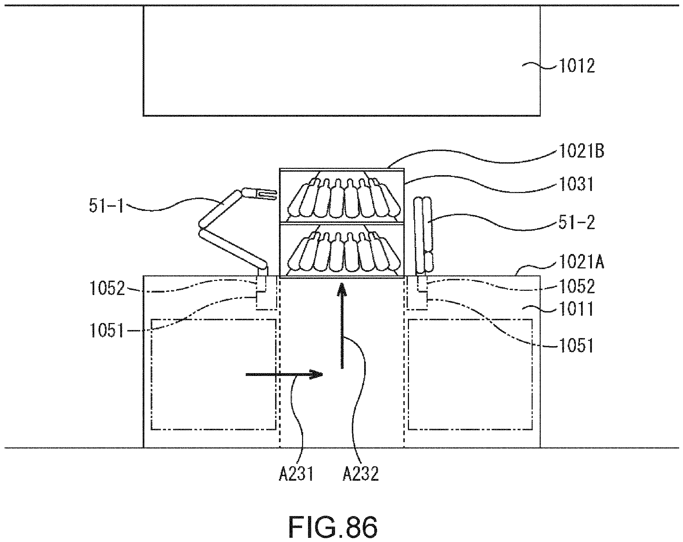

Fig. 86 is a diagram showing an example of the movement of the cooking assistance unit.

As indicated by the arrow A231, the cooking assistance units guided to the housing portion 1031 and housed in the housing portion 1031 ascend together with the top plate 1021B as indicated by the arrow A232 and appear at positions higher than the top plate 1021A.

This enables the cooking arms 51 to perform cooking by using the cooking assistance units.

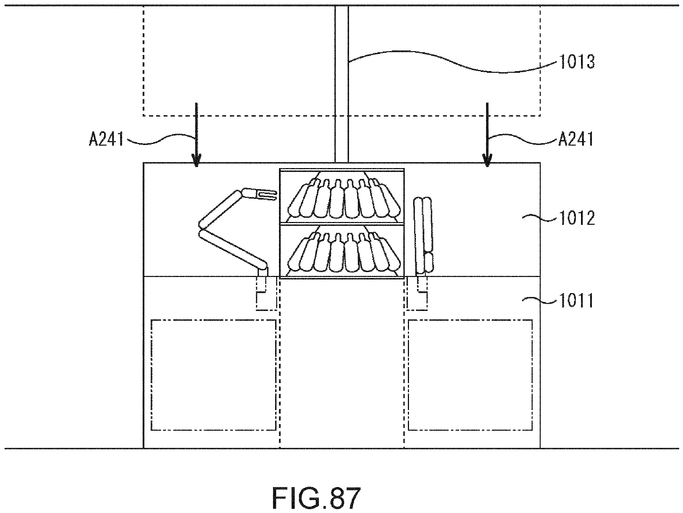

Fig. 87 is a diagram showing a state at the time of washing the robotic kitchen 1001.

At the time of washing the robotic kitchen 1001, the cover 1012 supported by a support 1013 descends as indicated by the arrows A241 and the entire upper surface of the housing 1011 is covered with the cover 1012.

In this state, the surface of the top plate 1021A or the surface of the cooking assistance unit, for example, is washed by the cooking arm 51 using the cleaner attachment or the like. This makes it possible to prevent water and the like to be used for washing from being scattered around.

### - Second Configuration Example

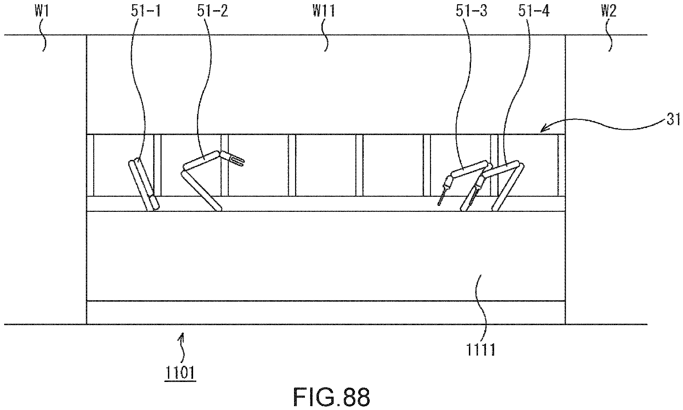

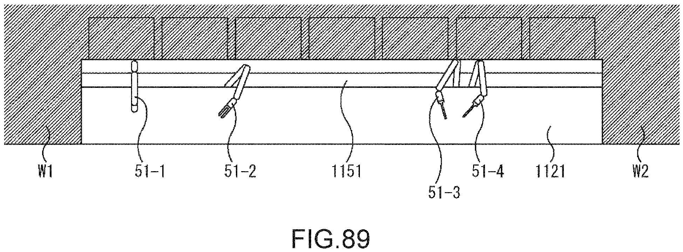

Figs. 88 and 89 are diagrams showing another configuration example of the robotic kitchen.

A robotic kitchen 1101 shown in Figs. 88 and 89 is provided, fitted in a concave portion of a wall. A wall W1 is provided on the left side of the robotic kitchen 1101 and a wall W2 is provided on the right side of the robotic kitchen 1101. A front wall W11 is provided with a cooking assistance system 31 embedded in the wall W11.

The robotic kitchen 1101 includes a housing 1111 in a horizontally long rectangular parallelepiped shape. As shown in Fig. 89, a groove 1151 is provided in the longitudinal direction in a top plate 1121 constituting the upper surface of the housing 1111. A rail is provided along the edge of the groove 1151, such that the cooking arms 51 are movable.

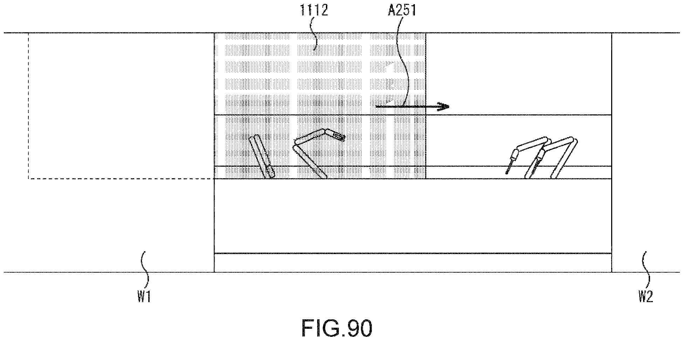

Fig. 90 is a diagram showing a state at the time of washing the robotic kitchen 1101.

At the time of washing the robotic kitchen 1101, a cover 1112 which has been housed in the wall W1 appears sliding as indicated by the arrow A251, and the entire upper surface of the housing 1111 is covered with the cover 1112.

In this state, the surface of the top plate 1121 or the surface of the cooking assistance unit, for example, is washed by the cooking arm 51 using the cleaner attachment or the like. This also makes it possible to prevent water and the like to be used for washing from being scattered around.

### <Control of Server>

Although the operation of the robotic kitchen 1 is controlled by the controller 201 installed in the robotic kitchen 1, the operation may be controlled by an external device.

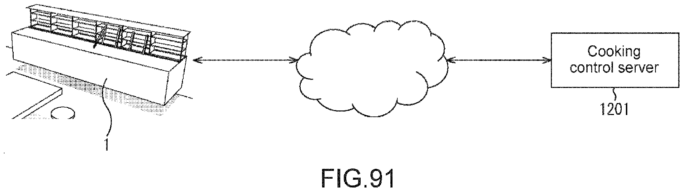

Fig. 91 is a diagram showing a configuration example of a control system.

The control system shown in Fig. 91 is configured by connecting the robotic kitchen 1 and a cooking control server 1201 via a network such as the Internet. The robotic kitchen 1 and the cooking control server 1201 communicate with each other via the network.

In the control system of Fig. 91, the processing of the robotic kitchen 1 as described above is performed by the cooking control server 1201 which is the external device of the robotic kitchen 1. That is, at least some of the functional units of the controller 201 described with reference to Fig. 48 are realized in the cooking control server 1201 by executing a predetermined program.

Information necessary for the operations of the respective units including the cooking arms 51, such as an image taken in the robotic kitchen 1 and detected sensor data, is transmitted to the cooking control server 1201 from the robotic kitchen 1.

The cooking control server 1201 receives the information transmitted from the robotic kitchen 1 and controls the operation of the cooking arm 51 on the basis of the recipe data to thereby perform each task of the cooking in the robotic kitchen 1. The cooking control server 1201 functions as a control device that controls the action of the robotic kitchen 1.

In this manner, the control device that controls the action of the robotic kitchen 1 may be provided outside the robotic kitchen 1. Other devices capable of communicating with the robotic kitchen 1, such as a PC, a smartphone, and a tablet terminal, may be used as the control device.

### <Other Examples of Attachments>

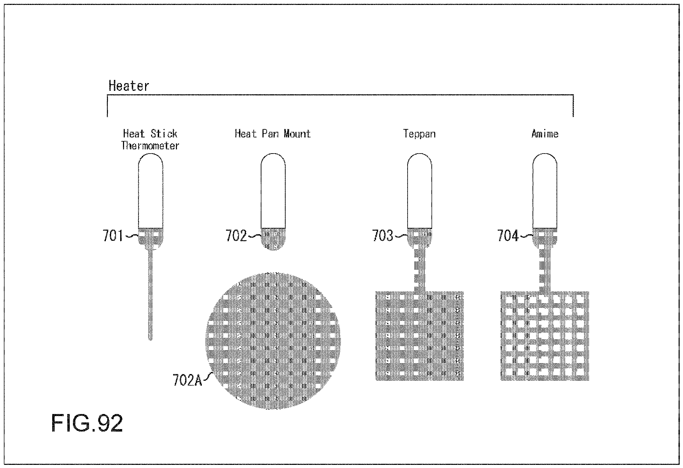

Figs. 92 to 96 are diagrams showing attachments for each function. Some of the attachments described above are also included.

The attachments 701 to 704 shown in Fig. 92 are attachments having a heating function. Each attachment is heated with heat supplied from the cooking arm 51.

The attachment 701 corresponds to the all-purpose pin attachment 654 described above. The attachment 701 has a function of heating a stick-like portion and measuring the temperature.

The attachment 702 is an attachment to be used as a mount of a tool such as a teppan (metal plate) to be heated. The attachment 702 has a function of heating the attached tool. In the example of Fig. 92, a circular teppan 702A is shown as the tool for the attachment 702.

The attachment 703 is an attachment to be used for performing cooking with heat in a teppan portion at the distal end.

The attachment 704 is an attachment to be used for performing cooking with heat in an amime (grid) portion at the distal end.

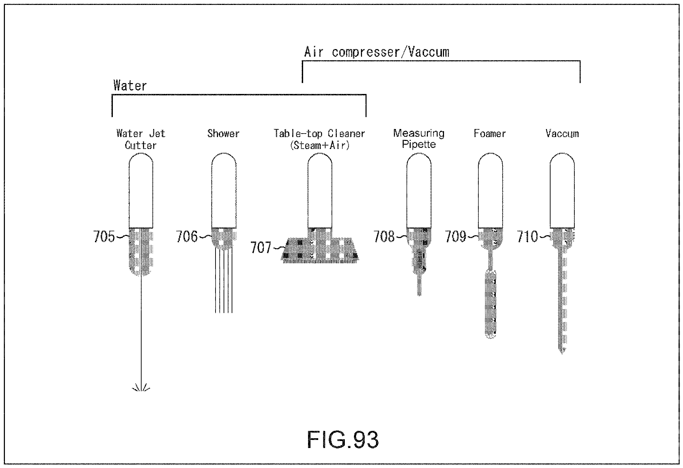

The attachments 705 to 707 shown on the left side of Fig. 93 are attachments having a water jet function. Water supplied from the cooking arm 51 is ejected from each attachment.

Moreover, the attachments 707 to 710 shown on the right side of Fig. 93 are attachments having compression and vacuum functions. The air is ejected by pressure applied from the cooking arm 51. Moreover, the air and water are suctioned by suction force transmitted from the cooking arm 51.

The attachment 705 is an attachment to be used for ejecting compressed water from one ejection port and cutting food ingredients with the water.

The attachment 706 is an attachment to be used for ejecting compressed water from a plurality of ejection ports in a shower shape for washing or the like.

The attachment 707 corresponds to the cleaner attachment 658 described above. The attachment 707 has a function of ejecting and suctioning water.

The attachment 708 is an attachment to be used for suctioning and measuring liquid.

The attachment 709 is an attachment to be used for performing foaming by discharging the air or the like.

The attachment 710 is an attachment to be used for suctioning water and the like.

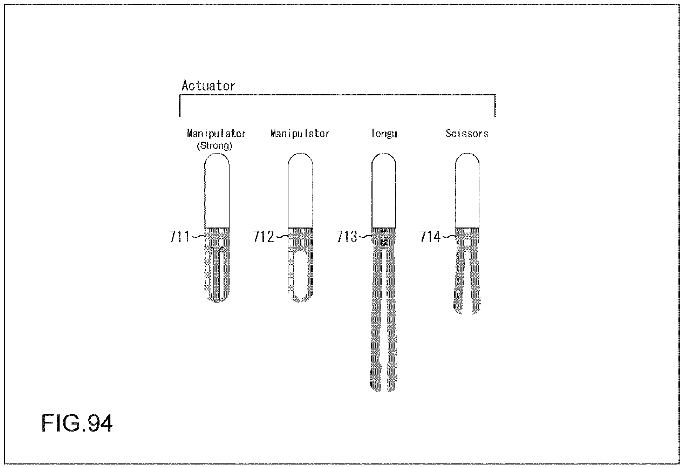

The attachments 711 to 714 shown in Fig. 94 are attachments each having a function of sandwiching an object by driving an actuator (motor). The actuator in each attachment is driven in accordance with a control signal supplied from the cooking arm 51.

The attachment 711 is an attachment to be used for strongly gripping an object. For example, more fingers than those provided in the manipulator attachment 651 are provided in the attachment 711.

The attachment 712 corresponds to the manipulator attachment 651 described above. The attachment 712 has a function of gripping an object.

The attachment 713 is an attachment to be used for gripping an object with the distal ends of two elongated bar-like portions like tongs.

The attachment 714 is an attachment to be used for cutting an object with two blades like scissors.

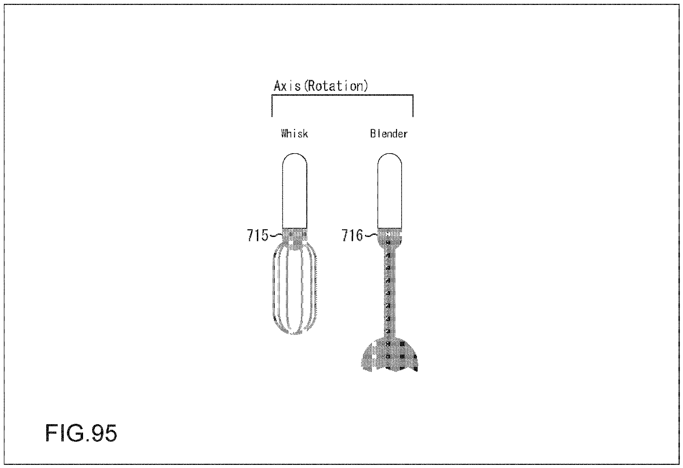

The attachments 715 and 716 shown in Fig. 95 are attachments each having a function of rotating by itself like the spindle attachment 656 described above. In accordance with the control signal supplied from the cooking arm 51, the actuator in each attachment is driven to rotate.

The attachment 715 is an attachment to be used for stirring and whipping food ingredients.

The attachment 716 is an attachment to be used for stirring and mixing food ingredients.

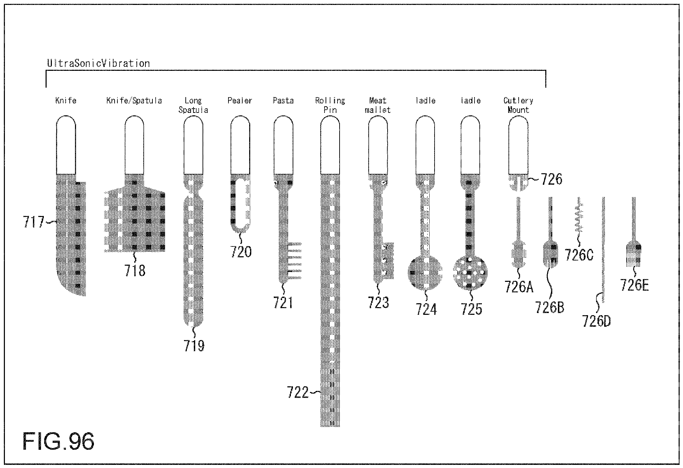

The attachments 717 to 726 shown in Fig. 96 is an attachment having a function of generating ultrasonic vibration. In accordance with the control signal supplied from the cooking arm 51, the motor in each attachment is driven such that vibration is generated.

The attachment 717 is an attachment to be used for cutting food ingredients like the knife attachment 653.

The attachment 718 is an attachment to be used for cutting or inverting food ingredients like a spatula.

The attachment 719 corresponds to the spatula attachment 652 described above.

The attachment 720 corresponds to the peeler attachment 657 described above.

The attachment 721 is an attachment to be used for picking up boiled pasta like a pasta server.

The attachment 722 is an attachment to be used for stirring soup or the like in a pan by vibration.

The attachment 723 is an attachment to be used for vibrating and tenderizing a mass of meat such as a steak.

The attachments 724 and 725 is an attachment to be used for scooping food ingredients and the like like a ladle.

The attachment 726 is an attachment to be used as a mount for various kitchen tools such as cutlery. In the example of Fig. 96, a spoon 726A, a fork 726B, a wine opener 726C, chopsticks 726D, and a brush 726E are shown as tools for the attachment 726.

Such attachments can be grouped and managed for each by function. For example, the priority is set for each attachment or for each group of attachments in accordance with the frequency of use in cooking performed in accordance with the recipe data.

The user can purchase each attachment or each group of attachments having the same function. The priority settings enable the user to identify and purchase a high priority attachment or a group of high priority attachments.

### <Computer Configuration Example>

It should be noted that the above-mentioned series of processing may be performed by hardware or may be performed by software. In a case where the series of processing is executed by software, a program including the software is installed in a computer incorporated in dedicated hardware, a general-purpose personal computer, or the like from a program recording medium.

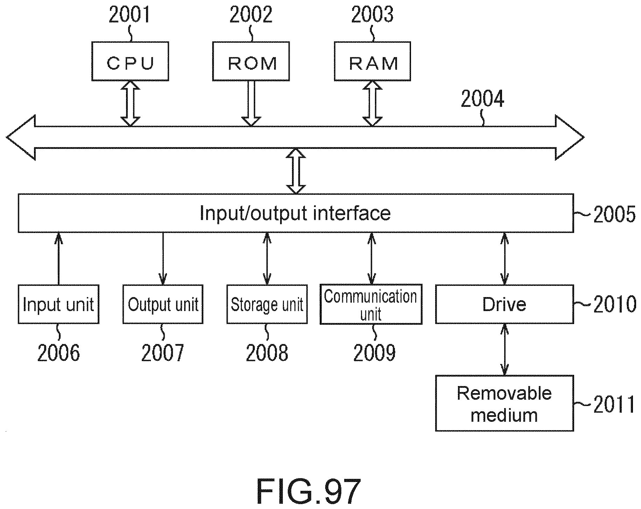

Fig. 97 is a block diagram showing a configuration example of hardware of a computer that executes the above-mentioned series of processing using a program.

A central processing unit (CPU) 2001, a read only memory (ROM) 2002, and a random access memory (RAM) 2003 are interconnected by a bus 2004.

The input/output interface 2005 is further connected to the bus 2004. An input unit 2006 including a keyboard, a mouse, and the like and an output unit 2007 including a display, a speaker, and the like are connected to the input/output interface 2005. Moreover, the input/output interface 2005 is connected to a storage unit 2008 including a hard disk, a nonvolatile memory, and the like, a communication unit 2009 including a network interface and the like, and a drive 2010 that drives a removable medium 2011.

In the computer configured as described above, the CPU 2001 loads the program stored in the storage unit 2008 into the RAM 2003 via the input/output interface 2005 and the bus 2004 and executes the program for executing the above-mentioned series of processing.

The program executed by the CPU 2001 is provided, recorded on the removable medium 2011 or via a wired or wireless transmission medium such as a local area network, the Internet, and digital broadcasting, and is installed in the storage unit 2008.

It should be noted that the program executed by the computer may be a program in which processes are chronologically performed in the order described herein or may be a program in which processes are performed in parallel or each process is performed at a necessary timing such as a timing of calling.

Moreover, the system set forth herein means a set of a plurality of components (such as devices and modules (parts)) and it does not matter whether all of the components are in the same housing. Thus, a plurality of devices housed in separate housings and connected to one another via a network and a single device in which a plurality of modules is housed in a single housing are both systems.

It should be noted that the effects described herein are merely illustrative, not limitative, and other effects may be provided.

Embodiments of the present technology are not limited to the above-mentioned embodiment, and various modifications can be made without departing from the gist of the present technology.

For example, the present technology may take a cloud computing configuration in which a plurality of devices shares a single function and collaboratively processes the single function via a network.

Moreover, the respective steps described above using the flowcharts may be performed by a single device or may be shared and performed by a plurality of devices.

Moreover, in a case where a single step includes a plurality of processes, the plurality of processes included in the single step may be performed by a single device or may be shared and performed by a plurality of devices.

### <Combination Examples of Configurations>

The present technology can also take the following configurations.
(1) A cooking system, including:
   a top plate unit including a first top plate and a second top plate;
   a top plate drive unit that moves at least either top plate of the first top plate and the second top plate;
   a cooking assistance unit provided in a cooking assistance space that appears by movement of the at least either top plate;
   an arm movement unit that moves a cooking arm including an attaching/detaching portion capable of attaching/detaching an attachment having a cooking function along a movement mechanism provided in the cooking assistance space; and
   an arm control unit that controls driving of the cooking arm in accordance with a cooking process.
(2) The cooking system according to (1), in which
   the top plate drive unit raises and lowers the at least either top plate of the first top plate and the second top plate or horizontally moves the at least either top plate of the first top plate and the second top plate.
(3) The cooking system according to (1) or (2), in which
   the cooking assistance unit is provided at a position lower than the at least either top plate.
(4) The cooking system according to (3), in which
   the cooking assistance unit is provided on a side of a bottom surface of the first top plate in a state being housed in a housing and appears as the first top plate ascends.
(5) The cooking system according to any of (1) to (4), further including
   a washing unit that is provided in the cooking assistance space and performs washing in accordance with a movement of a person or a movement of the cooking arm.
(6) The cooking system according to (5), in which
   a washing function of the washing unit includes at least one of a function of washing hands of the person, a function of drying the hands of the person, or a function of disinfecting the hands of the person.
(7) The cooking system according to (5), in which
   a washing function of the washing unit includes at least one of a function of washing the attachment, a function of drying the attachment, or a function of disinfecting the attachment.
(8) The cooking system according to (5), in which
   a washing function of the washing unit includes at least one of a function of washing tableware or a function of drying the tableware.
(9) The cooking system according to any of (1) to (8), in which
   a groove portion is formed along the movement mechanism in the cooking assistance space.
(10) The cooking system according to (9), further including
   a waste treatment unit that treats waste introduced into the groove portion.
(11) The cooking system according to (9) or (10), in which
   the arm control unit causes the cooking arm to be housed in the groove portion in accordance with an opening/closing operation of the top plate unit or in accordance with the cooking process.
(12) The cooking system according to any of (1) to (11), in which
   the cooking arm includes a plurality of arm members and a hinge portion that connects the plurality of arm members, and
   the arm control unit rotationally drives the arm members and the hinge portion.
(13) The cooking system according to any of (1) to (12), further including
   a state recognition unit that recognizes a state of a person, in which
   the arm control unit drives the cooking arm in accordance with the state of the person recognized by the state recognition unit.
(14) The cooking system according to (13), in which
   the arm control unit drives the cooking arm in accordance with information regarding a preference of the person, the preference being recognized by the state recognition unit.
(15) The cooking system according to any of (1) to (14), in which
   the arm control unit drives the cooking arm in accordance with a position of a movable object that transports an object to be transported including a dish completed by a task of the cooking arm.
(16) The cooking system according to any of (1) to (15), in which
   the arm movement unit is provided at a position lower than the top plate unit.
(17) The cooking system according to any of (1) to (16), in which
   the arm movement unit includes an arm attaching/detaching portion that makes the cooking arm attachable/detachable.
(18) The cooking system according to any of (1) to (17), in which
   the arm control unit drives the cooking arm to perform cooking by using the cooking assistance unit.
(19) The cooking system according to any of (1) to (18), further including
   a temperature adjustment unit that adjusts a temperature of a surface of the top plate unit in accordance with the cooking process.
(20) The cooking system according to any of (1) to (19), in which
   the number of cooking arms is plural.
(21) The cooking system according to any of (1) to (20), further including
   the cooking arm.

### <<8. Conclusion>>

Conventionally, there exists an automatic cooking robot with a manipulator. Patent Literature 1 describes an automatic cooking robot that reproduces a dish by monitoring a cooking process of a human chef and imitating the movements and cooking process of the chef by using two articulated robot hands imitating the human hands (palms).

However, the technology described in Patent Literature 1 aims at completely omitting cooking performed by the human by using cooking tools used by the human.

A robotic kitchen according to a first aspect of the present technology focuses on enabling the human to enjoy cooking in addition to improving the efficiency of cooking by sharing some parts or all parts of the cooking process with the robot while receiving interactive support of the robot.

It should be noted that although the robotic kitchen is an apparatus that autonomously performs various types of processing, the robotic kitchen is also capable of performing processing in accordance with external instructions as a matter of course. Here, the autonomous processing refers to processing performed in accordance with sensing data and the like regardless of the user's instruction. The robotic kitchen is also capable of performing processing in accordance with the user's instruction.

Moreover, the robotic kitchen according to the first aspect of the present technology is capable of blending in the surrounding environment by being integrated in a state in which the cooking-related objects such as the cooking arms, the attachments, and the transportation robots are housed when the robotic kitchen does not perform cooking.

Moreover, the robotic kitchen according to the first aspect of the present technology makes it possible to provide novel user experiences by recognizing the cooking environment and the user's characteristics and supporting the human at a necessary timing.

The novel user experiences include a novel cooking experience of performing cooking in collaboration of the human and the robotic kitchen and a novel eating experience of eating the thus made dish.

The cooking environment includes the number of people who cook, the people who eat the dish, the number of people who eat the dish, the contents of the dish (recipe), the states of the food ingredients, and the like. Moreover, the user's characteristics include the user's lifestyle, preference, and the like.

A cooking system according to a second aspect of the present technology focuses on making it possible to switch between the state in which the cooking arms can perform cooking and the state in which the cooking arms are housed in accordance with the movement of the top plate by providing the plurality of cooking arms that perform cooking by using the attachment that can be replaced in accordance with the cooking function and integrating the movement mechanism of the cooking arms with the groove mechanism capable of housing the cooking arms.

Moreover, the cooking system according to the second aspect of the present technology can improve the outer appearance when it is housed by causing the cooking arms and the cooking assistance units to be hidden when the top plate is closed.

Moreover, the cooking system according to the second aspect of the present technology has a functions of assisting the cooking, such as a temperature adjustment function, in the top plate itself and enables cooking to be efficiently performed with the quality desired by the user.

The cooking system according to the second aspect of the present technology is one in which a cooking space is formed at a position considered safe for the user even in a case where the plurality of cooking arms perform cooking and the cooking assistance units are arranged to be adjacent to the cooking space.

Cooking arms and attachments according to a third aspect of the present technology focus on providing the replaceable attachments with the cooking functions (including the washing function and the cleaning function) and performing cooking by the plurality cooking arms using those attachments, not performing cooking by the robot arms imitating the human hands with the cooking tools used by the human.

The cooking arms and the attachments according to the third aspect of the present technology enable multi-functionalization in the cooking process to be flexibly achieved by switching the attachments in accordance with the dish and the cooking process.

A transportation robot according to a fourth aspect of the present technology focuses on changing the form into a state that it can be housed inside the cooking system by adjusting the angle and length of the support arm, and adaptively controlling the top plate on which the object to be transported is placed to be kept horizontal when performing transportation in accordance with the cooking process.

The transportation robot according to the fourth aspect of the present technology has a function of assisting the cooking, such as a temperature adjustment function, in the top plate itself and enables transportation to be efficiently performed with the quality desired by the user.

The transportation robot according to the fourth aspect of the present technology makes it possible to provide a novel user experience by recognizing the progress of the cooking process and the meal, the cooking environment, and the user's characteristics, and supporting the human at a necessary timing.

### Reference Signs List

- 1: robotic kitchen
- 2: transportation robot
- 21A, 21B: top plate
- 31: cooking assistance system
- 51-1 to 51-4: cooking arm
- 101: groove portion
- 102: rail
- 122: waste treatment device
- 131: arm movement unit
- 132-1 to 132-4: pipe
- 133: arm function control device
- 201: controller
- 202: arm movement control unit
- 203: washing unit
- 204: top plate drive unit
- 205: top plate temperature adjustment unit
- 206: camera
- 207: microphone
- 208: projector
- 209: speaker
- 210: sensor
- 211: communication unit
- 212: drive unit
- 241: cooking process management unit
- 242: operation mode management unit
- 243: arm control unit
- 244: unit control unit
- 245: recipe data storage unit
- 246: recipe data acquisition unit
- 247: recipe data processing unit
- 248: cooking log management unit
- 249: analysis unit
- 250: peripheral state recognition unit
- 251: person state recognition unit
- 252: voice analysis unit
- 253: voice recognition unit
- 254: voice UI control unit
- 255: projection control unit
- 256: transportation robot control unit
- 501: attaching/detaching member
- 503: relay member
- 505: base member
- 651: manipulator attachment
- 652: spatula attachment
- 653: knife attachment
- 654: all-purpose pin attachment
- 655: shaker attachment
- 656: spindle attachment
- 657: peeler attachment
- 658: cleaner attachment
- 659,: 660 cover attachment
- 801: base
- 802: top plate
- 803: support arm
- 851: controller
- 852: top plate lift drive unit
- 853: heating/cooling unit
- 854: tire drive unit
- 855: sensor
- 856: communication unit
- 871: route information acquisition unit
- 872: position measurement control unit
- 873: movement control unit
- 874: operation mode management unit
- 875: attitude control unit
- 876: analysis unit
- 877: peripheral state recognition unit
- 878: person state recognition unit
- 901, 1001: robotic kitchen
- 1201: cooking control server

## Claims

1. A cooking system, comprising:
a top plate unit including a first top plate and a second top plate;
a top plate drive unit that moves at least either top plate of the first top plate and the second top plate;
a cooking assistance unit provided in a cooking assistance space that appears by movement of the at least either top plate;
an arm movement unit that moves a cooking arm including an attaching/detaching portion capable of attaching/detaching an attachment having a cooking function along a movement mechanism provided in the cooking assistance space; and
an arm control unit that controls driving of the cooking arm in accordance with a cooking process.

2. The cooking system according to claim 1, wherein
the top plate drive unit raises and lowers the at least either top plate of the first top plate and the second top plate or horizontally moves the at least either top plate of the first top plate and the second top plate.

3. The cooking system according to claim 1, wherein
the cooking assistance unit is provided at a position lower than the at least either top plate.

4. The cooking system according to claim 3, wherein
the cooking assistance unit is provided on a side of a bottom surface of the first top plate in a state being housed in a housing and appears as the first top plate ascends.

5. The cooking system according to claim 1, further comprising
a washing unit that is provided in the cooking assistance space and performs washing in accordance with a movement of a person or a movement of the cooking arm.

6. The cooking system according to claim 5, wherein
a washing function of the washing unit includes at least one of a function of washing hands of the person, a function of drying the hands of the person, or a function of disinfecting the hands of the person.

7. The cooking system according to claim 5, wherein
a washing function of the washing unit includes at least one of a function of washing the attachment, a function of drying the attachment, or a function of disinfecting the attachment.

8. The cooking system according to claim 5, wherein
a washing function of the washing unit includes at least one of a function of washing tableware or a function of drying the tableware.

9. The cooking system according to claim 1, wherein
a groove portion is formed along the movement mechanism in the cooking assistance space.

10. The cooking system according to claim 9, further comprising
a waste treatment unit that treats waste introduced into the groove portion.

11. The cooking system according to claim 9, wherein
the arm control unit causes the cooking arm to be housed in the groove portion in accordance with an opening/closing operation of the top plate unit or in accordance with the cooking process.

12. The cooking system according to claim 1, wherein
the cooking arm includes a plurality of arm members and a hinge portion that connects the plurality of arm members, and
the arm control unit rotationally drives the arm members and the hinge portion.

13. The cooking system according to claim 1, further comprising
a state recognition unit that recognizes a state of a person, wherein
the arm control unit drives the cooking arm in accordance with the state of the person recognized by the state recognition unit.

14. The cooking system according to claim 13, wherein
the arm control unit drives the cooking arm in accordance with information regarding a preference of the person, the preference being recognized by the state recognition unit.

15. The cooking system according to claim 1, wherein
the arm control unit drives the cooking arm in accordance with a position of a movable object that transports an object to be transported including a dish completed by a task of the cooking arm.

16. The cooking system according to claim 1, wherein
the arm movement unit is provided at a position lower than the top plate unit.

17. The cooking system according to claim 1, wherein
the arm movement unit includes an arm attaching/detaching portion that makes the cooking arm attachable/detachable.

18. The cooking system according to claim 1, wherein
the arm control unit drives the cooking arm to perform cooking by using the cooking assistance unit.

19. The cooking system according to claim 1, further comprising
a temperature adjustment unit that adjusts a temperature of a surface of the top plate unit in accordance with the cooking process.

20. The cooking system according to claim 1, wherein the number of cooking arms is plural.

21. The cooking system according to claim 1, further comprising
the cooking arm.
